# EUROPEAN PATENT APPLICATION

(11) **EP 4 652 911 A1**
(43) Date of publication of application: **26.11.2025**
(21) Application number: 25175868.6
(22) Date of filing: 12.05.2025
(51) Int. Cl.: A47L 11/03, A47L 11/20, A47L 11/40, A47L 11/29

(54) **CLEANING APPARATUS WITH AUTOMATED DOSING SUPPLY TANK**

(30) Priority: 13.05.2024 US 202463646010 P; 07.01.2025 US 202563742650 P
(71) Applicant: Bissell Inc., Grand Rapids, MI 49544 (US)
(72) Inventor: Li, Min, Grand Rapids, 49544 (US); Wong, Ying Chun, Grand Rapids, 49544 (US); Chen, Wei Dong, Grand Rapids, 49544 (US); Liu, Yong Gan, Grand Rapids, 49544 (US); Ku, Nim Chung, Grand Rapids, 49544 (US); Li, Feng Chun, Grand Rapids, 49544 (US); Fordahl, Joseph, Grand Rapids, 49544 (US); Tao, Bing, Grand Rapids, 49544 (US)
(74) Representative: Sandersons

(57) **Abstract**

A supply tank assembly (18, 518, 818, 1118, 1618) for a cleaning apparatus (10, 10A, 10B) includes first and second reservoirs (22, 24, 522, 524, 822, 824, 1122, 1124, 1622, 1624) for housing first and second liquids, respectively, and a cap assembly (170, 570, 870, 1270, 1670) with a plunger (34, 334, 534, 834, 1134, 1634, 1834). A first flow path (30, 530, 830, 1130, 1630) for the first liquid is defined from the first reservoir (22, 522, 822, 1122, 1622) to the dispensing outlet (28, 1128, 1628). A second flow path (32, 532, 832, 1132A, 1632A) for the second liquid is defined from the second reservoir (24, 524, 824, 1124, 1624) to the dispensing outlet (28, 528, 828, 1128, 1628). A switch assembly (320, 720, 1020, 1350, 1730) is operable between different positions to control dispensing of the second liquid. The plunger (34, 334, 534, 834, 1134, 1634, 1834) is biased toward a sealed position to seal the first and second flow paths (30, 32, 530, 532, 830, 832, 1130, 1132A, 1630, 1632A) and is configured to move to an opened position to open the first and second flow paths (30, 32, 530, 532, 830, 832, 1130, 1132A, 1630, 1632A) to concurrently dispense the first and second liquids to be mixed outside of the supply tank assembly (18, 518, 1118, 1618) based on a position of the switch assembly (320, 720, 1020, 1350, 1730).

## Description

The present disclosure generally relates to an automated dosing tank, and, more specifically, a cleaning apparatus with an automated dosing tank that can be used in different modes to dispense a single liquid, two liquids, and/or different ratios of liquids.

### BACKGROUND OF THE DISCLOSURE

Extraction cleaners can extract dirt from a surface using a vacuum system to suction debris and/or fluid from the surface. Extraction cleaners often include delivery systems for supplying cleaning liquids, such as water, cleaning solutions, or both, to the surface to be cleaned from a supply tank. The recovery system utilizes suction to recover fluid applied by the fluid delivery system along with dirt and debris into a recovery storage tank.

### BRIEF SUMMARY

According to one aspect of the present disclosure, a cleaning apparatus includes a housing having a receiver, a suction source, a recovery tank assembly in fluid communication with the suction source, a supply tank assembly, and a pump operably coupled with the supply tank assembly. The supply tank assembly includes first and second reservoirs for housing the first and second liquids and a dispensing outlet. A first flow path for the first liquid is defined from the first reservoir to the dispensing outlet. A second flow path for the second liquid is defined from the second reservoir to the dispensing outlet. A plunger is disposed proximate to the dispensing outlet. A plug is disposed in the second flow path upstream of the plunger. The plunger is biased toward a sealed position to seal the first flow path, and the plug is biased toward a closed position to seal the second flow path. The supply tank assembly is configured to engage the receiver which, consequently, moves the plunger to an opened position to open the first flow path for the first liquid to flow around the plunger and through the dispensing outlet. Movement of the plunger to the opened position opens the second flow path for the second liquid to flow through an interior channel of the plunger and through the dispensing outlet. The supply tank assembly is configured to concurrently dispense the first liquid and the second liquid to be mixed outside of the supply tank assembly when the plunger and the plug are in the opened positions.

According to yet another aspect of the present disclosure, a cleaning apparatus includes a housing having a receiver and a supply tank including a first reservoir for housing a first liquid and a second reservoir for housing a second liquid. A cap assembly is operably coupled to the supply tank. The cap assembly includes an engagement feature for engaging the receiver. A plunger extends at least partially into a dispensing channel defined by the engagement feature. A first flow path for the first liquid is defined from the first reservoir, around the plunger, and through at least one fluid outlet at least partially defined by the plunger. The second flow path for the second liquid is defined from the second reservoir, through an interior channel of the plunger, and through an outlet opening defined at least partially by a distal end of the plunger. A plug is disposed in the second flow path upstream of the plunger. The plunger is biased toward a sealed position and the plug is biased toward a closed position to seal the first and second flow paths. The plunger is configured to move to an opened position to provide fluid communication between the first reservoir and the at least one fluid outlet for the first liquid which, consequently, moves the plug to an opened position to provide fluid communication between the second reservoir and the outlet opening for the second liquid to concurrently dispensing the first and second liquids from the supply tank to be mixed outside of the supply tank and the cap assembly.

According to another aspect of the present disclosure, a cleaning apparatus includes a housing having a receiver, a suction source, and a recovery tank assembly in fluid communication with the suction source. A supply tank includes a first reservoir for housing a first liquid and a second reservoir for housing a second liquid. A pump is operably coupled with the supply tank. A valve assembly is operably coupled with the supply tank. The valve assembly includes a plunger defining an interior channel. A first flow path for the first liquid is defined from the first reservoir, around the plunger, and to a dispensing outlet. The valve assembly also includes a plug operably coupled with the plunger. Second and third flow paths for the second liquid are defined from the second reservoir, around the plug, through the interior channel, and to the dispensing outlet. The supply tank assembly also includes a ratio adjustment lever operable between a first position closing the third flow path upstream of the plug and a second position opening the third flow path upstream of the plug. A plunger is configured to move to an opened position, which, consequently, adjusts the plug to an opened position to concurrently dispense the first and second liquids to be mixed outside of said supply tank assembly and form a combined solution of the first and second liquids. The combined solution has a first ratio of the first and second liquids in response to the ratio adjustment lever being in the first position and a second ratio in response to the ratio adjustment lever being in the second position.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a schematic diagram of a cleaning apparatus with an automated dosing supply tank, according to an aspect of the present disclosure;
FIG. 2 is a side perspective view of a cleaning apparatus with a recovery tank assembly and a supply tank assembly, according to an aspect of the present disclosure;
FIG. 3 is a side perspective view of a cleaning apparatus with a recovery tank seat and a supply tank seat, with a recovery tank assembly and a supply tank assembly removed from a housing, according to an aspect of the present disclosure;
FIG. 4 is a cross-sectional view of the cleaning apparatus of FIG. 2, taken along lines IV-IV, according to an aspect of the present disclosure;
FIG. 5 is a side perspective view of an automated dosing supply tank assembly, according to an aspect of the present disclosure;
FIG. 6 is a cross-sectional view of the automated dosing supply tank assembly of FIG. 5, taken along lines IV-IV, according to an aspect of the present disclosure;
FIG. 7 is an enlarged, partial, cross-sectional view of a cap assembly engaging a supply tank, according to an aspect of the present disclosure;
FIG. 8 is an enlarged, partial, cross-sectional view of a neck of a supply tank assembly, according to the present disclosure;
FIG. 9A is a first cross-sectional view of a cap assembly for a supply tank assembly, according to an aspect of the present disclosure;
FIG. 9B is a second cross-sectional view of the cap assembly of FIG. 9A, according to an aspect of the present disclosure;
FIG. 10A is a cross-sectional view of a cap assembly from the supply tank assembly of FIG. 5, taken along lines XA-XA, according to an aspect of the present disclosure;
FIG. 10B is a cross-sectional view of a cap assembly from the supply tank assembly of FIG. 5, taken along lines XB-XB, according to an aspect of the present disclosure;
FIG. 11A is a cross-sectional view of the cap assembly of FIG. 10A in an opened state and illustrating a first flow path, according to an aspect of the present disclosure;
FIG. 11B is a cross-sectional view of the cap assembly of FIG. 10B in an opened state and illustrating a second flow path, according to an aspect of the present disclosure;
FIG. 12 is a partial bottom plan view of a supply tank assembly including a cap assembly, according to an aspect of the present disclosure;
FIG. 13A is a cross-sectional view of a cap assembly in a closed state and illustrating a first flow path blocked by dispensing components, according to an aspect of the present disclosure;
FIG. 13B is a cross-sectional view of a cap assembly in a closed state and illustrating a second flow path blocked by dispensing components, according to an aspect of the present disclosure;
FIG. 14A is a cross-sectional view of a cap assembly in an opened state and illustrating a first flow path through a dispensing outlet, according to an aspect of the present disclosure;
FIG. 14B is a cross-sectional view of a cap assembly in an opened state and illustrating a second flow path through a dispensing outlet, according to an aspect of the present disclosure;
FIG. 15 is a partial bottom perspective view of a supply tank assembly including a cap assembly, according to an aspect of the present disclosure;
FIG. 16 is a cross-sectional top perspective view of the supply tank assembly of FIG. 5, taken along lines XVI-XVI, illustrating pressure balancing valves, according to an aspect of the present disclosure;
FIG. 17 is a cross-sectional view of the supply tank assembly of FIG. 16, taken along lines XVII-XVII, according to an aspect of the present disclosure;
FIG. 18 is a side elevational view of a supply tank assembly having pressure balancing air tubes, according to an aspect of the present disclosure;
FIG. 19 is a cross-sectional side perspective view of the supply tank assembly of FIG. 18, taken along lines XIX-XIX, according to an aspect of the present disclosure;
FIG. 20 is a side perspective view of a supply tank assembly with a switch assembly, according to an aspect of the present disclosure;
FIG. 21A is a cross-sectional view of the supply tank assembly of FIG. 20, taken along lines XXIA-XXIA, illustrating the switch assembly, according to an aspect of the present disclosure;
FIG. 21B is a cross-sectional view of the supply tank assembly of FIG. 20, taken along lines XXIB-XXIB, illustrating the switch assembly, according to an aspect of the present disclosure;
FIG. 22 is a cross-sectional view of a supply tank assembly having a cap assembly with dispensing components, according to an aspect of the present disclosure;
FIG. 23A is a cross-sectional side perspective view of a cap assembly with a plunger, according to an aspect of the present disclosure;
FIG. 23B is a cross-sectional side perspective view of a cap assembly with a plunger, according to an aspect of the present disclosure;
FIG. 24A is a cross-sectional view of a cap assembly with a plunger in a closed state, illustrating flow paths blocked by the plunger, according to an aspect of the present disclosure;
FIG. 24B is a cross-sectional view of a cap assembly with a plunger in an opened state, illustrating flow paths through a dispensing outlet, according to an aspect of the present disclosure;
FIG. 25 is a partial cross-sectional view of a cap assembly engaging a receiver, illustrating liquids dispensed from the cap assembly, according to an aspect of the present disclosure;
FIG. 26 is a partial bottom perspective view of a supply tank assembly including a cap assembly, according to an aspect of the present disclosure;
FIG. 27 is a cross-sectional view of a supply tank assembly with a switch assembly, according to an aspect of the present disclosure;
FIG. 28 is a side perspective view of a supply tank assembly, according to an aspect of the present disclosure;
FIG. 29 is a partial cross-sectional view of the supply tank assembly of FIG. 28, taken along lines XXIX-XXIX, according to an aspect of the present disclosure;
FIG. 30 is a partial cross-sectional view of a neck of a supply tank assembly with a cap assembly removed, according to an aspect of the present disclosure;
FIG. 31 is a cross-sectional side perspective view of a cap assembly for a supply tank assembly, according to an aspect of the present disclosure;
FIG. 32A is a cross-sectional view of a cap assembly with a dosing chamber and a plunger, illustrating flow paths blocked by a plunger, according to an aspect of the present disclosure;
FIG. 32B is a cross-sectional view of a cap assembly with a dosing chamber and a plunger, illustrating flow paths through a dispensing outlet, according to an aspect of the present disclosure;
FIG. 33 is a cross-sectional view of a supply tank assembly with a switch assembly, according to an aspect of the present disclosure;
FIG. 34 is a side perspective view of a cleaning apparatus with a recovery tank assembly and a supply tank assembly, according to an aspect of the present disclosure;
FIG. 35 is a partially exploded side perspective view of a cleaning apparatus with a recovery tank seat and a supply tank seat, with a recovery tank assembly and a supply tank assembly spaced from a housing, according to an aspect of the present disclosure;
FIG. 36 is a cross-sectional view of the cleaning apparatus of FIG. 34, taken along lines XXXVI- XXXVI, according to an aspect of the present disclosure;
FIG. 37 is a side perspective view of an automated dosing supply tank assembly, according to the present disclosure;
FIG. 38 is a front perspective view of an automated dosing supply tank assembly, according to the present disclosure;
FIG. 39 is a cross-sectional view of the automated dosing supply tank assembly of FIG. 37, taken along lines XXXIX-XXXIX, according to the present disclosure;
FIG. 40 is a top perspective view of an automated dosing supply tank assembly with covers removed to illustrate reservoir inlets, according to the present disclosure;
FIG. 41 is a cross-sectional view of the automated dosing supply tank of FIG. 38, taken along lines XLI-XLI, illustrating a cap assembly engaged with a switch assembly, according to the present disclosure;
FIG. 42 is a cross-sectional view of the automated dosing supply tank of FIG. 38, taken along lines XLII-XLII, illustrating a cap assembly engaged with a switch assembly, according to the present disclosure;
FIG. 43 is a partial bottom perspective view of a supply tank having an actuating projection, according to the present disclosure;
FIG. 44 is a partial cross-sectional view of a bottom of a supply tank assembly engaged with a cap assembly, according to the present disclosure;
FIG. 45 is a partial cross-sectional view of a bottom of a supply tank assembly engaged with a cap assembly, according to the present disclosure;
FIG. 46 is a partial bottom perspective view of a plunger of a cap assembly, according to the present disclosure;
FIG. 47A is a cross-sectional view of a cap assembly with a plunger in a closed position, a plug in a sealed position, and a ratio adjustment lever in a first position, illustrating first and second flow paths, according to the present disclosure;
FIG. 47B is a cross-sectional view of the cap assembly of FIG. 47A with the plunger in an opened position to open the first flow path, the plug in an opened position to open the second flow path, and the ratio adjustment lever in the first position to close a third flow path, according to the present disclosure;
FIG. 47C is a cross-sectional view of the cap assembly of FIG. 47B with the plunger in the opened position to open the first flow path, the plug in the opened position to open the second flow, and the ratio adjustment lever in a second position to open the third flow path, according to the present disclosure;
FIG. 48 is a partial cross-sectional view of the automated dosing supply tank assembly of FIG. 39, taken along lines XLVIII-XLVIII, with an umbrella valve extending through a wall and into a first reservoir, according to the present disclosure;
FIG. 49 is a partial cross-sectional view of the automated dosing supply tank assembly of FIG. 39, taken along lines XLIX-XLIX, with an umbrella valve extending through a wall and into a second reservoir, according to the present disclosure;
FIG. 50 is a partial cross-sectional view of a supply tank assembly with an air channel extending along a first reservoir, according to the present disclosure;
FIG. 51 is a partial cross-sectional view of a supply tank assembly with air channels extending through first and second reservoirs, according to the present disclosure;
FIG. 52 is a cross-sectional view of an automated dosing supply tank assembly, according to the present disclosure;
FIG. 53A is a cross-sectional view of a cap assembly with a plunger in a closed position, a plug in a sealed position, and a ratio adjustment lever in a first position, illustrating flow paths for first and second liquids, according to the present disclosure;
FIG. 53B is a cross-sectional view of the cap assembly of FIG. 53A with the plunger in an opened position to open the flow path for the first liquid, the plug in an opened position, and the ratio adjustment lever in the first position to open a first flow path and close a second flow path for the second liquid, according to the present disclosure;
FIG. 53C is a cross-sectional view of the cap assembly of FIG. 53B with the plunger in the opened position to open the flow path for the first liquid and the plug in the opened position, and the ratio adjustment lever in a second position to close the first flow path and open the second flow path for the second liquid, according to the present disclosure;
FIG. 54 is a bottom perspective view of a distal end of a plunger of a cap assembly illustrating outlet openings in the distal end for a liquid, according to the present disclosure;
FIG. 55A is a cross-sectional view of a cap assembly with a plunger in a closed position to close a first flow path, a plug in a sealed position to close a second flow path, and a ratio adjustment lever in a first position to close a third flow path, according to the present disclosure;
FIG. 55B is a cross-sectional view of the cap assembly of FIG. 55A with the plunger in an opened position to open the first flow path, the plug in an opened position to open the second flow path, and the ratio adjustment lever in the first position, closing a third flow path, according to the present disclosure; and
FIG. 55C is a cross-sectional view of the cap assembly of FIG. 55B with the plunger in the opened position to open the first flow path, the plug in the opened position to open the second flow path, and the ratio adjustment lever in a second position, opening the third flow path, according to the present disclosure.

The components in the figures are not necessarily to scale, emphasis instead being placed upon illustrating the principles described herein.

### DETAILED DESCRIPTION

The present illustrated embodiments reside primarily in combinations of method steps and apparatus components related to a cleaning apparatus with an automated dosing supply tank. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

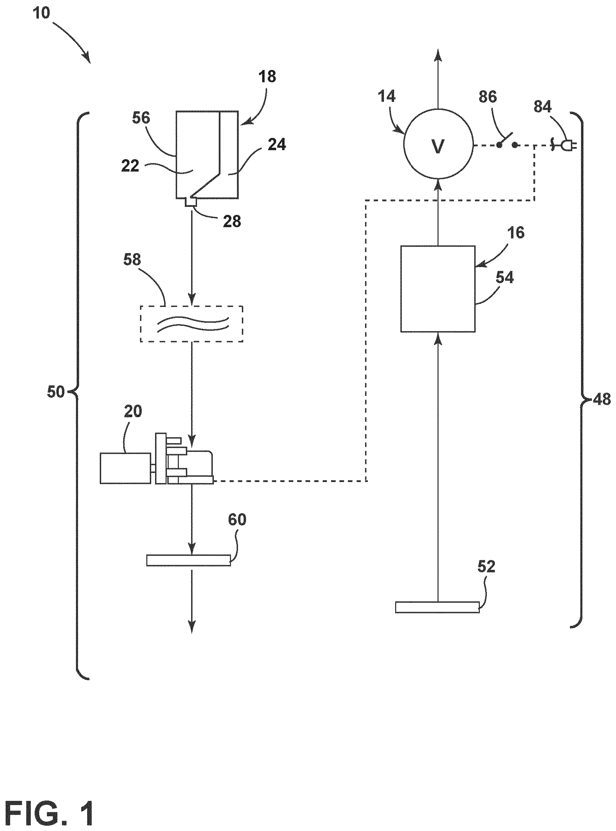

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

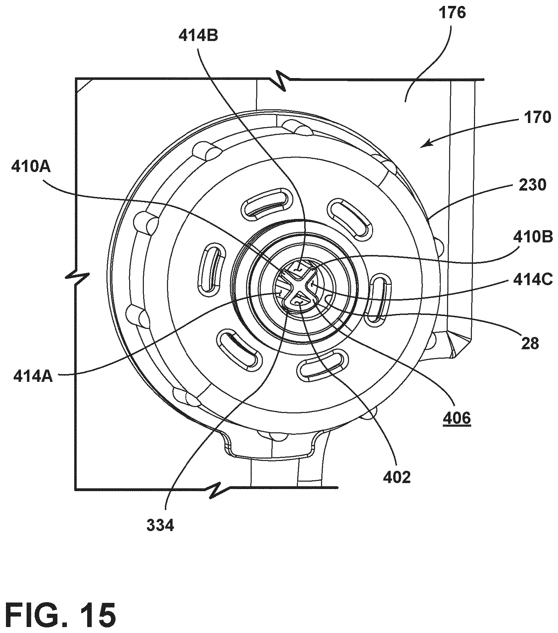

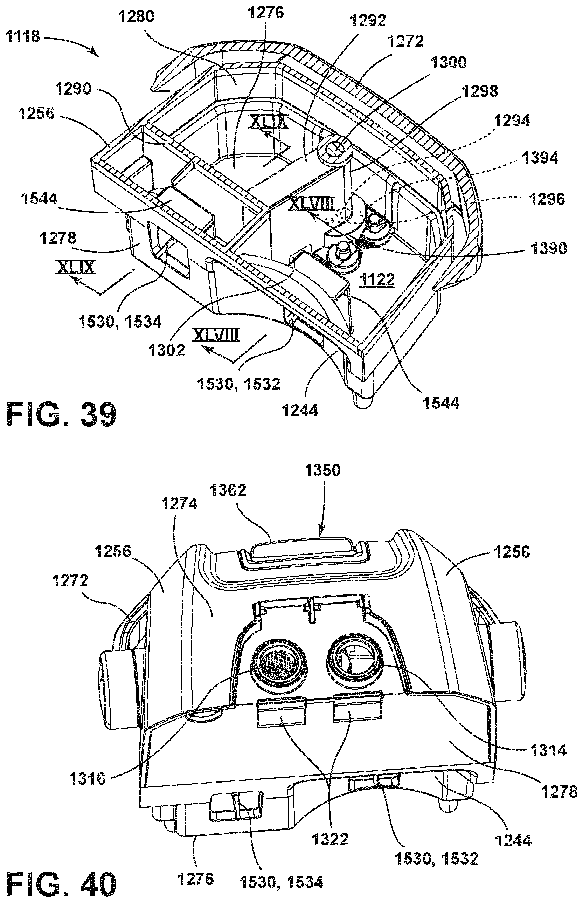

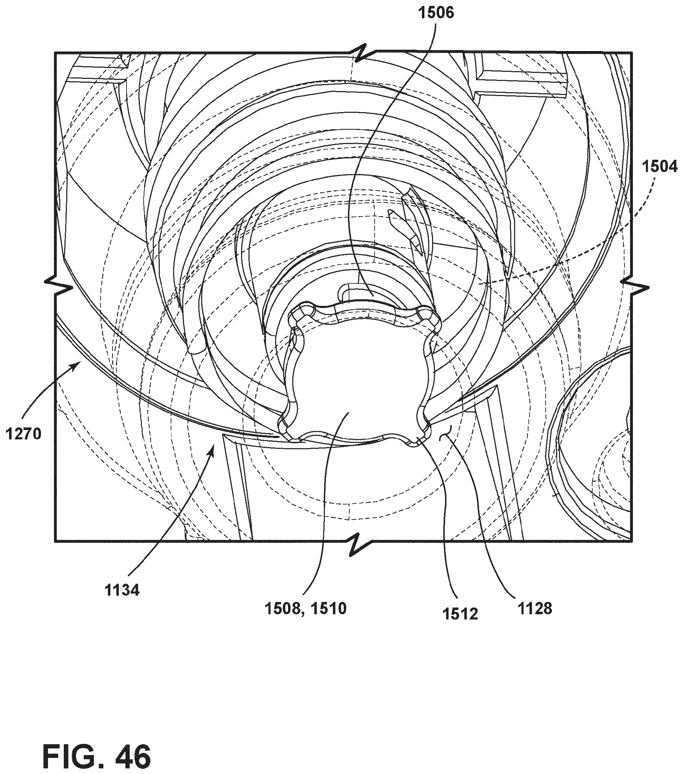

With reference to FIGS. 1-55C, reference numeral 10 generally designates a cleaning apparatus 10, which may have different configurations referred to herein as cleaning apparatuses 10A, 10B. The cleaning apparatus 10 includes a housing 12, a suction source 14, and a recovery tank assembly 16 in fluid communication with the suction source 14. The cleaning apparatus 10 also includes a supply tank assembly 18 and a pump 20 operably coupled with the supply tank assembly 18. The supply tank assembly 18 includes first and second reservoirs 22, 24 for housing first and second fluids or liquids, respectively. The supply tank assembly 18 also includes a neck 26 and a dispensing outlet 28. A first flow path 30 for the first liquid is defined from the first reservoir 22 to the dispensing outlet 28, and a second flow path 32 for the second liquid is defined from the second reservoir 24 to the dispensing outlet 28.

The supply tank assembly 18 includes a valve or plunger 34 at least partially disposed in the neck 26. in certain aspects, the supply tank assembly 18 is configured to engage a receiver 36 operably coupled with the housing 12 to adjust the plunger 34 between an opened position to dispense the first liquid or a combination of the first and second liquids for use in a cleaning process and a sealed position for sealing one or both of the flow paths 30, 32 to retain the first and second liquids in the supply tank assembly 18. In additional or alternative aspects, the supply tank assembly 18 is configured to engage the receiver 36 to adjust the plunger 34 to the opened position to dispense the first liquid with a first predefined amount of the second liquid or a second predefined amount of the second liquid to form cleaning solutions having different ratios of the first and second liquids and, ultimately, different concentrations.

Referring to FIG. 1, the cleaning apparatus 10 may have a variety of configurations. For example, the cleaning apparatus 10 may be an extraction cleaner often used to clean rugs, carpeting, drapes, and upholstered surfaces. In various aspects, the cleaning apparatus 10 includes a suction system 48 and a liquid delivery system 50. The liquid delivery system 50 and the suction system 48 may be used for dispensing liquids, as well as recovering fluid and debris material, respectively.

The suction system 48 is configured to draw fluid into the cleaning apparatus 10. The suction system 48 can collect liquid or semi-liquid messes from a surface being cleaned, including liquid dispensed via the liquid delivery system 50 and/or other debris materials. The suction system 48 includes the suction source 14 to generate a suction or vacuum effect at a suction nozzle or inlet 52 to draw the fluid and debris material from the surface being cleaned and into a recovery tank 54 of the recovery tank assembly 16. The captured liquids and/or debris materials are recovered and collected in the recovery tank 54. In general, working air is drawn from the suction inlet 52, through the recovery tank 54, through the suction source 14, and expelled from the cleaning apparatus 10.

The cleaning apparatus 10 also includes the liquid delivery system 50 with the supply tank assembly 18, which includes a supply tank 56 having the first and second reservoirs 22, 24 for holding and storing the first and second liquids. In certain aspects, the first liquid can be water, and the second liquid can be a cleaning agent or formula. Additionally or alternatively, the first liquid can be a general cleaning solution and the second liquid can be a specialized or concentrated cleaning solution, such as a peroxide solution. The user can change the first and second liquids for different cleaning processes and can use the supply tank assembly 18 to dispense the first liquid and/or the first and second liquids. The user can alternate between dispensing the first liquid alone and dispensing both the first and second liquids.

In this way, the liquid delivery system 50 is configured to dispense liquids for multiple cleaning processes. For example, when the first liquid is water and the second liquid is the cleaning formula, the liquid delivery system 50 can dispense water for a rinsing process, as well as both water and the cleaning formula for additional cleaning processes. In additional non-limiting examples where the first liquid is a general cleaning solution and the second liquid is a peroxide solution or other concentrated cleaning agent, the liquid delivery system 50 can dispense liquids for two different cleaning processes (e.g., the general cleaning solution and the combination of the general and concentrated cleaning solution). Many household extraction cleaning tasks can be performed using water to rinse the surface being cleaned, a combination of water and the liquid cleaning formula that contains surfactants, stabilizers, fragrances, and/or other active and inactive ingredients, and/or a combination of cleaning formulas for other cleaning processes.

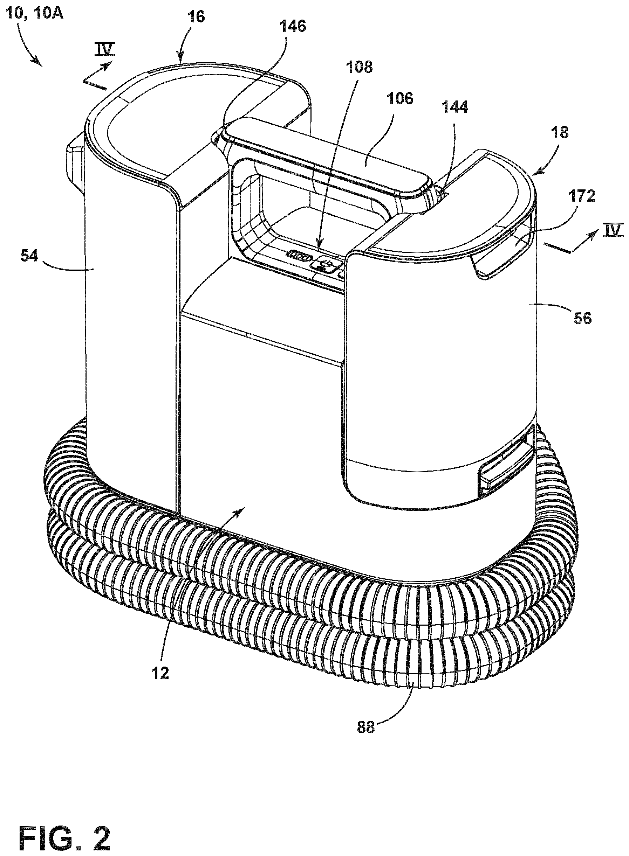

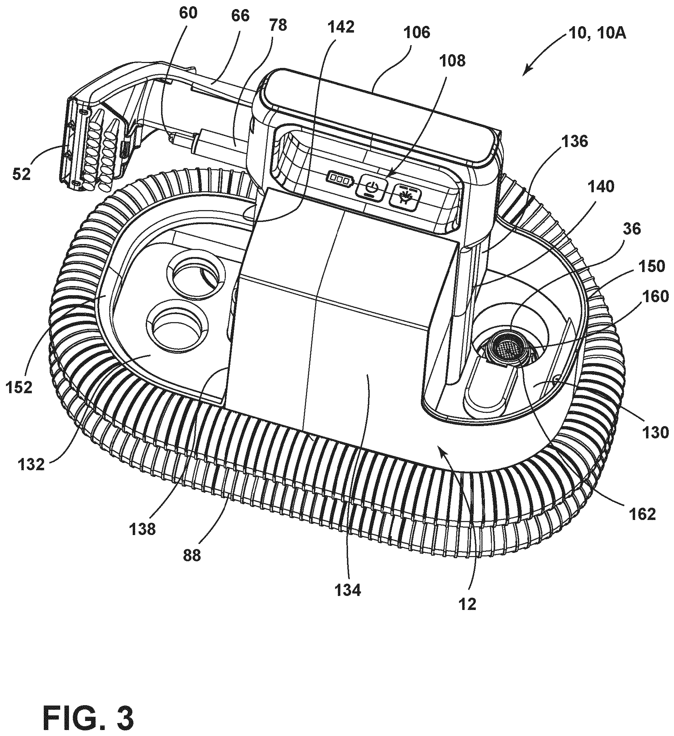

The liquid delivery system 50 also includes the pump 20, valves, and/or similar features to direct the first and second liquids out of the supply tank 56 and, consequently, out of the cleaning apparatus 10. The cleaning apparatus 10 may optionally include a heater 58 to heat or warm the liquids that are dispensed. The pump 20 is configured to direct the liquids from the supply tank 56 and through a spray outlet 60 of the cleaning apparatus 10 to be dispensed on the surface being cleaned. In certain aspects, the suction inlet 52 and the spray outlet 60 may be part of an accessory or tool 66 and/or a wand 78 (FIG. 3) coupled to the tool 66. In additional or alternative aspects, the suction inlet 52 and the spray outlet 60 may be part of the housing 12 (FIG. 2), such as in upright cleaning apparatuses 10.

Referring to FIGS. 2-4, the supply tank assembly 18 disclosed herein is a single unit that is configured to house and dispense two liquids. Accordingly, the supply tank assembly 18 may be considered a dual-liquid dispensing or automated dosing supply tank assembly 18. The first and second liquids are housed separately in the supply tank 56 and are configured to form a combined cleaning solution, generally forming the combined solution outside of the supply tank assembly 18. Multiple supply tank assemblies 18 may be used with the cleaning apparatus 10A to dispense different ratios of the two liquids at different predefined ratios. Accordingly, the supply tank assembly 18 provides automated dosing of the two liquids at predefined ratios.

Additionally, the dual-liquid dispensing supply tank assembly 18 is configured to dispense the first liquid alone, as well as the first and second liquids concurrently or simultaneously to generally be combined outside of the supply tank assembly 18 as described herein. In this regard, the supply tank assembly 18 is configured to dispense both the first and second liquids from the dispensing outlet 28 (FIG. 1) concurrently to be mixed at the receiver 36 and/or the housing 12 and outside of the supply tank assembly 18. The receiver 36 forms a well in the cleaning apparatus 10A, and the two liquids can be mixed in the well and/or in a fluid line 82 of the liquid delivery system 50. Further, the supply tank assembly 18 is configured to dispense the first liquid, while retaining the second liquid within the supply tank assembly 18. Accordingly, based on a setting of the supply tank assembly 18, the supply tank assembly 18 can dispense the first liquid for one cleaning process or both the first and second liquids concurrently for another cleaning process.

Referring still to FIGS. 2-4, components of the cleaning apparatus 10 are electrically coupled to a power source 84, such as a battery 84 or power cord plugged into a household electrical outlet. A power switch 86 (FIG. 1) between the power source 84 and electrical components of the cleaning apparatus 10 can be selectively closed by a user to activate the electrical components. The power source 84 may be utilized for powering the cleaning apparatus 10 and/or components coupled thereto, such as an accessory or tool 66.

An exemplary cleaning apparatus 10A including the dual-dispensing supply tank assembly 18 is illustrated in FIGS. 2-4. The illustrated cleaning apparatus 10A is a portable cleaning apparatus 10A, which is generally smaller and lighter for a user to carry. However, the components and functions described herein may be utilized in other configurations of the cleaning apparatus 10. For example, the components and functions, including the dual-liquid dispensing supply tank assembly 18, can be used in other portable cleaning apparatuses 10, as well as upright cleaning apparatuses 10 such as those that are larger and heavier and which are maneuverable along the surface being cleaned for the cleaning process, without departing from the teachings herein.

The housing 12 can include a hose connector for supporting an accessory hose 88, and various tools 66 can be selectively coupled to the cleaning apparatus 10A via the accessory hose 88 and the wand 78. The tool 66, which may include the suction inlet 52 and the spray outlet 60, is manually maneuverable by the user relative to the cleaning apparatus 10A along the surface being cleaned. The tool 66 is configured to utilize various features and functions of the cleaning apparatus 10A, such as one or both of the suction system 48 and the liquid delivery system 50 when the tool 66 is coupled to the cleaning apparatus 10A. The suction system 48 can generate the vacuum effect at the suction inlet 52 of the tool 66 to draw fluid and debris into the recovery tank 54. Additionally, the wand 78, which couples the tool 66 to the accessory hose 88, may include a trigger for releasing or spraying one or both of the first and second liquids from the liquid delivery system 50.

The accessory hose 88 is in fluid communication with the suction source 14 and the recovery tank assembly 16 via one or more conduits disposed within the housing 12. The accessory hose 88 is coupled and retained to the housing 12 via the hose connector. The suction source 14 is in fluid communication with the suction inlet 52 for generating a working airstream. During operation, the cleaning apparatus 10A draws fluid and debris laden working air through the suction inlet 52 and into the recovery tank 54. The working air exits the recovery tank 54 leaving at least a significant portion of the captured liquid and debris materials in the recovery tank 54 for later disposal. The working air passes through the suction source 14 and is then exhausted from the cleaning apparatus 10A.

The supply tank assembly 18 is in fluid communication with the spray outlet 60 via the pump 20, the fluid line 82, and a fluid delivery line 94. The pump 20 is disposed in the housing 12 and is in fluid communication with the supply tank assembly 18 via the fluid line 82. In examples with the tool 66, the fluid delivery line 94 extends through the accessory hose 88, and pressurized liquid from the liquid delivery system 50 is delivered to the spray outlet 60 via the supply tank assembly 18 and the pump 20.

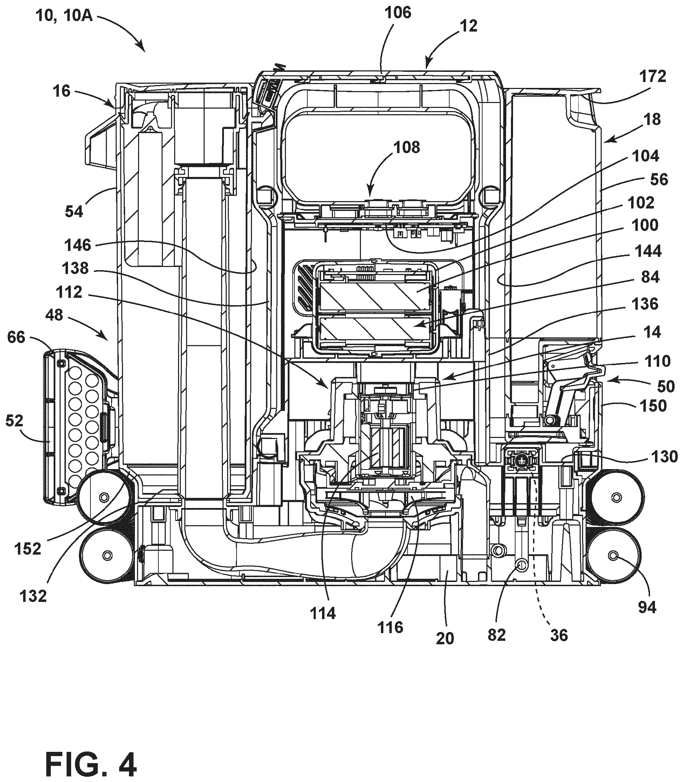

Referring to still to FIGS. 3 and 4, the housing 12 includes an internal cavity for housing various components of the cleaning apparatus 10A. For example, the housing 12 can house the battery 84, which may include one or more battery cells 100 and a battery cover 102, along with a printed circuit board assembly 104. The battery cells 100 may be rechargeable via an external power source 84, such as the wall plug, that can be connected via a power cord to a charging jack that operably coupled with the battery cells 100 via wiring extending from the charging jack to the battery 84. In certain aspects, the cleaning apparatus 10A is cordless, using the battery 84 to power the cleaning apparatus 10A during use, which increases maneuverability of the cleaning apparatus 10A during use.

The printed circuit board assembly 104 is illustrated above the battery 84 and proximate to a handle 106 of the cleaning apparatus 10A. A user interface 108 is disposed at an exterior location on the housing 12 proximate the handle 106 and is operably coupled with the printed circuit board assembly 104. The user interface 108 may include a plurality of depressible buttons, switches, touch features, or other components that enable the user to control the operation of the cleaning apparatus 10A, such as by powering or activating the cleaning apparatus 10A, selecting operating modes, etc.

A cooling fan 110 is disposed proximate to the battery 84 and the suction source 14. The cooling fan 110 is configured to be driven by the suction source 14 and is configured to direct cooling air through the housing 12. The cooling fan 110 is configured to draw ambient air into the housing 12, which can capture heat generated by the battery 84 and/or the suction source 14 to be directed out of the cleaning apparatus 10A.

Referring still to FIGS. 3 and 4, a suction/motor assembly housing 112 is operably coupled with the housing 12, which houses the suction source 14. In the illustrated configuration, the suction source 14 includes a motor 114 and an impeller assembly 116. The motor 114 and the impeller assembly 116 are generally disposed between a first or supply tank seat 130 and a second or recovery tank seat 132 discussed herein.

The housing 12 includes the supply tank seat 130 for receiving and supporting the supply tank assembly 18 and the recovery tank seat 132 for receiving and supporting the recovery tank assembly 16. The housing 12 generally includes a central support 134 disposed between the first and second seats 130, 132. The central support 134 has a first sidewall 136 proximate to the first seat 130 and a second sidewall 138 proximate to the second seat 132. The handle 106 is operably coupled to the central support 134 and extends between the first and second sidewalls 136, 138 and the first and second seats 130, 132.

Each of the first and second sidewalls 136, 138 includes a protruding channel 140, 142, and each of the supply tank assembly 18 and the recovery tank assembly 16 define a recessed channel 144, 146. When the tank assemblies 16, 18 are disposed on the seats 130, 132, the protruding channels 140, 142 are disposed in the recessed channels 144, 146, allowing the tank assemblies 16, 18 to mate with the housing 12.

The housing 12 includes a lower wall 150 extending around the first seat 130 and a rim 152 extending around the second seat 132. The rim 152 has a lesser height than the lower wall 150, allowing a greater lateral exposure of the recovery tank assembly 16. Additionally, the second seat 132 is disposed lower than the first seat 130, resulting in the recovery tank assembly 16 having a greater height than the supply tank assembly 18. This configuration allows an increased volume for the recovery tank assembly 16 to be able to hold the contents of the supply tank 56 along with additional recovered debris materials.

The housing 12 includes the receiver 36 configured to engage the supply tank assembly 18. A seal 160 is disposed around the receiver 36, and a filter or screen 162 is disposed over the receiver 36. The seal 160 may be coupled with the housing 12 or the supply tank assembly 18 and is configured to provide a sealed interface between the receiver 36 and the supply tank assembly 18.

Referring to still to FIG. 4, as well as FIGS. 5 and 6, the supply tank assembly 18 includes a cap assembly 170, which is sized to be received by the receiver 36 (FIG. 3). The cap assembly 170 is removable and includes multiple functioning components for controlling the liquid flow within the supply tank assembly 18 and through the dispensing outlet 28 as described herein. The receiver 36 (FIG. 3) includes a component that functionally mates with the cap assembly 170 to actuate the plunger 34, opening the plunger 34 and allowing liquid to flow from the supply tank 56, through the cap assembly 170, and then through the fluid line 82 that extends to the pump 20. The supply tank assembly 18 fluidly couples with the pump 20 at the supply tank seat 130.

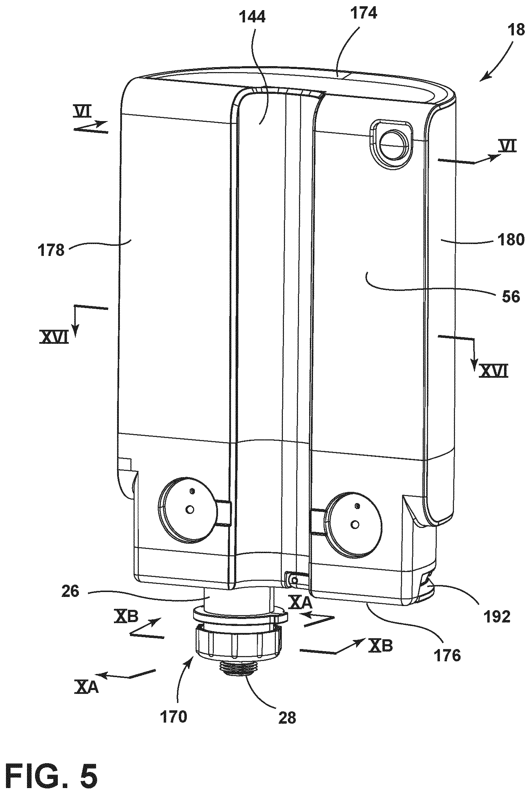

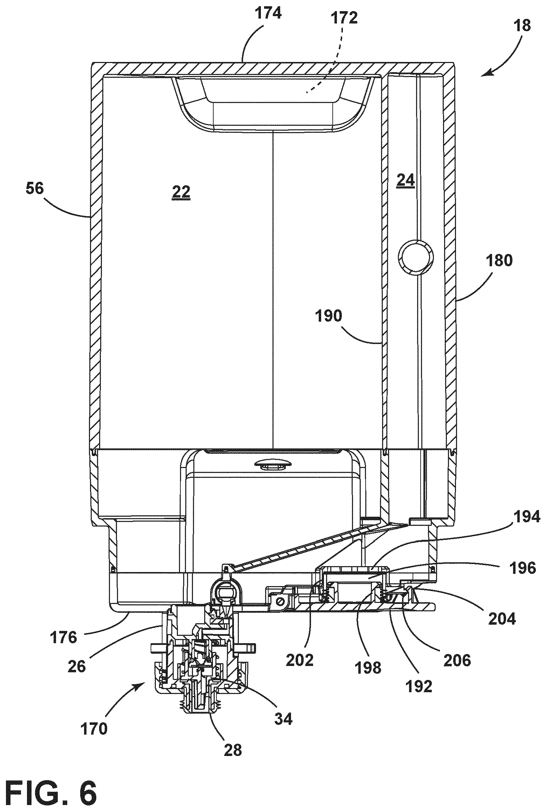

Referring still to FIGS. 5 and 6, the supply tank assembly 18 includes at least the supply tank 56 for housing the liquids, the neck 26, and the cap assembly 170 for engaging the receiver 36 (FIG. 4). The supply tank 56 has a handle 172 that can be utilized for removing the supply tank assembly 18 from the housing 12 (FIG. 2). The supply tank 56 defines the first reservoir 22 and the second reservoir 24 for separately housing the first and second liquids. The supply tank 56 includes a top wall 174, a bottom wall 176, an inner wall 178, and an outer wall 180. The bottom wall 176 is configured to be positioned on the first seat 130. The inner wall 178 defines the recessed channel 144 for receiving the protruding channel 140 of the first sidewall 136 (FIG. 3). The outer wall 180 is generally rounded to correspond with the shape of the lower wall 150 of the housing 12 (FIG. 3), resulting in the supply tank 56 having a generally "D" shape. Further, the supply tank 56 includes an upper portion having a greater size than a lower portion, where the lower portion fits within and/or interfaces with the lower wall 150 of the housing 12 when the supply tank assembly 18 is seated on the first seat 130 (FIG. 3).

The neck 26 extends from the bottom wall 176, forming a cylindrical lower extension to the supply tank 56. The neck 26 is substantially hollow to provide fluid communication between the dispensing outlet 28 and each of the first and second reservoirs 22, 24. The neck 26 is generally off-center, disposed substantially or entirely to one side of the recessed channel 144.

A dividing wall 190 extends from an inner surface of the top wall 174 and toward the bottom wall 176. In the illustrated configuration, the dividing wall 190 is substantially on an opposing side of the recessed channel 144 compared to the neck 26. Accordingly, the dividing wall 190 extends generally vertically for a substantial height of the supply tank 56 and then extends at an angle toward the bottom wall 176 and toward the neck 26 to provide the fluid communication between the neck 26 and both reservoirs 22, 24. The second reservoir 24 may be a portion of the first reservoir 22. In this way, the second reservoir 24 may be smaller than the first reservoir 22.

In various aspects, the supply tank assembly 18 is one component with two integrally formed tanks for the two reservoirs 22, 24. In such examples, the dividing wall 190 may divide the single component into two parts. In additional or alternative aspects, the supply tank assembly 18 may be formed by two tank components that can mate or be coupled together to form the supply tank assembly 18. For example, the first reservoir 22 may be defined by a first tank part, and the second reservoir 24 may be defined by a second tank part. The two tank parts may fit together to form the overall supply tank 56 and place both reservoirs 22, 24 in fluid communication with the dispensing outlet 28. In such examples, the dividing wall 190 may be formed as one or more outer walls of the tank components. The two tank components may have mating features to remain engaged with one another.

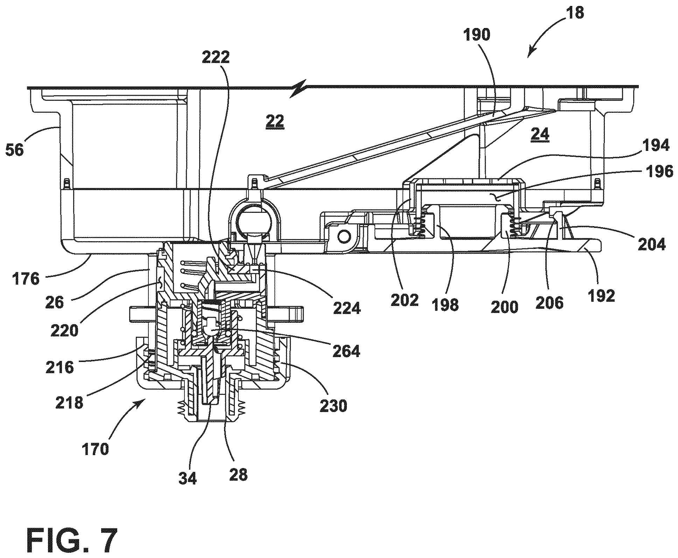

Referring still to FIG. 6, as well as FIG. 7, the supply tank assembly 18 includes a cover 192 operably coupled to the bottom wall 176. As illustrated, the cover 192 is rotatably coupled to the bottom wall 176 proximate to the neck 26. The cover 192 is configured to selectively provide access to a reservoir inlet 194 to allow the user to add the second liquid to or remove the second liquid from the second reservoir 24, as well as selectively seal the second reservoir 24. The supply tank 56 defines a receiving channel 196 extending into the second reservoir 24 below the angled portion of the dividing wall 190. The angled dividing wall 190 may operate as a guide for the second liquid being added to the supply tank 56, as the second liquid flows along the angled portion of the dividing wall 190 and further into the supply tank 56.

The cover 192 includes a projection 198 that extends into the receiving channel 196. A seal 200 is disposed about the projection 198 and configured to engage a wall 202 forming the receiving channel 196 to provide a seal at the reservoir inlet 194 when the supply tank 56 is oriented with the neck 26 oriented down. Further, the cover 192 includes a latch 204 that engages a notch 206 on the supply tank 56 to retain the cover 192 in a closed state.

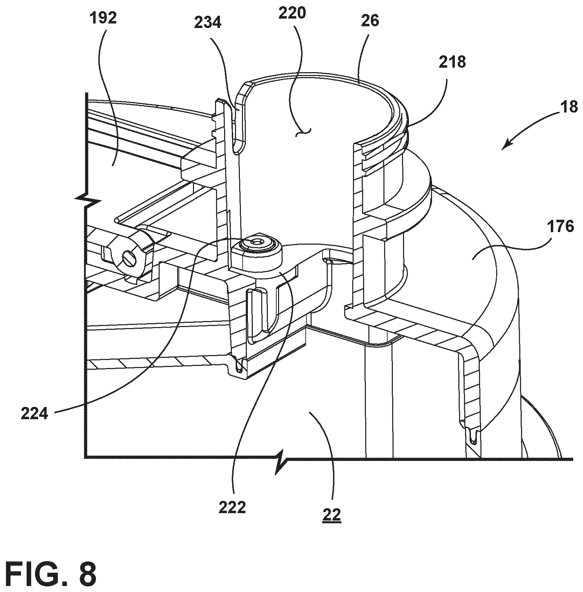

Referring to FIGS. 8-11, the cap assembly 170 is selectively coupled to the neck 26. The flow paths 30, 32 and the dispensing outlet 28 are formed by one or both of the neck 26 and the cap assembly 170. The cap assembly 170 includes functioning components for opening and closing the fluid flow paths 30, 32, as well as for controlling the predefined ratios of the first and second liquids.

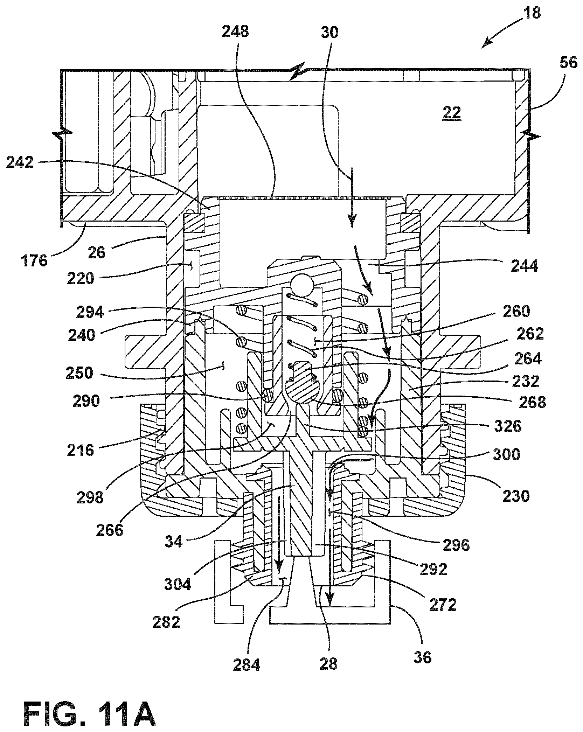

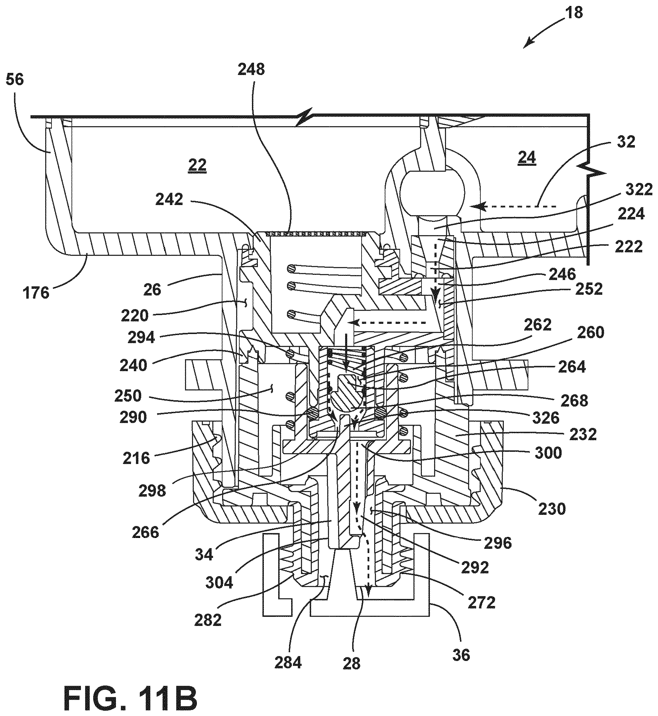

In the illustrated configuration, the cap assembly 170 includes threads 216 that are configured to engage mating threads 218 on the neck 26. The cap assembly 170 can be removed from the neck 26 providing an opening 220 into the supply tank 56. As illustrated in FIG. 11, upon removal of the cap assembly 170, the neck 26 provides the opening 220 into the first reservoir 22 for adding or removing the first liquid from the first reservoir 22. Further, a protrusion 222 may be disposed in the opening 220, where the protrusion 222 defines a reservoir outlet 224 for directing the second liquid from the second reservoir 24 into the neck 26. A cover component may be used to cover the reservoir outlet 224 to reduce or prevent the first liquid being added into the opening 220 from flowing through the reservoir outlet 224.

The cap assembly 170 is configured to assist with controlling the dispensing of the first and second liquids. For example, the cap assembly 170 is configured to retain the first and second liquids in the supply tank assembly 18 when the supply tank assembly 18 is removed from the housing 12 (FIG. 2) and to allow the first and second liquids to flow from the supply tank 56 when the supply tank assembly 18 engages the receiver 36.

The cap assembly 170 includes a cap 230 for engaging the neck 26 and the seal 160 (FIG. 2) extending around the receiver 36. The cap assembly 170 includes a locating protrusion 232 configured to align and be received in a locating slot 234 of the neck 26. The locating protrusion 232 and the locating slot 234 assist in properly aligning the cap assembly 170 relative to the neck 26 to assist with aligning components and paths 30, 32 for dispensing the first and second liquids through the cap assembly 170.

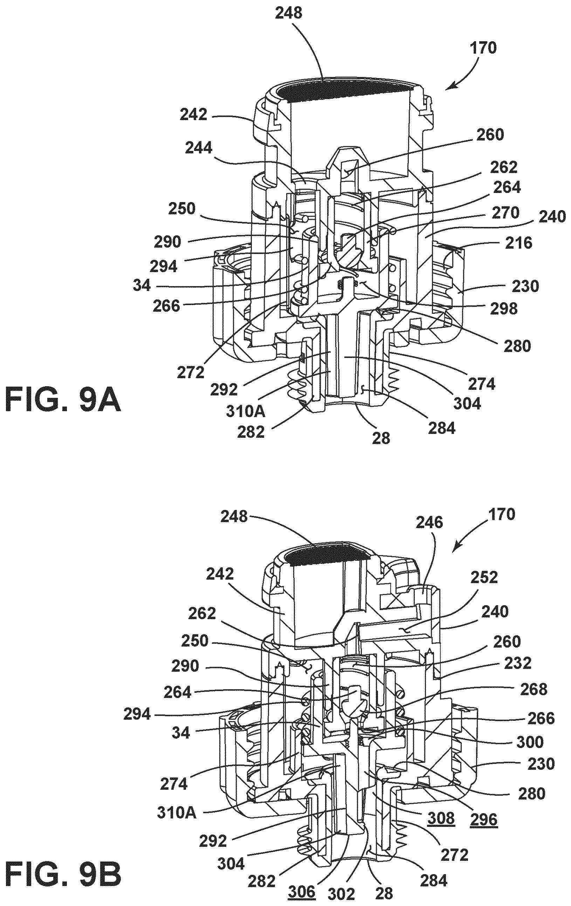

The cap assembly 170 includes a guide body 240 operably coupled to the cap 230. When the cap 230 engages the threads 218 on the neck 26, the guide body 240 is inserted into and extending into the neck 26. The cap 230 may be movable relative to the guide body 240 to allow insertion of the guide body 240 into the neck 26 and then rotation of the cap 230 to secure the cap assembly 170 to the neck 26. An insertion end 242 of the cap assembly 170 defines a first cap inlet 244 for receiving the first liquid from the first reservoir 22 (FIG. 9A) and a second cap inlet 246 for receiving the second liquid from the second reservoir 24 via the reservoir outlet 224 (FIG. 9B). The insertion end 242 of the cap assembly 170, as illustrated, has a lowered portion that abuts the projection 198 to align the reservoir outlet 224 with the second cap inlet 246. A raised portion of the insertion end 242 extends beyond the projection 198 to generally align with the bottom wall 176 and, consequently, a bottom of the first reservoir 22. A filter or screen 248 is coupled to the raised portion of the insertion end 242.

As illustrated in FIGS. 9A, 10A, and 11A, the cap assembly 170 defines a first channel 250 from the first cap inlet 244. The first cap inlet 244 is spaced from the screen 248 and can control the amount of the first liquid that ultimately flows to the dispensing outlet 28, thereby controlling the amount of the first liquid dispensed and the predefined ratio with the second liquid. The first channel 250 extends from the first cap inlet 244 and adjacent to or around a second channel 252. In certain aspects, the second channel 252 extends through the first channel 250 while remaining separate. In this way, the two liquids are retained separately in and flow separately through the cap assembly 170.

As illustrated in FIGS. 9B, 10B, and 11B, the cap assembly 170 defines or includes the second channel 252 extending from the second cap inlet 246. As illustrated, the second channel 252 extends vertically from the second cap inlet 246, horizontally toward a center of the cap assembly 170, and then vertically to an internal housing 260. The internal housing 260 houses a first biasing member 262, which is illustrated as a coil spring, and a plug 264. The internal housing 260 tapers to a lower opening 266, and the plug 264 has a widened head 268 that is configured to at least substantially block the lower opening 266 when in a closed position. A sealing feature 270 may be disposed between the internal housing 260 and the plunger 34 to reduce or prevent liquid from flowing therebetween.

Referring still to FIGS. 9A-11B, the cap assembly 170 includes an internal wall 272 proximate to a dispensing end 274 of the cap assembly 170. The internal wall 272 extends toward the insertion end 242 and defines a plunger seat 280. The cap assembly 170 also includes an engagement feature 282 extending from the dispensing end 274, which at least partially defines or includes the dispensing outlet 28. The engagement feature 282 includes a dispensing channel 284 to form a narrow and generally hollow extension that extends beyond the cap 230.

The cap assembly 170 includes the plunger 34, which has a stopper portion 290 and an elongated guide portion 292 extending from the stopper portion 290. The stopper portion 290 extends across the plunger seat 280 and can engage the plunger seat 280 to at least substantially block liquid flow to the dispensing outlet 28. The guide portion 292 extends into the engagement feature 282. A second biasing member 294, illustrated as a larger coil spring, extends through the guide body 240 and around the internal housing 260 to engage the plunger 34.

Referring to FIGS. 9A-11B, as well as FIG. 12, the plunger 34 defines or includes an interior channel 296 extending therethrough. The stopper portion 290 includes a receiving cavity 298, and the internal housing 260 and the plug 264 are disposed at least partially in the receiving cavity 298 of the stopper portion 290. The interior channel 296 has an inlet opening 300 defined at the stopper portion 290, such that the second liquid is configured to flow through the internal housing 260 and into the interior channel 296 of the plunger 34 via the inlet opening 300. The interior channel 296 extends through the guide portion 292 toward the dispensing outlet 28.

The plunger 34 defines at least one outlet opening 302 proximate to a distal end 304 thereof for the second liquid to exit the plunger 34. The outlet opening 302 may be defined at least partially by an end surface 306 of the plunger 34 and may also be at least partially defined by a side surface 308 of the plunger 34. When the dispensing outlet 28 is defined partially by the end surface 306 and partially by the side surface 308 of the plunger 34, the end surface 306 at the distal end 304 of the plunger 34 has increased surface area which increases strength and rigidity of the distal end 304 of the plunger 34. This may be advantageous for engaging the receiver 36, as well as for maximizing efficiency of the manufacturing process.

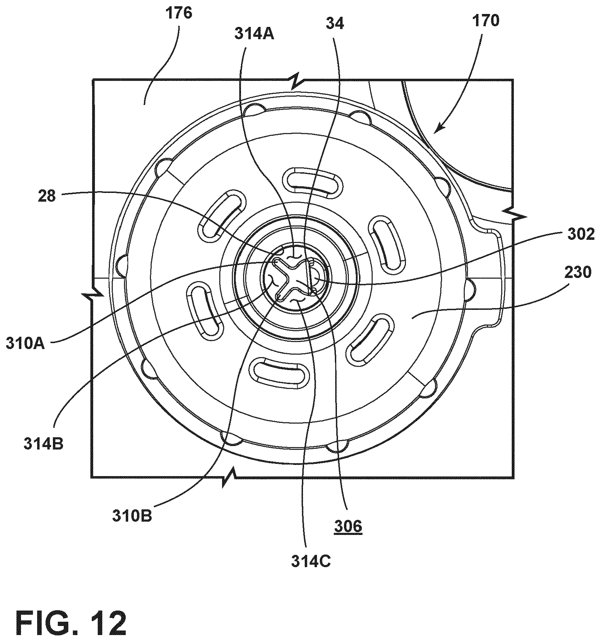

Referring still to FIGS. 11B and 12, the guide portion 292 of the plunger 34 also includes guide projections 310A, 310B that extend along the length of the guide portion 292, similar to the interior channel 296. The guide projections 310A, 310B extend radially away from a center of the guide portion 292. The guide projections 310A, 310B at least partially define fluid outlets 314A-314C for directing the first liquid to the dispensing outlet 28. In the example illustrated in FIG. 12, the plunger 34 and an inner surface of the engagement feature 282 define three fluid outlets 314A-314C therebetween. In this configuration, three-quarters of the distal end 304 of the plunger 34 defines the fluid outlets 314A-314C for the first liquid and the last one-quarter defines the outlet opening 302 for the second liquid. This arrangement assists in keeping the first liquid and the second liquid at least substantially, or entirely, separate through the supply tank assembly 18 and the dispensing outlet 28 to be mixed outside of the supply tank assembly 18. Further, the relationship between the plunger 34 and the engagement feature 282 may reduce or prevent the first liquid from flowing along the plunger 34 proximate to the outlet opening 302 to further retain separation between the first liquid and the second liquid.

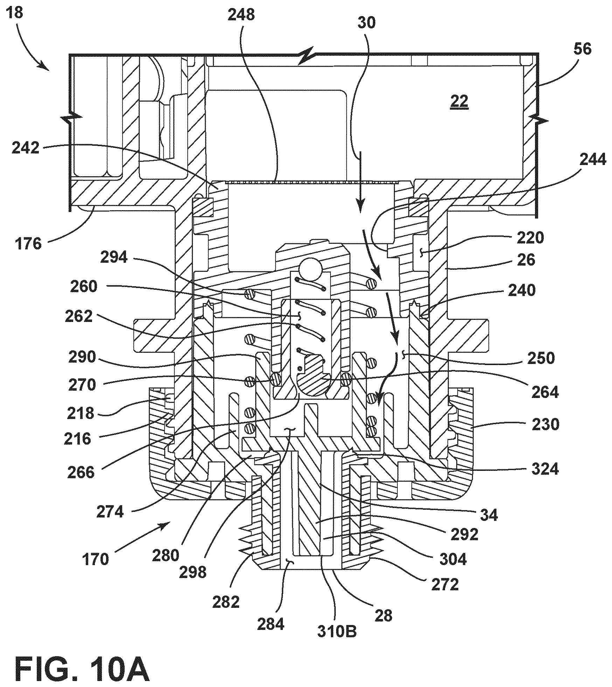

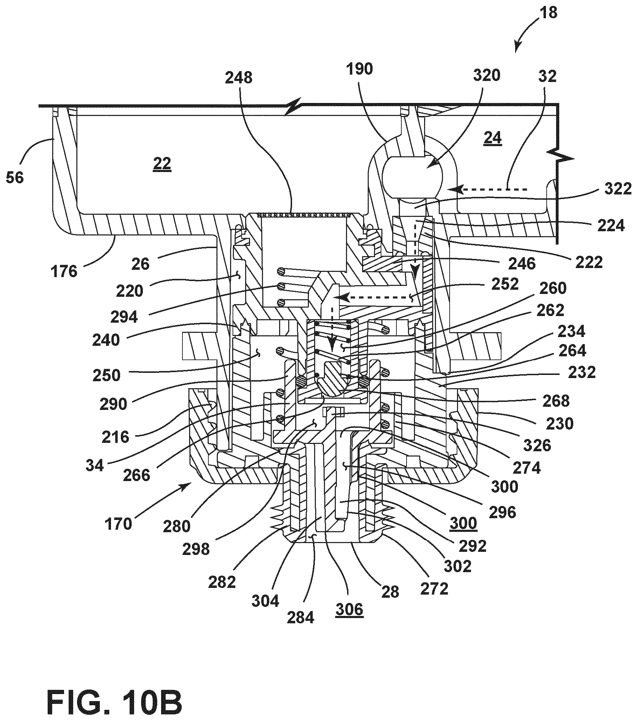

Referring still to FIGS. 10A, 10B and 12, the plug 264 and the plunger 34 are configured to selectively block or close the fluid flow paths 30, 32 through the cap assembly 170 to the dispensing outlet 28. The supply tank assembly 18 includes the first flow path 30 from the first reservoir 22 to the dispensing outlet 28. In certain aspects, the first flow path 30 extends: from the first reservoir 22, through the first cap inlet 244, through the first channel 250 of the guide body 240 toward the stopper portion 290, around the plunger 34, through the dispensing channel 284 of the engagement feature 282, through the fluid outlets 314A-314C, and to or through the dispensing outlet 28. The supply tank assembly 18 also includes the second flow path 32 from the second reservoir 24 to the dispensing outlet 28. The second flow path 32 extends: from the second reservoir 24, past a switch assembly 320 described further herein, through a guide channel 322 of the supply tank assembly 18, through the reservoir outlet 224, through the second cap inlet 246, through the second channel 252, through the internal housing 260, around the plug 264, into the interior channel 296 of the plunger 34 via the inlet opening 300, through the outlet opening 302, and to or through the dispensing outlet 28. The plug 264 and the plunger 34 are downstream of the switch assembly 320. The first flow path 30 and the second flow path 32 extend through the cap assembly 170 and the neck 26.

The first and second biasing members 262, 294 operably engage the plunger 34 and the plug 264, respectively. The first biasing member 262 biases the plug 264 toward a closed position, closing the second flow path 32 upstream of the plunger 34. The second biasing member 294 biases the plunger 34 toward a sealed position, closing the first flow path 30 upstream of the dispensing channel 284. Further, the second biasing member 294 biasing the plunger 34 to the sealed position applies a biasing force to the plunger 34 to move the plunger 34 away from the plug 264, retaining the plug 264 in the closed position. When the supply tank assembly 18 is removed from the housing 12 (FIG. 3), the plunger 34 is in the sealed position and the plug 264 is in the closed position to reduce or prevent liquid from exiting the supply tank assembly 18 via the dispensing outlet 28.

When the plunger 34 is in the sealed position, the stopper portion 290 abuts the plunger seat 280. The plunger seat 280 may include a sealing feature 324 extending about an opening into the dispensing channel 284, and the stopper portion 290 of the plunger 34 is configured to engage the sealing feature 324 to form a fluid seal in the first flow path 30. When the plunger 34 is in the sealed position, the first liquid may flow along the first flow path 30 up to the first channel 250 before being blocked by the stopper portion 290 prior to the dispensing channel 284.

When the plug 264 is in the closed position, the plug 264 generally fills the lower opening 266 of the internal housing 260, blocking the second flow path 32 upstream of the plunger 34. The second liquid can flow along the second flow path 32 into the internal housing 260 and is then retained in the internal housing 260 by the plug 264 sealing the lower opening 266.

The plunger 34 includes an actuating projection 326, which is generally part of the stopper portion 290. The actuating projection 326 is aligned with the plug 264. When the plunger 34 is in the sealed position and the plug 264 is in the closed position, the actuating projection 326 is spaced from the plug 264, allowing the biasing force of the first biasing member 262 to bias the plug 264 to close the lower opening 266.

Referring again to FIGS. 11A, 11B, and 12, when the supply tank assembly 18 engages and mates with the receiver 36, the receiver 36 is configured to actuate or move the plunger 34, which consequently actuates or moves the plug 264, overcoming the biasing forces of the biasing members 262, 294. The receiver 36 engages the distal end 304 of the plunger 34, moving the plunger 34 against the biasing force of the second biasing member 294 and toward the insertion end 242 of the cap assembly 170. The movement of the plunger 34 adjusts the stopper portion 290 away from the plunger seat 280, providing fluid communication around the plunger 34 to the dispensing outlet 28 for the first liquid. When the supply tank assembly 18 engages the receiver 36, the plunger 34 is moved to an opened position to allow the first liquid to flow along the first flow path 30 from the first reservoir 22, through the first channel 250, around the plunger 34, through the dispensing channel 284, through the fluid outlets 314A-314C, and through the dispensing outlet 28 into the housing 12.

Further, when the plunger 34 is shifted toward the insertion end 242, the actuating projection 326 of the stopper portion 290 is configured to extend through the lower opening 266 to engage and, consequently, move the plug 264. In this way, the movement of the plunger 34 is configured to move the plug 264 away from the lower opening 266. The plunger 34 is configured to press against the plug 264 and move the plug 264 against the biasing force of the first biasing member 262, toward the insertion end 242. The movement of the plug 264 against the biasing force moves the widened head 268 away from the lower opening 266, providing fluid communication around the plug 264 and into the receiving cavity 298 of the plunger 34. Accordingly, when the plunger 34 is in the opened position, the plug 264 is also in an opened position, allowing the second liquid to flow from the second reservoir 24, through the guide channel 322 of the supply tank 56, through the second channel 252 of the cap assembly 170, around the plug 264, through the plunger 34, through the outlet opening 302, and through the dispensing outlet 28 into the housing 12. In other words, movement of the plunger 34 opens both the first and second flow paths 30, 32.

Referring again to FIGS. 10A-12, the plug 264 and the plunger 34 are either both raised to open the flow paths 30, 32 or both lowered to close the flow paths 30, 32 based on the engagement with the receiver 36. The single receiver 36 is configured to engage the plunger 34, which then engages the plug 264 to allow the first liquid and the second liquid to be concurrently, yet separately, dispensed from the dispensing outlet 28 to be mixed at the receiver 36 outside of the supply tank assembly 18. The second flow path 32 and the first flow path 30 are separate paths through the supply tank assembly 18, reducing or preventing any mixing or at least a substantial amount of mixing of the first liquid and the second liquid before exiting the supply tank assembly 18. The first liquid and the second liquid are concurrently dispensed or otherwise drawn into the receiver 36 where the first and second liquids are mixed to form the mixed cleaning. The cleaning solution can be mixed at the receiver 36 and/or in the fluid line 82 (FIG. 4) that extends to the pump 20.

The cap assembly 170 engages the receiver 36 and includes at least a majority of the features that control the dispensing and function of the supply tank assembly 18. For example, the cap assembly 170 includes the plunger 34 for opening and closing the first flow path 30 at the plunger seat 280, the plug 264 for opening and closing the second flow path 32, the biasing members 262, 294 for biasing the plunger 34 and the plug 264, the cap inlets 244, 246 for controlling the flow rate of the first and second liquids, and the first and second channels 250, 252 for guiding the liquids separately. The cap assembly 170, including these controlling components, is removable from the supply tank assembly 18.

The cap assembly 170 being removable and allowing the removal of the controlling components may be advantageous for maximizing efficiency of the manufacturing process. For example, the supply tank assembly 18 may be manufactured in a manner that can fit with an existing base unit or housing 12, while still providing a new function of providing one or two solution dispensing options. Additionally, the removal of the cap assembly 170 maximizes the user experience for more conveniently and efficiently adding the first liquid to the first reservoir 22. Further, the controlling components in the cap assembly 170 may allow the cap assembly 170 to engage the receiver 36 while being coupled with different types, style, or sizes of supply tanks 56. For example, the same cap assembly 170 can be used with supply tanks 56 that provide different dosing of the two liquids. Moreover, the cap assembly 170 with removable controlling components may minimize an overall size of the supply tank assembly 18, which may increase maneuverability of the cleaning apparatus 10 and/or the supply tank assembly 18 by the user.

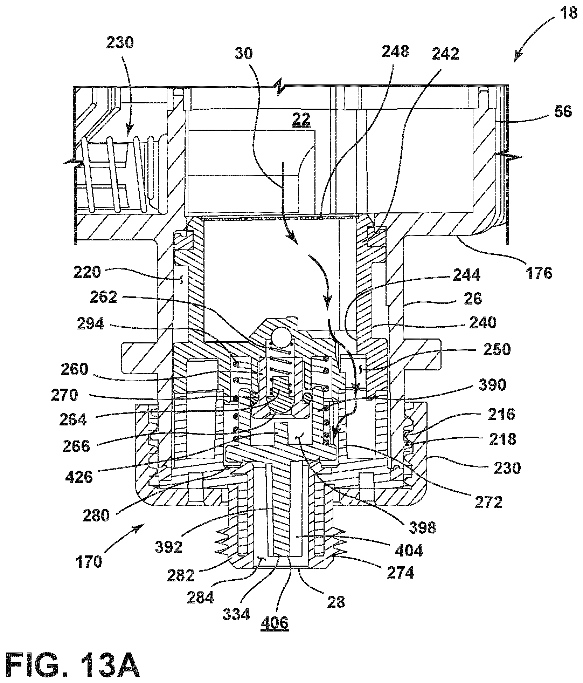

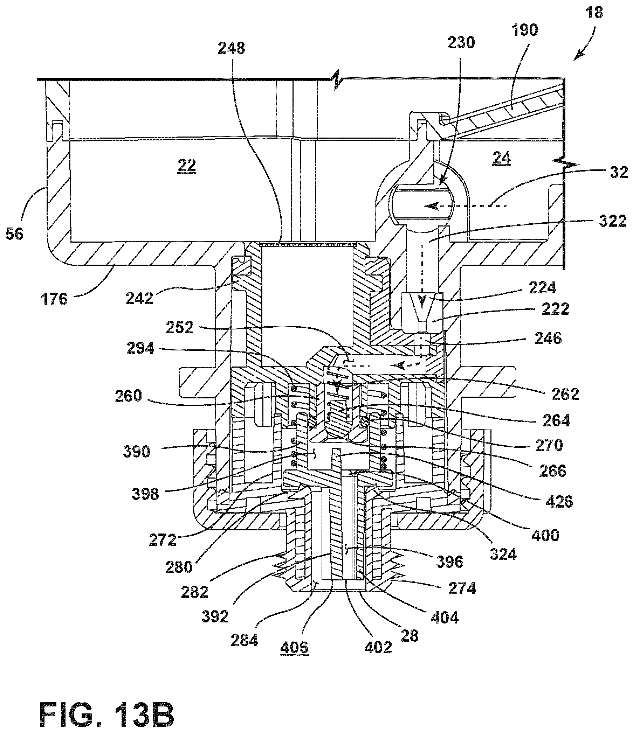

Referring to FIGS. 13A-15, an additional or alternative configuration of a plunger 334 is illustrated. The supply tank assembly 18 with which this plunger 334 is used may be substantially similar or the same in structure and function as the supply tank assembly 18 in FIGS. 9A-11B, with the differences being in the plunger 334 and in the cap assembly 170.

The plunger 334 includes a stopper portion 390 and a guide portion 392 extending from the guide portion 392 and into the dispensing channel 284 of the engagement feature 282. The stopper portion 390 extends across the plunger seat 280 to at least substantially block the first flow path 30 to the dispensing outlet 28. The plunger 334 includes an interior channel 396 extending therethrough. Additionally, the stopper portion 390 defines a receiving cavity 398 with an inlet opening 400 in fluid communication with the receiving cavity 398 to receive the second liquid.

The inlet opening 400 provides fluid communication with the interior channel 396 of the plunger 334 that extends through the guide portion 392 toward the dispensing outlet 28. The guide portion 392 of the plunger 34 defines at least one outlet opening 402 proximate to a distal end 404 thereof for the second liquid to exit the plunger 334. As illustrated, the outlet opening 402 is defined substantially or entirely by an end surface 406 of the plunger 334.

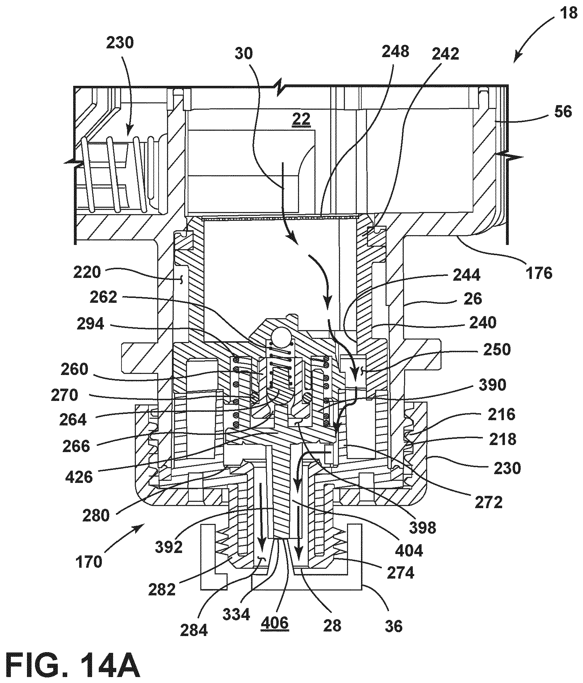

The guide portion 392 of the plunger 334 also includes guide projections 410A, 410B that extend along the length of the guide portion 392 and generally parallel to the interior channel 396. The guide projections 410A, 410B extend radially outward from a center of the guide portion 392. The guide projections 410A, 410B at least partially define the fluid outlets 414A-414C for directing the first liquid to the dispensing outlet 28. In the example illustrated in FIG. 14A-15, the plunger 334 and the inner surface of the engagement feature 282 define three fluid outlets 414A-414C therebetween. In this configuration, three-quarters of the end surface 406 of the plunger 334 defines the fluid outlets 414A-414C and the remaining one-quarter defines the outlet opening 402 in the distal end 404. This arrangement assists in keeping the second liquid and the first liquid at least substantially, or entirely, separate through the supply tank assembly 18 and the dispensing outlet 28 to be mixed outside of the supply tank assembly 18.

In this configuration, an actuating projection 426 of the plunger 334 engages the plug 264 for the second liquid to enter the inlet opening 400 and flow through the interior channel 396 to exit the plunger 334 through the outlet opening 402 defined by the end surface 406 of the distal end 404 of the plunger 334. Accordingly, the second liquid is configured to be dispensed along a generally linear path through the plunger 334 and through the dispensing outlet 28. Further, the second flow path 32 and the first flow path 30 through the dispensing channel 284 are generally parallel. Based on this configuration, the plunger 334 may more efficiently retain separation between the first liquid flowing through the fluid outlets 414A-414C and the second liquid flowing through the outlet opening 402 to be mixed outside of the supply tank assembly 18.

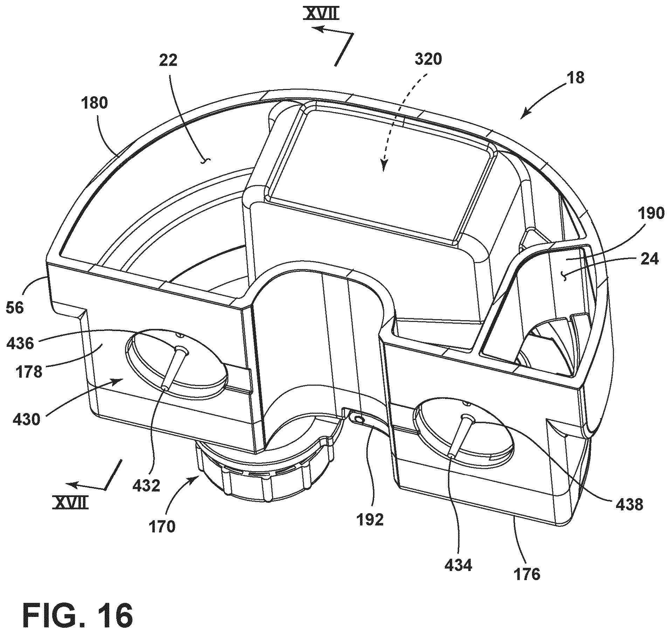

Referring to FIGS. 16-19, the supply tank assembly 18 includes pressure balancing features 430, such as check valves or umbrella valves 432, 434 for controlling pressure inside the supply tank 56 relative to an area external to the supply tank 56 when the pump 20 (FIG. 1) is active. Further, the pressure balancing features 430 assist with controlling the flow of the first and second liquids out of the supply tank 56 to provide a more stable mixing ratio between the two liquids. The supply tank 56 defines a first through-hole 436 in the inner wall 178 and in fluid communication with the first reservoir 22, and a second through-hole 438 in the inner wall 178 and in fluid communication with the second reservoir 24. Generally, the through-holes 436, 438 are defined in recessed areas on opposing sides of the recessed channel 144.

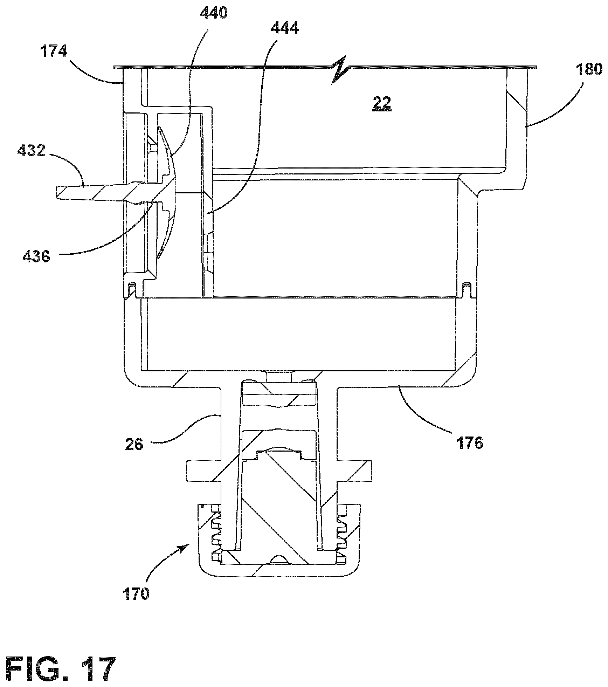

Referring still to FIGS. 16 and 17, the first and second umbrella valves 432, 434 extend through the first and second through-holes 436, 438, respectively, to control fluid communication with the reservoirs 22, 24 and the external area. Each of the first and second umbrella valves 432, 434 includes a flexible head 440 disposed within the supply tank 56. The flexible heads 440 are arced or shallow domes that extend around the through-holes 436, 438 and are configured to engage an inner surface of the inner wall 178 to seal the through-holes 436, 438.

The supply tank 56 includes separating walls 444 extending from the inner wall 178 then toward the bottom wall 176 to form cavities around the through-holes 436, 438 and the umbrella valves 432, 434. The separating walls 444 may define an aperture and/or an open bottom to provide fluid communication between the areas around the umbrella valves 432, 434 and the remainder of the reservoirs 22, 24. The separating walls 444 may be advantageous for allowing movement of the flexible heads 440, as well as reducing the liquid surrounding the umbrella valves 432, 434 and managing pressure in the supply tank 56.

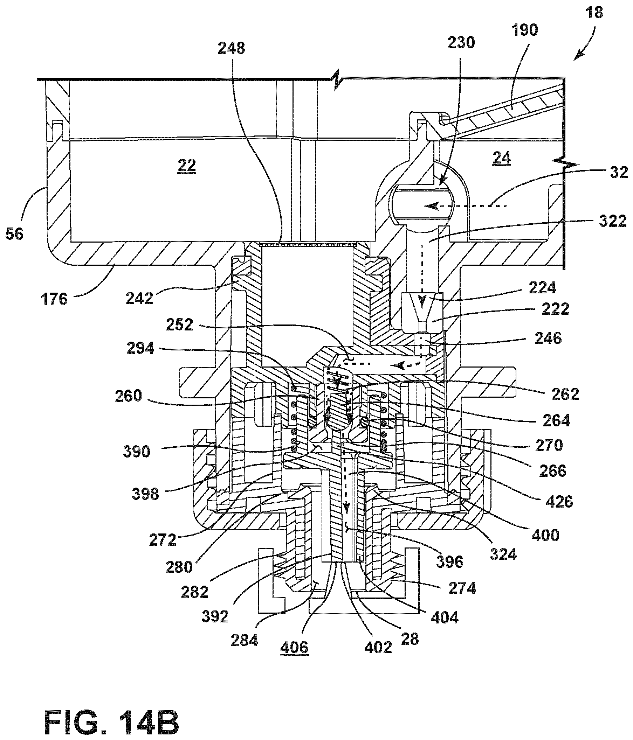

The umbrella valves 432, 434 are configured to flex or elastically deform to move away from the inner surface and open the through-holes 436, 438, allowing air to flow through the through-holes 436, 438 and into the respective reservoir 22, 24 when the pump 20 (FIG. 1) is activated. When the supply tank assembly 18 initially mates with the receiver 36, the umbrella valves 432, 434 cover or close the through-holes 436, 438 to retain the liquids in the supply tank assembly 18. The liquids may flow at least partially along the respective flow path 30, 32 (see FIGS. 11A, 11B, 14A, and 14B) due to gravitational forces but are generally retained in the supply tank assembly 18. This is generally due to pressure equilibrium inside and out of the supply tank 56. When the pump 20 (FIG. 1) is activated, the pump 20 is configured to draw one or both of the liquids out of the supply tank assembly 18, reducing pressure in the supply tank 56. The reduced pressure causes the flexible heads 440 of the umbrella valves 432, 434 to deform and uncover or open the through-holes 436, 438, allowing air to enter the supply tank 56.

The air entering the supply tank 56 replaces the liquids that are drawn out of the supply tank 56 by the pump 20 (FIG. 1). In other words, the air is drawn into the supply tank 56 to fill the space left by the liquids that are pumped out of the supply tank 56. This results in a dynamic balance between the inside of the supply tank 56 and the area external to the supply tank 56. Further, consistent pressure is formed and retained, and this dynamic balance during the pumping process assists with maintaining a stable mixing ratio between the first and second liquids as the pump 20 draws both the first and second liquids out of the supply tank 56. It is contemplated that when the pump 20 draws a single liquid from the supply tank 56 and not the second liquid, as described herein, the one umbrella valve 432 may flex to allow air into the first reservoir 22 while the other umbrella valve 432 may continue to seal the through-hole 438 as liquid is not being removed from the second reservoir 24.

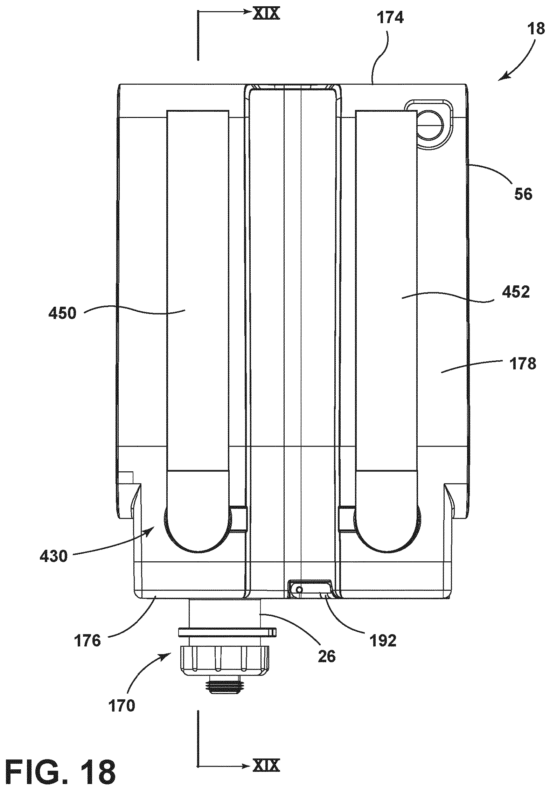

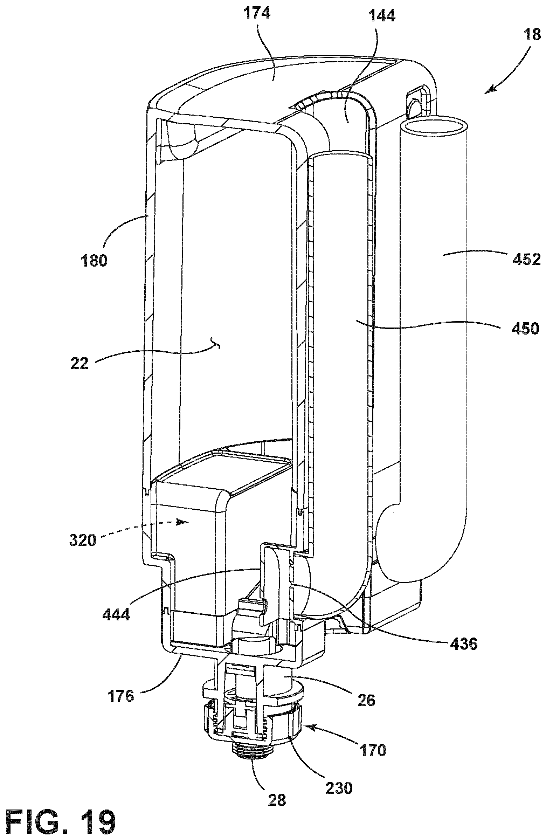

One or both of the umbrella valves 432, 434 may be omitted and replaced with air tubes 450, 452 as illustrated in FIGS. 18 and 19. The air tubes 450, 452 may surround the through-holes 436, 438 (FIG. 16) on an outer surface of the inner wall 178 of the supply tank 56. The air tubes 450, 452 can extend from the through-holes 436, 438 and along the inner wall 178 toward the top wall 174 of the supply tank 56. The through-holes 436, 438 may remain open when the pump 20 (FIG. 1) is active and inactive. When the supply tank assembly 18 initially engages the receiver 36, the air tubes 450, 452 allow for a pressure balance between the interior of the supply tank 56 and the area external to the supply tank 56 prior to the pumping process. The liquids may flow at least partially along the flow paths 30, 32 and/or into the air tubes 450, 452 upon engagement with the receiver 36.

Once the pump 20 (FIG. 1) is activated, the pump 20 may initially draw the liquid from the air tubes 450, 452 and/or from the reservoirs 22, 24, which, consequently, draws air through the air tubes 450, 452 and into the supply tank 56 to replace the liquids pumped from the supply tank 56. The air tubes 450, 452 allow for a dynamic pressure balance with consistent air being drawn into the supply tank 56 as the pump 20 continually draws the liquids from the supply tank 56. Additionally, similar to the umbrella valves 432, 434 (FIG. 16 and 17), the air tubes 450, 452 assist with retaining a stable mixing ratio between two liquids being drawn out of the supply tank 56.

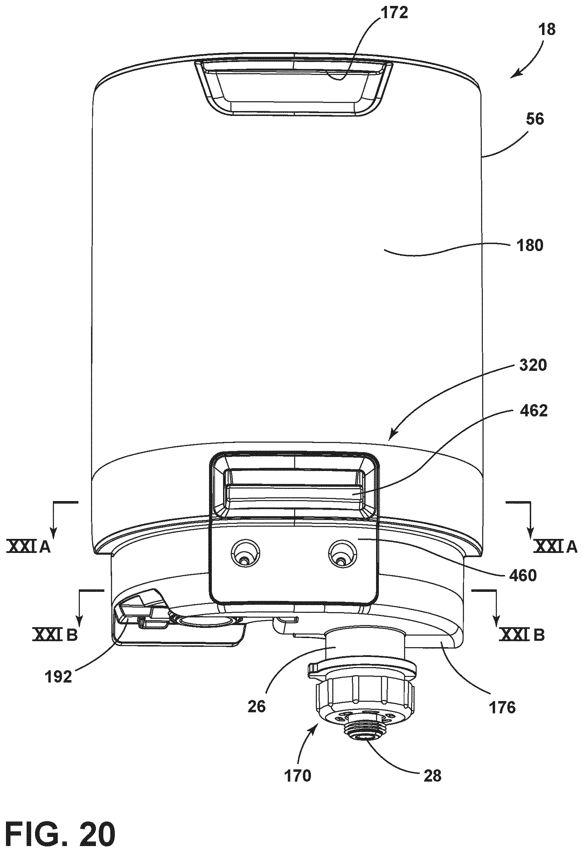

Referring to FIGS. 20-21B, the supply tank assembly 18 includes the switch assembly 320 for further controlling the flow of the second liquid. The switch assembly 320 is configured to block the second flow path 32 upstream of the plunger 34, 334 (see FIGS. 10B, 14B) to reduce or prevent the second liquid from flowing into the cap assembly 170. The switch assembly 320 allows the supply tank assembly 18 to be used in a first or single-dispensing mode, where first liquid alone is dispensed from the supply tank 56, and a second or dual-dispensing mode, where both first and second liquids are dispensed for the cleaning process.

The switch assembly 320 includes a switch cover 460 coupled to the supply tank 56 and a switch 462 operably coupled to the switch cover 460. The switch 462 is operable between a first or single-dispensing position, which retains the second liquid in the second reservoir 24, and a second or dual-dispensing position, allowing the flow of the second liquid from the second reservoir 24. The switch assembly 320 is disposed within or otherwise controls the second flow path 32 within the supply tank 56 upstream of the cap assembly 170 and the neck 26. Accordingly, when the switch assembly 320 is in the dual-dispensing position, the second liquid is configured to flow through the cap assembly 170 and the supply tank assembly 18 dispenses both first liquid and second liquid for the cleaning process. When the switch assembly 320 is in the single-dispensing position, the second liquid is generally retained in the second reservoir 24 and the supply tank assembly 18 dispenses first liquid without the second liquid regardless of the plug 264 and/or plunger 34, 334 (see FIGS. 10B, 14B) being in the opened position.

The switch 462 is on an outer portion of the supply tank assembly 18 to allow the user to engage and move the switch 462 between the dual-dispensing position and the single-dispensing position, which may also be referred to as a single-tank or single-reservoir position. The location of the switch 462 allows the switch 462 to be manipulated by the user when the supply tank assembly 18 is supported on the housing 12 (FIG. 2). The switch 462 is operably coupled to a piston 464, such as via link(s) or block(s) that translate movement of the switch 462 (typically up and down) to movement of the piston 262 (typically out and in). The piston 464 has a first end rotatably coupled to the supply tank 56. A second end of the piston 464 is configured to slidably engage a guide wall 466. The second end of the piston 464 may include an engagement member 468, such as an elastomeric cap (e.g., rubber or similar material) to facilitate the sliding engagement of the piston 464 along the guide wall 466.

A biasing member 470, illustrated as a coil spring, is operably coupled to the piston 464 to bias the piston 464 toward the guide wall 466. The movement of the switch 462 is configured to rotate the piston 464 and slide the engagement member 468 of the piston 464 along the guide wall 466. The movement of the switch 462 adjusts the piston 464 laterally between two notched regions 472, 474 of the guide wall 466. The notched regions 472, 474 retain the second end of the piston 464 fully in the dual-dispensing position and the single-dispensing position, respectively, and the portion of the guide wall 466 between the two notched regions 472, 474 is configured to facilitate movement toward the notched region(s) 472, 474 by moving the piston 464 against a biasing force of the biasing member 470. The biasing force of the biasing member 470 also assists with retaining the piston 464 in the notched regions 472, 474.

The piston 464 is coupled with a valve block 476, and movement of the piston 464 along the guide wall 466 is configured to move the valve block 476 relative to an inlet 478 of the guide channel 322 (FIG. 14B) and a block guide 480. The inlet 478 is in fluid communication with and/or included in the reservoir outlet 224. The valve block 476 is disposed and movable within the block guide 480 to allow the valve block 476 to control the flow of the second liquid from the second reservoir 524. An inner end of the valve block 476 may include an engagement member 482, such as an elastomeric cap (e.g., rubber or similar material) to selectively seal and open the inlet 478, as well as assist in providing a seal between the valve block 476 and the guide 480.

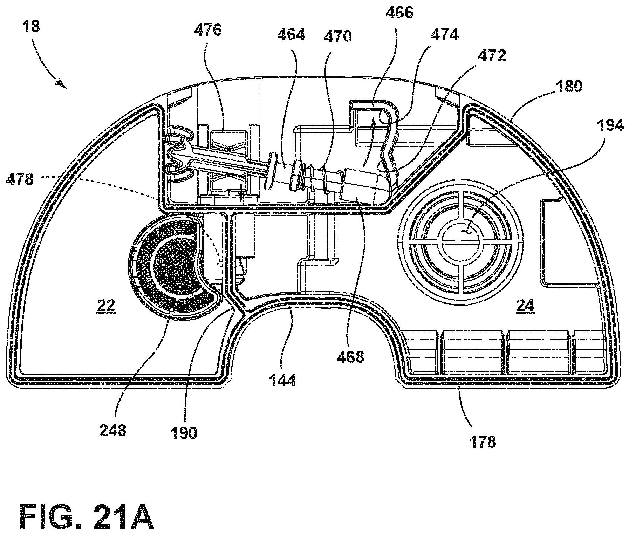

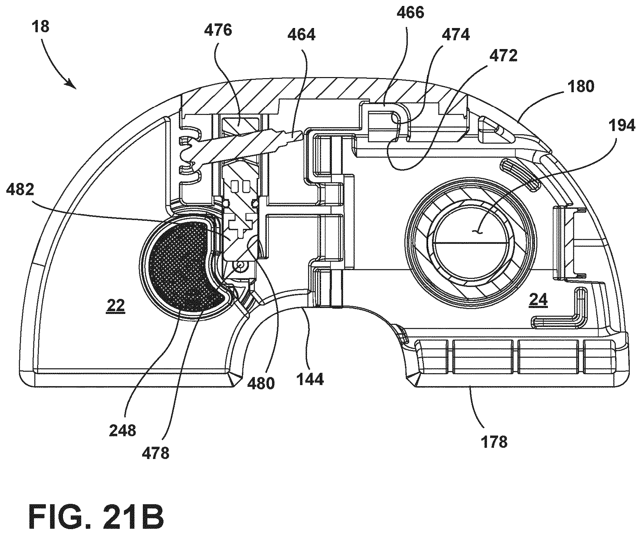

When the piston 464 is in the notched region 472 and the switch assembly 320 is in the dual-dispensing position, the valve block 476 is spaced from the inlet 478, allowing the second liquid to flow into the guide channel 322, as illustrated in FIGS. 21A and 21B. When the piston 464 is in the opposing notched region 474 and the switch assembly 320 is in the single-dispensing position, the valve block 476 covers or blocks the inlet 478, reducing or preventing the second liquid from flowing into the guide channel 322 and, therefore, retaining the second liquid in the second reservoir 24.

With reference to FIGS. 6-21B, the supply tank assembly 18 uses the plunger 34, 334, the plug 264, and/or the switch assembly 320 to control the flow of the second liquid and the first liquid from the supply tank assembly 18. The cleaning apparatus 10 can include a single receiver 36 and a single pump 20 to draw one or two types of liquids from the supply tank assembly 18. The first liquid and the second liquid are concurrently dispensed but retained separately in the supply tank assembly 18 as the first flow path 30 and the second flow path 32 are separate paths through the supply tank assembly 18. The first liquid flows around the plunger 34, 334, while the second liquid flows around the plug 264 and through the plunger 34, 334. The supply tank assembly 18 is configured to dispense the first liquid for use in the single-dispensing mode and both first liquid and second liquid in the dual-dispensing mode, where the two liquids are mixed outside of the supply tank assembly 18 to form the mixed cleaning solution.

Further, the supply tank assembly 18 may provide predefined ratios of first liquid and second liquid. The supply tank assembly 18 may be pre-set for the amount of first liquid, the amount of second liquid, and the ratio between the second liquid and first liquid dispensed. For example, the size of the first cap inlet 244 and the second cap inlet 246 may determine, at least partially, the amount of liquid that can flow into the cap assembly 170 to be dispensed by determining a flow rate of the liquids therethrough. In another non-limiting example, different dosing may be provided, for example, by different sized openings 220 and reservoir outlets 224 fluidly coupling the reservoirs 22, 24 with the cap assembly 170. Additional or alternative components for controlling ratio of the first liquid and the second liquid may be used without departing from the teachings herein. Further, multiple supply tank assemblies 18 that dispense different ratios of the first liquid and/or the second liquid can be interchangeably used with the cleaning apparatus 10.

Both the single-dispensing mode and the dual-dispensing mode may be considered to dispense different ratios of the first and second liquids for form combined cleaning solutions or formulas of different concentrations. For example, in the single-dispensing mode, the second liquid may be at about 0% of the resulting cleaning solution, and in the dual-dispensing mode the second liquid may be above about 0% of the resulting cleaning solution.

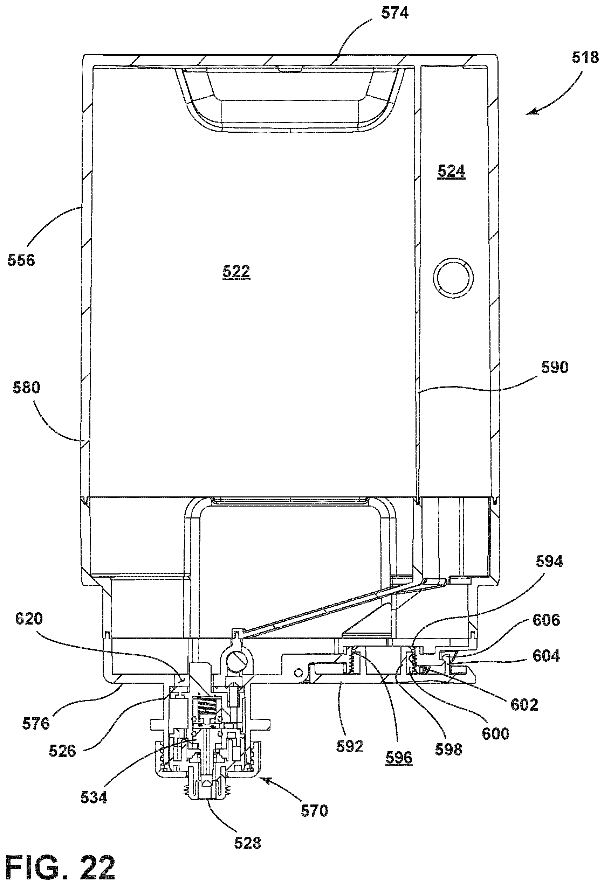

Referring to FIGS. 22-27, an additional or alternative configuration of a supply tank assembly 518 is illustrated. The supply tank assembly 518 illustrated in FIGS. 22-27 is similar and functions similarly to the supply tank assembly 18 illustrated in FIGS. 6-21B with the differences being generally in the structure and function of the dispensing components. The supply tank assembly 518 includes first and second reservoirs 522, 524 for housing the first and second liquids. The supply tank assembly 518 includes a neck 526 and a dispensing outlet 528. A first flow path 530 for the first liquid is defined from the first reservoir 522 to the dispensing outlet 528, and a second flow path 532 for the second liquid is defined from the second reservoir 524 to the dispensing outlet 528. The supply tank assembly 518 includes a plunger 534 at least partially disposed in the neck 526.

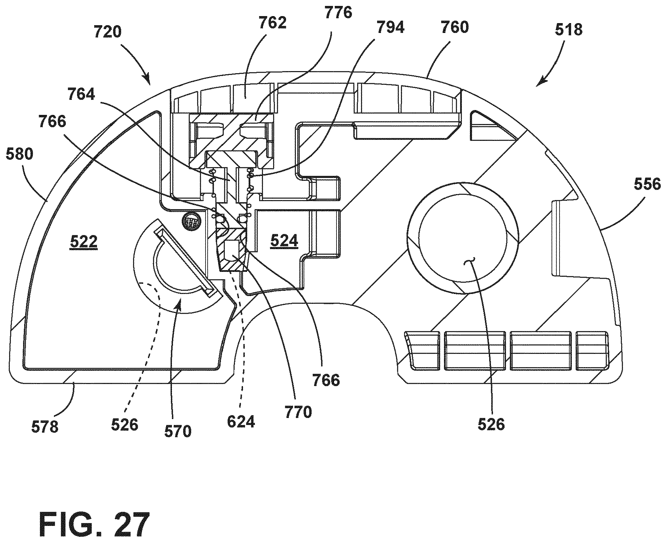

The supply tank assembly 518 includes a supply tank 556 for housing the first and second liquids, the neck 526, and a cap assembly 570 for engaging the receiver 36. The dispensing outlet 528 and the first and second paths 530, 532 may be formed by one or both of the neck 526 and the cap assembly 570. The supply tank 556 defines the first reservoir 522 and the second reservoir 524 for separately housing the first and second liquids. The supply tank 556 includes a top wall 574, a bottom wall 576, an inner wall 578 (see FIG. 27), and an outer wall 580. The bottom wall 576 is configured to be positioned on the first seat 130 (FIG. 3).

The cap assembly 570 also includes an engagement feature 582, which at least partially defines or includes the dispensing outlet 528. The engagement feature 582 includes a dispensing channel 584 through which the first and second liquids can flow to the dispensing outlet 528.

The neck 526 extends from the bottom wall 576, forming a cylindrical lower extension to the supply tank 556. Each of the first and second reservoirs 522, 524 are in fluid communication with the neck 526 and the cap assembly 570. A dividing wall 590 extends through the supply tank 556 to form the first and second reservoirs 522, 524. The supply tank assembly 518 includes a cover 592 operably coupled to the bottom wall 576. The cover 592 is configured to selectively provide access to a reservoir inlet 594 and to seal the second reservoir 524. The supply tank 556 defines a receiving channel 596, and the cover 592 includes a projection 598 that extends into the receiving channel 596. A seal 600 is disposed about the projection 598 to engage a wall 602 forming the receiving channel 596. Additionally, the cover 592 includes a latch 604 that engages a notch 606 on the supply tank 556 to retain the cover 592 in the closed state.

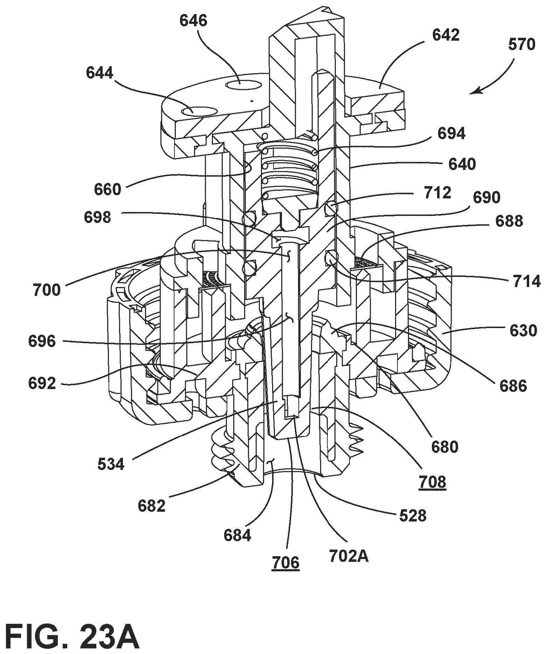

Referring to FIGS. 23A-24B, the cap assembly 570 is selectively coupled to the neck 526. When the cap assembly 570 is removed, the neck 526 includes an opening 620 that can be used to add the first liquid to the first reservoir 522. The bottom wall 576 can include or define a reservoir outlet 624 for allowing or directing the second liquid from the second reservoir 524 into the neck 526. A covering may be used to cover the reservoir outlet 624 to reduce or prevent the first liquid being added into the opening 620 from flowing into the reservoir outlet 624.

The cap assembly 570 includes a cap 630 for engaging the neck 526 and a guide body 640 operably coupled to the cap 630. When the cap 630 engages the neck 526, the guide body 640 is inserted into the neck 526 with the cap assembly 570 substantially closing the opening 620. An insertion end 642 of the cap assembly 570 defines a first cap inlet 644 for receiving the first liquid from the first reservoir 522 and a second cap inlet 646 for receiving the second liquid from the second reservoir 524 via the reservoir outlet 624.

The insertion end 642 of the cap assembly 570, as illustrated, has a lowered portion that abuts the bottom wall 576 to align the reservoir outlet 624 with the second cap inlet 646 and the first cap inlet 644 with the opening into the first reservoir 522. The cap inlets 644, 646 may be aligned on a single plane (illustrated as a horizontal plane) to receive both liquids into the cap assembly 570 concurrently. The size of the cap inlets 644, 646 may control the ratio of the first liquid and the second liquid by controlling the flow rate as described herein. A raised portion extends beyond the bottom wall 576 and into the first reservoir 522. The raised portion may mate with a portion of the opening into the first reservoir 522 to operate as a locating feature for aligning the cap inlets 644, 646 to receive the respective liquid.

The cap assembly 570 at least partially includes or defines a first chamber 650 in fluid communication with the first cap inlet 644 and a second chamber 652 in selective fluid communication with the second cap inlet 646. The first chamber 650 may be defined by the cap assembly 570 or between the cap assembly 570 and an inner surface of the neck 526. The first chamber 650 extends from the first cap inlet 644 and adjacent to or around an internal housing 660 of the cap assembly 570. As illustrated, the second chamber 652 extends vertically from the second cap inlet 646 and an inlet channel 662 extends horizontally from the second chamber 652 toward the internal housing 660 of the cap assembly 570. The first chamber 650 and the second chamber 652 remain separate such that the first liquid and second liquid are retained separately in the cap assembly 570 and/or the neck 526 as the liquids flow toward the dispensing outlet 528.

Referring to FIGS. 23A-24B, the cap assembly 570 includes the plunger 534, which is operable between a sealed position and an opened position. The plunger 534 is configured to provide fluid communication between the first and second reservoirs 522, 524 and the dispensing outlet 528 simultaneously. A secondary component similar to the plug 264 (FIG. 6) may be omitted in this configuration. The cap assembly 570 includes or defines a plunger seat 680 and an engagement feature 682 with a dispensing channel 684. The engagement feature 682 generally includes or defines the dispensing outlet 528 when the cap assembly 570 is coupled to the neck 526. A sealing feature 686 may extend around the opening into the dispensing channel 684 of the engagement feature 682, and the plunger 534 can engage the sealing feature 686 when in the sealed position to generally block the first flow path 530 upstream of the dispensing channel 684. A filter or screen 688 may be disposed proximate to a top of the plunger seat 680.

The plunger 534 includes a stopper portion 690 and a guide portion 692 extending from the stopper portion 690. The stopper portion 690 extends across the plunger seat 680 and can engage the plunger seat 680 to at least substantially block the first flow path 530. The guide portion 692 extends into the engagement feature 682. The plunger 534 is operably coupled with a biasing member 694, which is illustrated as a coil spring. The biasing member 694 may be disposed in the internal housing 660, within the plunger 534, or both. The biasing member 694 biases the plunger 534 toward the sealed position.

The plunger 534 defines an interior channel 696, which includes a receiving portion 698 and a dispensing portion 700. The receiving portion 698 extends in a first direction through the stopper portion 690 and the dispensing portion 700 extends in a second direction (normal to the first direction) along the guide portion 692 toward the dispensing outlet 528. In this way, the receiving portion 698 and the dispensing portion 700 generally form a T-shaped interior channel 696 in the plunger 534. The receiving portion 698 is illustrated as extending across the width of the plunger 534. It is contemplated that the interior channel 696 may form an "L" shape, with the receiving portion 698 extending to a center of the plunger 534 and not the entire width of the plunger 534. The plunger 534 defines at least one outlet opening 702, which is illustrated as two outlet openings 702A, 702B on opposing sides of the guide portion 692 at a distal end 704 and that are in fluid communication with the interior channel 696. In this configuration, an end surface 706 of the plunger 534 may be a continuous or solid surface, and the outlet openings 702 are defined by a side surface 708 of the guide portion 692 proximate to the end surface 706.

The stopper portion 690 also includes a blocking segment 710 extending within the internal housing 660, toward the insertion end 642. When the plunger 534 is in the closed position, the blocking segment 710 of the plunger 534 extends across an end opening of the inlet channel 662 to block the second liquid from flowing out of the inlet channel 662. The plunger 534 also includes two sealing features 712, 714, illustrated as O-rings 712, 714, which assist in sealing and blocking the second liquid flowing from the inlet channel 662.

The O-rings 712, 714 are disposed on opposing sides of the receiving portion 698. As illustrated, the first O-ring 712 is disposed above the receiving portion 698 and the second O-ring 714 is disposed below the receiving portion 698. When the plunger 534 is in the closed position, the blocking segment 710 covers the inlet channel 662 and the first O-ring 712 is disposed below the inlet channel 662, thereby blocking and sealing the end of the inlet channel 662 and reducing or preventing fluid communication with the internal housing 660.

When the supply tank assembly 518 engages the receiver 36, the receiver 36 is configured to engage the end surface 706 of the plunger 534 to move the plunger 534 against the biasing force of the biasing member 694 and toward the insertion end 642 of the cap assembly 570. The plunger 534 is moved away from the sealing feature 686 to open the first flow path 530, allowing the first liquid to flow from the first chamber 650, around the plunger 534, and through the dispensing channel 684 to the dispensing outlet 528. Additionally, the movement of the plunger 534 aligns the receiving portion 698 of the interior channel 696 with the inlet channel 662 to provide fluid communication therebetween. When in the opened position, the O-rings 712, 714 are disposed on opposing sides of the inlet channel 662 to provide a seal around an interface between the inlet channel 662 and the interior channel 696.

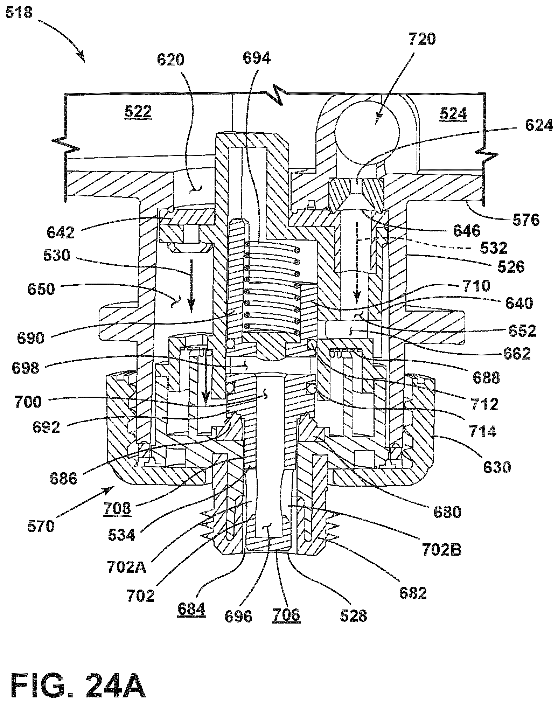

As illustrated in FIGS. 23A and 24A, with the plunger 534 in the opened position, the first flow path 530 and the second flow paths 530, 532 are opened. The first flow path 530 is defined from the first reservoir 522, through the first cap inlet 644, through the first chamber 650, around the plunger 534, through the dispensing channel 684, and to or through the dispensing outlet 528. The second flow path 532 is defined from the second reservoir 524, through the reservoir outlet 624, through the second cap inlet 646, through the second chamber 652, through the inlet channel 662, through the receiving portion 698 and the dispensing portion 700 of the interior channel 696 of the plunger 534, through the outlet openings 702, and to or through the dispensing outlet 528.

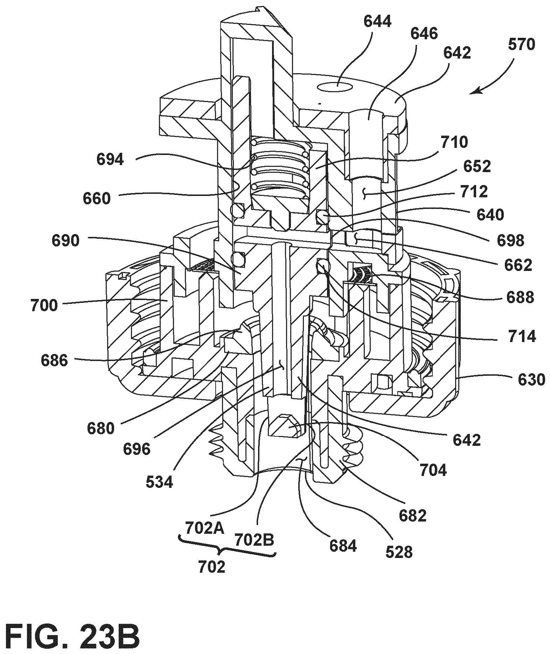

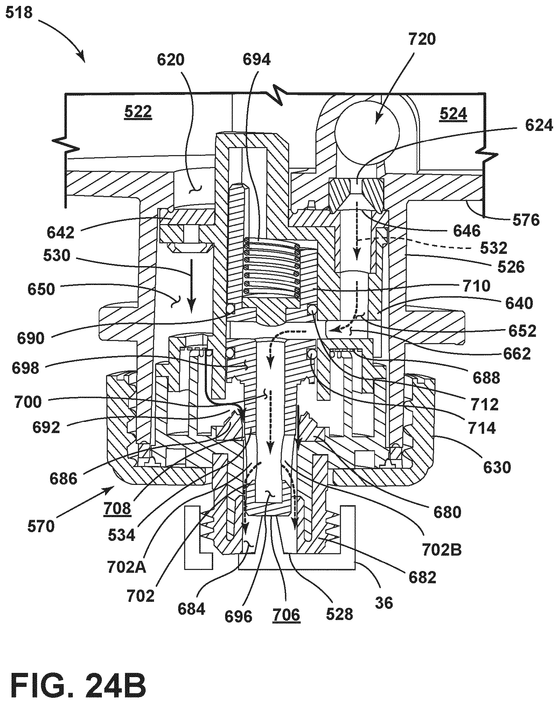

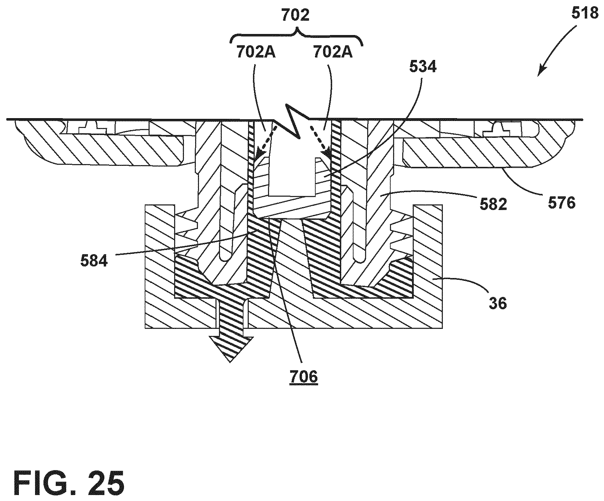

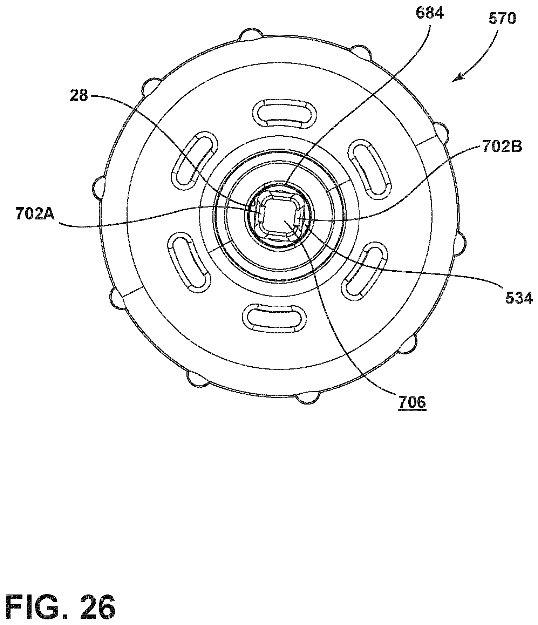

As illustrated in FIGS. 23B and 24B, and with reference to FIGS. 25 and 26, the first liquid flows around the plunger 534 and into the receiver 36 as the second liquid flows through the two outlet openings 702 and through the dispensing outlet 528 into the receiver 36 to mix with the first liquid. At least a substantial amount or all of the mixing occurs at the receiver 36 outside of the supply tank assembly 518. A minimal amount of mixing may occur within the engagement feature 682 of the cap assembly 570 between the outlet openings 702 and the dispensing outlet 528 where both the first liquid and the second liquid flow out of the supply tank assembly 518. The supply tank assembly 518 is configured to be positioned on the first seat 130 (FIG. 3) and to mate with the receiver 36. The receiver 36 engages with the plunger 534, moving the plunger 534 to the opened position allowing fluid communication between the first and second reservoirs 522, 524 and the dispensing outlet 528 to concurrently dispense the first and second liquids to be drawn by the pump 20 to be used for the cleaning process.

The cap assembly 570 engages the receiver 36 and includes at least a majority of the features that control the dispensing and function of the supply tank assembly 518. For example, the cap assembly 570 includes the plunger 534 for opening and closing the first flow path 530 at the plunger seat 680 and closing the second flow path 532 at the inlet channel 662, the biasing members 694 for biasing the plunger 534, the cap inlets 644, 646 for controlling the flow rate of the first and second liquids, and at least a portion of the first and second chambers 650, 652 for guiding the liquids separately. The cap assembly 570, including these controlling components, is removable from the supply tank assembly 518.

Referring to FIG. 27, an additional or alternative configuration of the switch assembly 720 is illustrated. The switch assembly 720 is configured to control the second flow path 532 (FIG. 24B) upstream of the cap assembly 570. The switch assembly 720 allows the supply tank assembly 518 to be used in the single-dispensing mode by dispensing first liquid alone and the dual-dispensing mode by dispensing first liquid and second liquid. The switch assembly 720 includes a switch cover 760 coupled to the supply tank 556 and a switch 762 operably coupled to the switch cover 760. The switch 762 is operable between a first or single-dispensing position to retain the second liquid in the second reservoir 524, and a second or dual-dispensing position, allowing the flow of the second liquid from the second reservoir 524, and. The switch assembly 720 is disposed within or otherwise controls the second flow path 532 within the supply tank 556, upstream of the neck 526.

The switch assembly 720 includes the switch 762 rotatably coupled to the supply tank 556 in an outer recess to move between the single-dispensing position and the dual-dispensing position. The switch assembly 720 also includes a piston 764 disposed and movable within a piston guide 766 that forms an opening through the outer wall 580 of the supply tank 556 to allow the piston 764 to extend into the second reservoir 524. An inner end of the piston 764 may include an engagement member 770, such as an elastomeric cap (e.g., rubber or similar material) to selectively seal and open the reservoir outlet 624, as well as assist in providing a seal between the piston 764 and the guide 766.

The switch 762 is operably coupled to the piston 764 via a connector 776, which is operably coupled to an outer end of the piston 764. A biasing member 794, illustrated as a coil spring, operably engages the connector 776 and the piston 764. As illustrated, the biasing member 794 extends between the connector 776 and the outer wall 580 of the supply tank 556 and biases the connector 776 and, consequently, the piston 764 away from the reservoir outlet 624. The switch 762 is configured to move the connector 776 against the biasing force of the biasing member 794 to move the piston 764 further into the second reservoir 524 and block the reservoir outlet 624 when in the single-dispensing position. When the switch 762 is in the dual-dispensing position, the biasing force of the biasing member 794 is configured to move the connector 776 and the piston 764 away from the reservoir outlet 624, allowing the second liquid to flow through the reservoir outlet 624.

With reference to FIGS. 22-27, the supply tank assembly 518 uses the plunger 534 and the switch assembly 720 to control the flow of the first and second liquids from the supply tank assembly 518. The cleaning apparatus 10 can include a single receiver 36 and a single pump 20 (FIG. 1) to draw one or two types of liquids from the supply tank assembly 518. The first liquid and the second liquid are concurrently dispensed but retained at least substantially separate in the supply tank assembly 518. The first liquid flows around the plunger 534, while the second liquid flows through the plunger 534. The supply tank assembly 518 uses the single plunger 534 to open and close the flow paths 530, 532 through the cap assembly 570.

Further, the supply tank assembly 518 may provide predefined ratios of the first liquid and the second liquid. The supply tank assembly 518 may be pre-set for the amount of first liquid, the amount of second liquid, and the ratio between the first liquid and the second liquid. For example, the size of the first cap inlet 644 and the second cap inlet 646 may determine, at least partially, the amount of liquid that can flow into the cap assembly 570 to be dispensed.

Moreover, the supply tank assembly 518 may include one or both of the umbrella valves 432, 434 (FIGS. 16 and 17) and the air tubes 450, 452 (FIGS. 18 and 19) to control pressure equilibrium during the pumping process. The umbrella valves 432, 434 and/or air tubes 450, 452 allow the air to replace the dispensed liquid, while also assisting with stabilizing the mixing ratio of the two liquids.

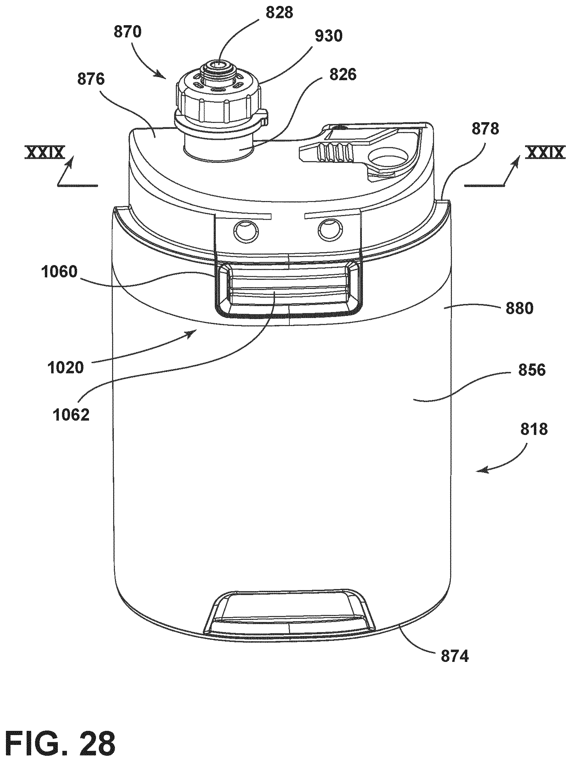

Referring to FIGS. 28-33, an additional or alternative configuration of a supply tank assembly 818 is illustrated. The supply tank assembly 818 illustrated in FIGS. 28-33 is similar and functions similarly to the supply tank assembly 18 illustrated in FIGS. 6-21B and the supply tank assembly 518 in FIGS. 22-27 with the differences being generally in the structure and function of the dispensing components, including mixing within the supply tank assembly 818.

The supply tank assembly 818 includes first and second reservoirs 822, 824 for housing the first and second liquids. The supply tank assembly 818 includes a neck 826 and a dispensing outlet 828. A first flow path 830 for the first liquid is defined from the first reservoir 822 to the dispensing outlet 828, and a second flow path 832 for the second liquid is defined from the second reservoir 824 to the dispensing outlet 828. The supply tank assembly 818 includes a plunger 834 at least partially disposed in the neck 826.

The supply tank assembly 818 includes a supply tank 856 for housing the liquids, the neck 826 for providing fluid communication to the dispensing outlet 828, and a cap assembly 870 for engaging the receiver 36. The supply tank 856 defines the first reservoir 822 and the second reservoir 824 for separately housing the two liquids. The supply tank 856 includes a top wall 874, a bottom wall 876, an inner wall 878, and an outer wall 880. The bottom wall 876 is configured to be positioned on the first seat 130 (FIG. 3).

The neck 826 extends from the bottom wall 876, forming a cylindrical extension to the supply tank 856. Each of the first and second reservoirs 822, 824 are in fluid communication with the neck 826 and the cap assembly 870. A dividing wall 890 extends through the supply tank 856 to form the first and second reservoirs 822, 824. The supply tank assembly 818 includes a cover 892 operably coupled to the bottom wall 876. The cover 892 is configured to selectively provide access to a reservoir inlet 894 and to seal the second reservoir 824. This cover 892 is smaller and is generally formed of an elastomeric material to open and close the reservoir inlet 894. The cover 892 includes an elastically deformable insert or projection 898 that extends through the reservoir inlet 894, which engages the bottom wall 876 to seal the reservoir inlet 894. The projection 898 may define a groove 904 to receive an edge of the bottom wall 876 to retain the cover 892 in the reservoir inlet 894.

The cap assembly 870 is selectively coupled to the neck 826. When the cap assembly 870 is removed, the neck 826 may form an opening 920 for adding the first liquid to the first reservoir 22. A projection 922 extends into the opening 920 and defines a reservoir outlet 924 for directing the second liquid from the supply tank 856 and into the cap assembly 870 and/or the neck 826. The supply tank 856 defines a guide channel 926 that extends from the second reservoir 824 and into the neck 826. The reservoir outlet 924 is formed at an end of the guide channel 926. The bottom wall 876 of the supply tank 856 can also define an additional reservoir outlet 928 for directing the first liquid from the first reservoir 822 and toward the cap assembly 870 and/or the neck 826. The supply tank 856 and/or the cap assembly 870 may include a channel for directing the first liquid from the reservoir outlet 928. The size of the guide channel 926 and the reservoir outlets 894, 928 can control the amount of liquid dispensed to the cap assembly 870 and can, therefore, control the amount and ratio of the first and second liquids.

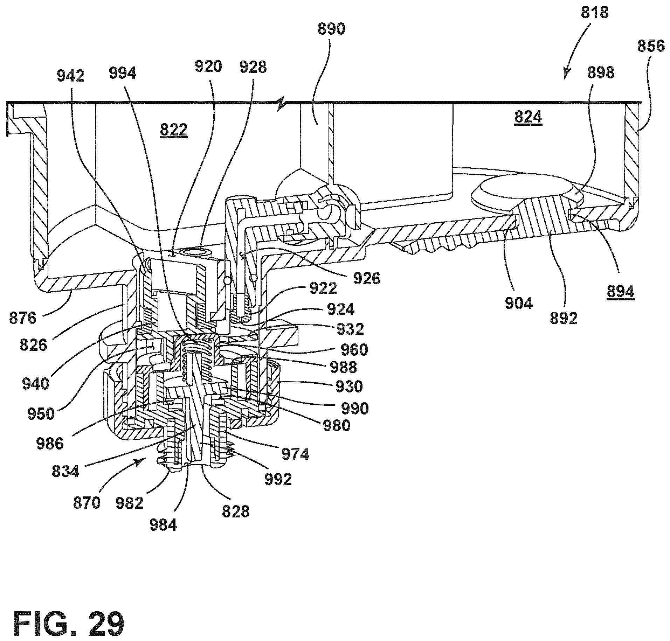

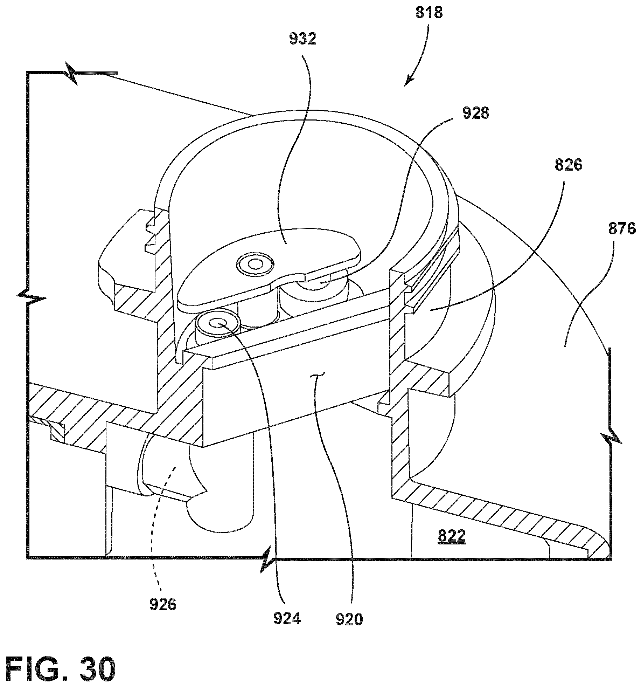

Referring still to FIG. 29, as well as FIG. 30, the cap assembly 870 includes a cap 930 for selectively engaging the neck 826. When the cap 930 disengages the neck 826, the opening 920 is accessible. A cover plate 932 may be operably coupled to the neck 826 and/or the projection 922. The cover plate 932 may allow the second liquid to flow from the reservoir outlet 894 while blocking or deflecting most or all of the first liquid from entering the second reservoir 824 when added into the supply tank 856 via the opening 920.

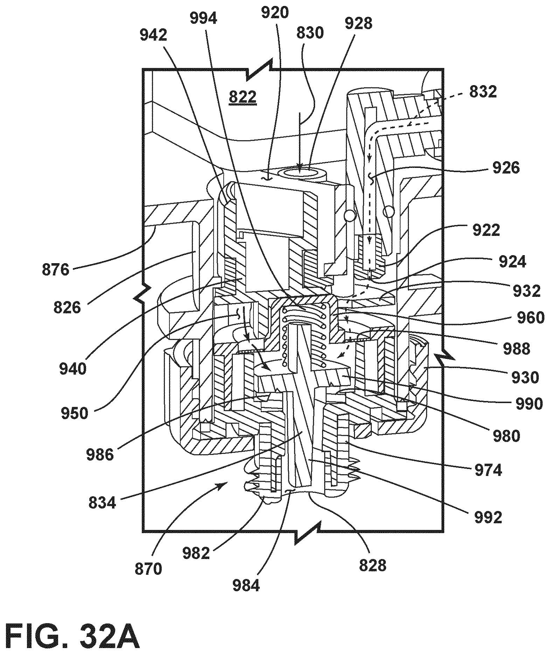

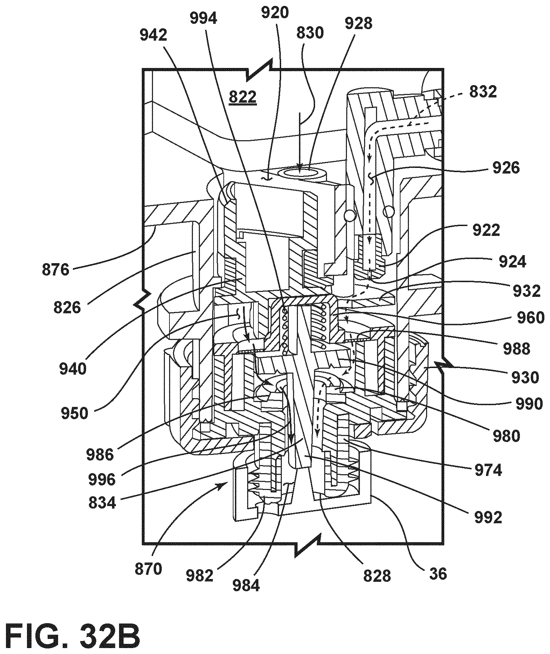

The cap assembly 870 includes a guide body 940 operably coupled to the cap 930. When the cap 930 engages the neck 826, the guide body 940 is inserted into the neck 826 to substantially close the opening 920 to form the dispensing outlet 828, forcing the first liquid to exit the first reservoir 822 via the reservoir outlet 928 rather than the opening 920. The dispensing outlet 828 and the first and second paths 830, 832 (FIGS. 32A, 32B) may be formed by one or both of the neck 826 and the cap assembly 870. An insertion end 942 of the cap assembly 870, as illustrated, has a lowered portion below the reservoir outlets 894, 924, and a raised portion that extends beyond the bottom wall 876 and into the first reservoir 822. The raised portion may mate with a portion of the opening into the first reservoir 822 to operate as a locating feature for aligning a dosing chamber 950 to receive the first and second liquids. The cap assembly 870 at least partially defines the dosing chamber 950. The dosing chamber 950 may be defined entirely by the cap assembly 870 or may be defined between the cap assembly 870 and an inner surface of the neck 826. Each of the reservoir outlets 894, 928 are in fluid communication with the dosing chamber 950 for the dosing chamber 950 to receive doses of the first and second liquids.

The cap assembly 870 includes an internal housing 960 that extends into the dosing chamber 950, and the plunger 834 is disposed between the internal housing 960 and a dispensing end 974 of the cap assembly 870. The cap assembly 870 includes a plunger seat 980 and an engagement feature 982 with a dispensing channel 984. When the cap assembly 870 is coupled with the neck 826, the engagement feature 982 generally includes or defines the dispensing outlet 828. A sealing feature 986 may extend around the opening into the dispensing channel 984 of the engagement feature 982, and the plunger 834 can engage the sealing feature 986 to generally block liquid from flowing through the cap assembly 870 to the dispensing outlet 828. A filter or screen 988 may be disposed proximate to a top of the plunger seat 980. When the plunger 834 is in the sealed position, the liquids are retained in the supply tank assembly 818.

The cap assembly 870 includes the plunger 834 with a stopper portion 990 and a guide portion 992 extending from the stopper portion 990. The stopper portion 990 extends across the plunger seat 980 and can engage the plunger seat 980 to at least substantially block liquid from flowing from the dosing chamber 950 to the dispensing outlet 828. The guide portion 992 extends into the engagement feature 982.

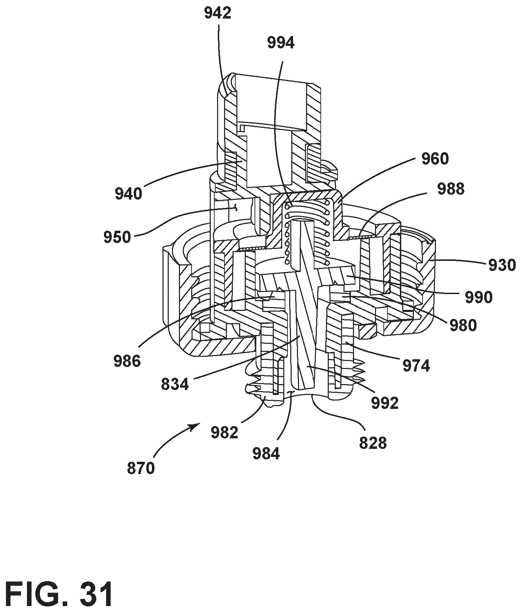

Referring to FIGS. 31-32B, the plunger 834 is operable between a sealed position and an opened position. A biasing member 994, illustrated as a coil spring, is disposed in the internal housing 960 and operably coupled with the plunger 834 to bias the plunger 834 toward the sealed position. The plunger 834 is configured to provide fluid communication between the first and second reservoirs 822, 824 and the dispensing outlet 828 simultaneously when in the opened position. Both the liquids may flow into the dosing chamber 950, around the plunger 834, and to the dispensing outlet 828. Accordingly, the plunger 834 may be a solid component free of an interior channel but may have an interior channel without departing the teachings herein. Additionally, a secondary component, similar to the plug 264 (FIG. 6) may be omitted in this configuration.

The first and second liquids are configured to flow into the dosing chamber 950 to form the mixed cleaning solution. The liquids may flow into the dosing chamber 950 due to gravitational forces, the pump 20 (FIG. 1) drawing the liquids along the respective flow paths 830, 832, or both. When the supply tank assembly 818 engages the receiver 36, the receiver 36 is configured to engage the plunger 834 to move the plunger 834 against the biasing force of the biasing member 994 and toward the insertion end 942 of the cap assembly 870. When the plunger 834 is in the opened position, the first flow path 830 and the second flow path 832 are opened. The first flow path 830 is defined from the first reservoir 822, through the reservoir outlet 928, and into the dosing chamber 950. The second flow path 832 is defined from the second reservoir 824, through the guide channel 926, through the reservoir outlet 894, and into the dosing chamber 950. The first flow path 830 and the second flow path 832 each extend around the plunger 834, through the dispensing channel 984, and to or through the dispensing outlet 828. This combined portion of the first and second flow paths 830, 832 may be considered a mixed flow path 996. The first and second liquids can both be drawn into the dosing chamber 950 together in predefined ratios to form the mixed cleaning solution. Additional mixing may occur at the receiver 36 and/or in the fluid like to the pump 20. This configuration of the supply tank assembly 818 is configured to dispense the first liquid and the mixed cleaning solution formed by the combination of the first and second liquids.

Referring to again to FIG. 28, as well as to FIGS. 32A-33, the supply tank assembly 818 also includes a switch assembly 1020 to control the second flow path 832 upstream of the cap assembly 870 and the neck 826. The switch assembly 1020 allows the supply tank assembly 818 to be used in the single-dispensing mode by dispensing first liquid alone and the dual-dispensing mode by dispensing first and second liquids as the mixed cleaning solution. The switch assembly 1020 includes a switch cover 1060 coupled to the supply tank 856 and a switch 1062 operably coupled to the switch cover 1060. The switch 1062 is operable between a first or single-dispensing position to retain the second liquid in the second reservoir 824, and a second or dual-dispensing position, allowing the flow of the second liquid from the second reservoir 824.

The switch assembly 1020 is disposed within or otherwise controls the second flow path 832 within the supply tank 856, upstream of the neck 826. In this configuration, the switch assembly 1020 can control whether the second liquid can flow into the guide channel 926. The switch 1062 is rotatably coupled to the supply tank 856 in an outer recess to move between the single-dispensing position and the dual-dispensing position. The switch assembly 1020 also includes a piston 1064 disposed and movable within a piston guide 1066 that forms an opening through the outer wall 880 of the supply tank 556. The switch 1062 is operably coupled to the piston 1064 via a connector 1076, which is operably coupled to an outer end of the piston 1064. The switch 1062 is configured to move the piston 1064 to allow the piston 1064 to extend into the second reservoir 824 and/or between the second reservoir 824 and an inlet 1078 of the guide channel 926. The piston guide 1066 may extend from the outer wall 880 in the recess to the inner wall 878. An inner end of the piston 1064 may include an engagement member 1080, such as an elastomeric cap (e.g., rubber or similar material) to selectively seal and open the inlet 1078, as well as assist in providing a seal between the piston 1064 and the guide 1066.

A biasing member 1094, illustrated as a coil spring, operably engages the connector 1076 and the piston 1064. As illustrated, the biasing member 1094 extends between the connector 1076 and the outer wall 880 of the supply tank 856 and biases the connector 1076 and, consequently, the piston 1064 away from the inlet 1078. The switch 1062 is configured to move the connector 1076 against the biasing force of the biasing member 1094 to move the piston 1064 further into the second reservoir 824 and block the inlet 1078 when in the single-dispensing position. When the switch 1062 is in the dual-dispensing position, the biasing force of the biasing member 1094 is configured to move the connector 1076 and the piston 1064 away from the inlet 1078, allowing the second liquid to flow through the inlet 1078 to the guide channel 926.

With reference to FIGS. 28-33, the supply tank assembly 818 uses the switch assembly 1020 to control the flow of the second liquid, and the plunger 834 to control the flow of the first liquid and the mixed cleaning solution from the supply tank assembly 818. The cleaning apparatus 10 can include a single receiver 36 and a single pump 20 (FIG. 1) to draw one or two types of liquids from the supply tank assembly 818. The supply tank assembly 818 uses the single plunger 834 to open and close the flow path(s) 830, 832, 996 through the cap assembly 870.

Further, the supply tank assembly 818 may provide predefined ratios of the first liquid and the second liquid. The supply tank assembly 818 may be pre-set for the amount of first liquid, the amount of second liquid, and the ratio between the second liquid and first liquid. For example, the size of the reservoir outlets 894, 928, the guide channel 926, and/or the inlet 1078 to the guide channel 926 may determine, at least partially, the amount of liquid that can flow into the cap assembly 870 to be dispensed. Further, the supply tank assembly 818 may include one or both of the umbrella valves 432, 434 (FIGS. 16 and 17) and the air tubes 450, 452 (FIGS. 18 and 19) to control pressure equilibrium during the pumping process. The umbrella valves 432, 434 and/or air tubes 450, 452 allow the air to replace the dispensed liquid, while also assisting with stabilizing the mixing ratio of the two liquids.

The cap assembly 870 engages the receiver 36 and includes at least a majority of the features that control the dispensing and function of the supply tank assembly 818. For example, the cap assembly 870 includes the plunger 834 for opening and closing the first and second flow paths 830, 832 at the plunger seat 980, the biasing members 994 for biasing the plunger 534, and at least a portion of the dosing chamber 950. The cap assembly 870, including these controlling components, is removable from the supply tank assembly 818.

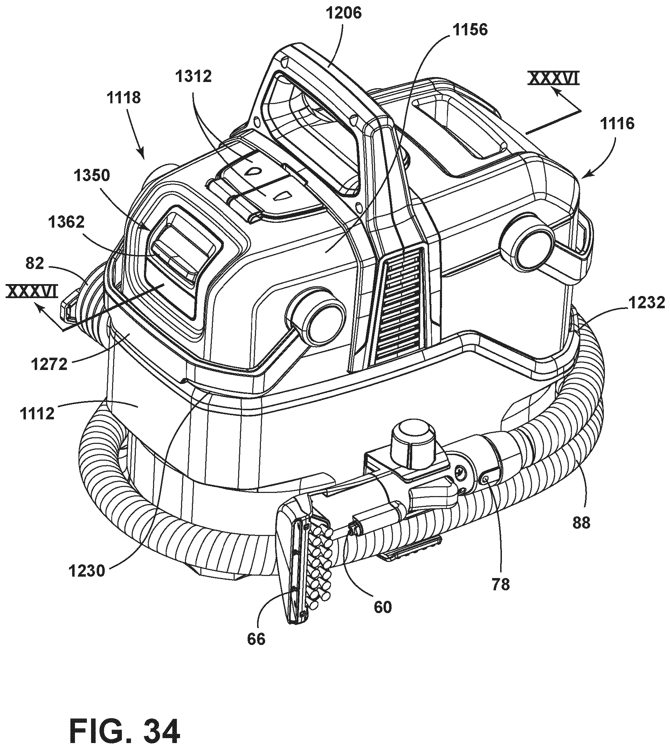

Referring to FIGS. 34-36, the exemplary cleaning apparatus 10B is illustrated, which includes a housing 1112, a suction source 1114, a recovery tank assembly 1116 in fluid communication with the suction source 1114, and a supply tank assembly 1118. The supply tank assembly 1118 includes first and second reservoirs 1122, 1124 for housing the first and second fluids or liquids, respectively. The supply tank assembly 1118 also includes a neck 1126 and a dispensing outlet 1128. A first flow path 1130 for the first liquid is defined from the first reservoir 1122 to the dispensing outlet 1128. Second and third flow paths 1132A, 1132B for the second liquid are defined from the second reservoir 1124 to the dispensing outlet 1128. Depending on the configuration of the supply tank assembly 1118, the second and third flow paths 1132A, 1132B may be utilized independently of one another and/or simultaneously.

The supply tank assembly 1118 includes a valve or plunger 1134 at least partially disposed in the neck 1126. The supply tank assembly 1118 is configured to engage a receiver 1136 operably coupled with the housing 1112 to adjust the plunger 1134 to an opened position to dispense the first liquid and a first predefined amount or a second predefined amount of the second liquid to form cleaning solutions having different ratios of the first and second liquids. The different ratios of the first and second liquids form or result in different concentrations of cleaning formulas for use in different cleaning processes.

The supply tank assembly 1118 includes a supply tank 1156 having the first and second reservoirs 1122, 1124. The supply tank assembly 1118 is a single unit that is configured to house and dispense two liquids. Accordingly, the supply tank assembly 1118 may be considered a dual-liquid dispensing or automated dosing supply tank assembly 1118. The first and second liquids are housed separately in the supply tank 1156 and are configured to form a combined cleaning solution outside of the supply tank assembly 1118. The combined solution may have a first ratio of first liquid-to-second liquid or a second ratio of first liquid-to-second liquid depending on certain states of the supply tank assembly 1118. Generally, the same amount of the first liquid is dispensed with differing amounts of the second liquid. Multiple supply tank assemblies 1118 may be used with the cleaning apparatus 10B to dispense different ratios of the two liquids to form different combined solutions. Accordingly, the supply tank assembly 1118 provides automated dosing of the two liquids at predefined ratios.

The exemplary cleaning apparatus 10B including the supply tank assembly 1118 is illustrated in FIGS. 34-36. The illustrated cleaning apparatus 10B is a portable cleaning apparatus 10B, which is similar to the cleaning apparatus 10A illustrated in FIGS. 2-4 with the primary differences being in the supply tank assembly 1118. The supply tank assembly 1118 is configured to dispense the first and second liquids concurrently or simultaneously to generally be combined outside of the supply tank assembly 1118 as described herein. In this regard, the supply tank assembly 1118 is configured to dispense both the first and second liquids from the dispensing outlet 1128 concurrently to be mixed at the receiver 1136 and/or the housing 1112 and outside of the supply tank assembly 1118.

The receiver 1136 forms a well in the cleaning apparatus 10B, and the two liquids can be mixed in the well and/or in a fluid line 1182 of the liquid delivery system 50. Further, the supply tank assembly 1118 is configured to dispense the first liquid and different amounts of the second liquid to form different combined solutions. Accordingly, based on a setting of the supply tank assembly 1118, the supply tank assembly 1118 can dispense the first liquid and the second liquid at the first ratio for one cleaning process or at a second ratio for another cleaning process.

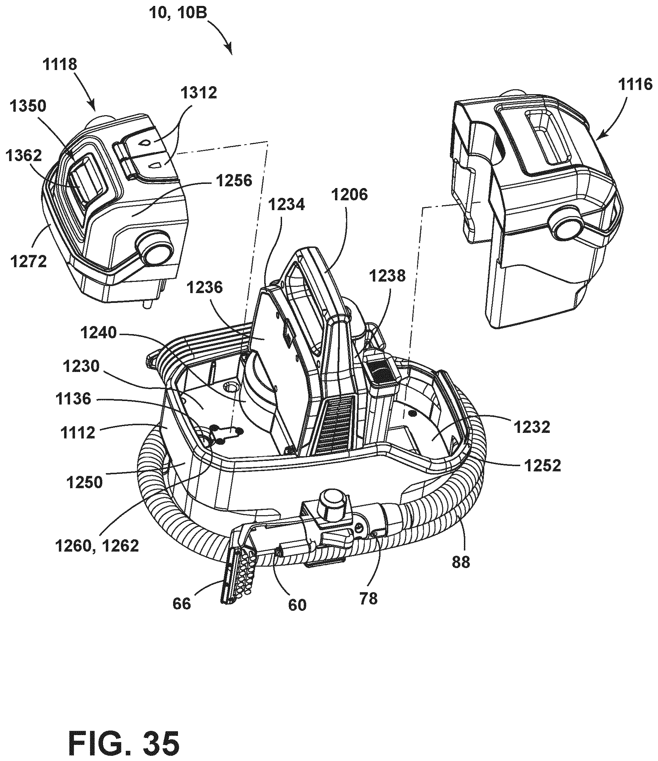

Referring to FIGS. 35-37, the housing 1112 includes a handle 1206 for carrying the cleaning apparatus 10B. The handle 1206 is disposed between a first or supply tank seat 1230 for receiving and supporting the supply tank assembly 1118 and a second or recovery tank seat 1232 for receiving and supporting the recovery tank assembly 1116. The housing 1112 generally includes a central support 1234 disposed between the first and second seats 1230, 1232. The central support 1234 has a first sidewall 1236 proximate to the first seat 1230 and a second sidewall 1238 proximate to the second seat 1132.

At least the first sidewall 1236 proximate to the supply tank seat 1230 includes a protruding portion 1240, and the supply tank assembly 1118 defines a mating recessed portion 1244. When the supply tank assembly 1118 is disposed on the supply tank seat 1230, the protruding portion 1240 is disposed in the recessed portion 1244, allowing the supply tank assembly 1118 to mate with the housing 1112.

The housing 1112 includes a lower wall 1250 extending around the first seat 1230 and a rim 1252 extending around the second seat 1132. The lower wall 1250 extends along a lower portion 1254 of the supply tank 1156 to provide more support to the supply tank 1156 for engaging the activated pump 1120 with an upper portion 1256 of the supply tank 1156 exposed above the lower wall 1250. Further, the lower wall 1250 may affect the location of various components on the supply tank assembly 1118, as described further herein. The rim 1252 has a lesser height than the lower wall 1250, allowing a greater lateral exposure of the recovery tank assembly 1116. Additionally, the recovery tank seat 1232 is disposed lower than the supply tank seat 1230, resulting in the recovery tank assembly 1116 having a greater height than the supply tank assembly 1118. This configuration allows an increased volume for the recovery tank assembly 1116 to be able to hold the contents of the supply tank 1156 along with additional recovered debris materials.

The housing 1112 includes the receiver 1136 configured to engage the supply tank assembly 1118. A seal 1260 is disposed around the receiver 1136, and a filter or screen 1262 is disposed over the receiver 1136. The seal 1260 may be coupled with the housing 1112 or the supply tank assembly 1118 and is configured to provide a sealed interface between the receiver 1136 and the supply tank assembly 1118.

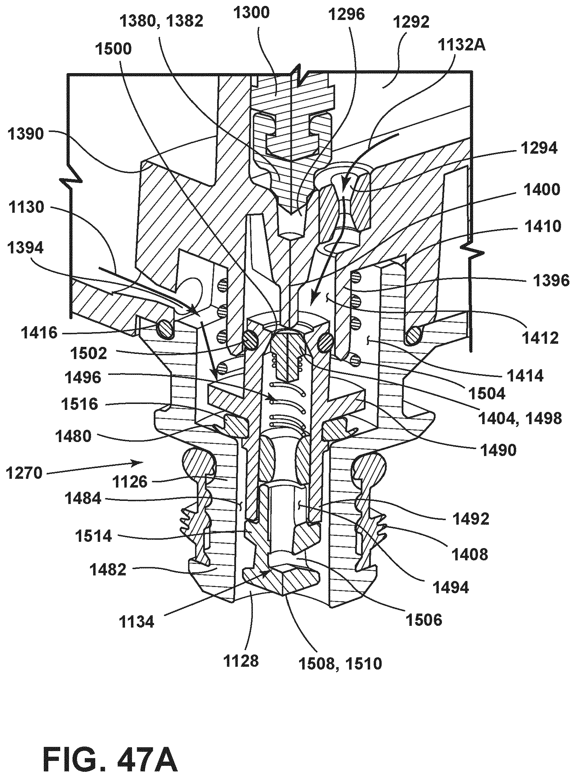

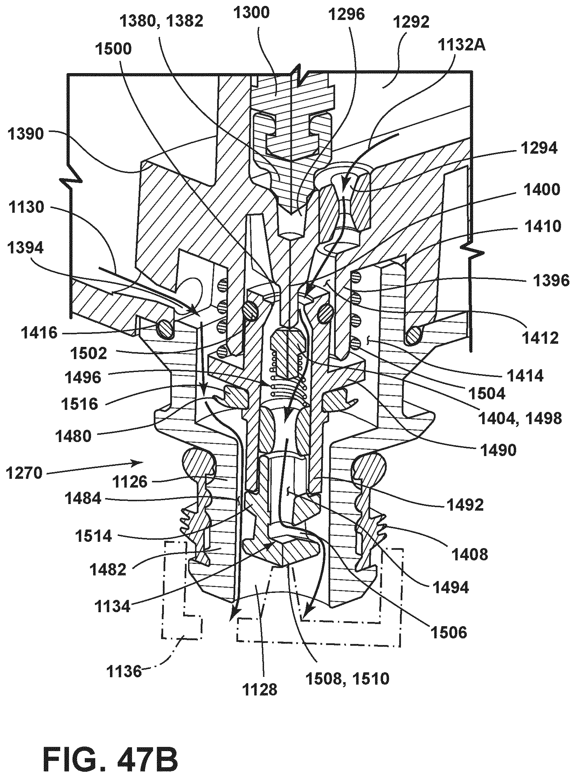

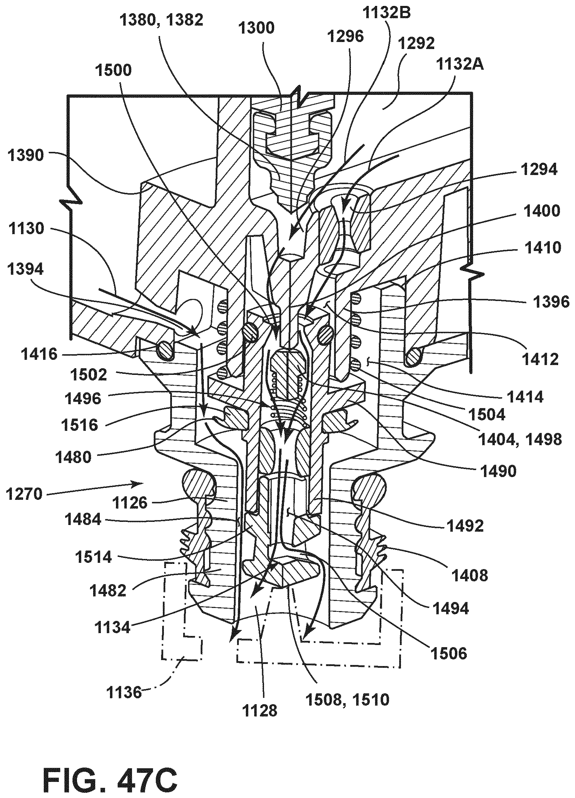

Referring now to FIG. 35-38, the supply tank assembly 1118 includes a cap assembly 1270, which is sized to be received by the receiver 1136. In certain aspects, the cap assembly 1270 is removable and includes multiple functioning components for controlling the liquid flow within the supply tank assembly 1118 and through the dispensing outlet 1128 as described herein. The receiver 1136 includes a component that functionally mates with the cap assembly 1270 to actuate the plunger 1134 (see FIGS. 47A-47C), opening the plunger 1134 and allowing liquid to flow from the supply tank 1156, through the cap assembly 1270, and then through the fluid line 1182 that extends to the pump 1120. The supply tank assembly 1118 fluidly couples with the pump 1120 at the supply tank seat 1230.

The supply tank assembly 1118 includes at least the supply tank 1156 for housing the liquids and the cap assembly 1270 for engaging the receiver 1136. The supply tank 1156 has a handle 1272 that can be utilized for removing the supply tank assembly 1118 from the housing 1112. The supply tank 1156 defines the first reservoir 1122 and the second reservoir 1124 for separately housing the first and second liquids. The supply tank 1156 includes a top wall 1274, a bottom wall 1276, an inner wall 1278, and an outer wall 1280. The bottom wall 1276 is configured to be positioned on the first tank seat 1230. The inner wall 1278 defines the recessed portion 1244 for receiving the protruding portion 1240 of the first sidewall 1236. The outer wall 1280 is generally rounded to correspond with the shape of the lower wall 1250 of the housing 1112, resulting in the supply tank 1156 having a generally "D" shape.

Further, the supply tank 1156 includes the upper portion 1256 having a greater size than the lower portion 1254, where the lower portion 1254 fits within and/or interfaces with the lower wall 1250 of the housing 1112 when the supply tank assembly 1118 is seated on the first seat 1230. The upper portion 1256 can extend over and/or be contiguous with the lower wall 1250, while the lower portion 1254 fits inside the boundary formed by the lower wall 1250. Additionally, the handle 1272 may extend generally along the outer wall 1280 between the interface between the lower portion 1254 and the upper portion1256. In this regard, the handle 1272 can be disposed adjacent to the lower wall 1250. With this configuration of the lower wall 1250 and the handle 1206, components of the supply tank assembly 1118 to be accessed by the user are toward the upper portion 1256 or proximate to the top wall 1274 to be more easily accessible around the housing 1112 and the handle 1272.

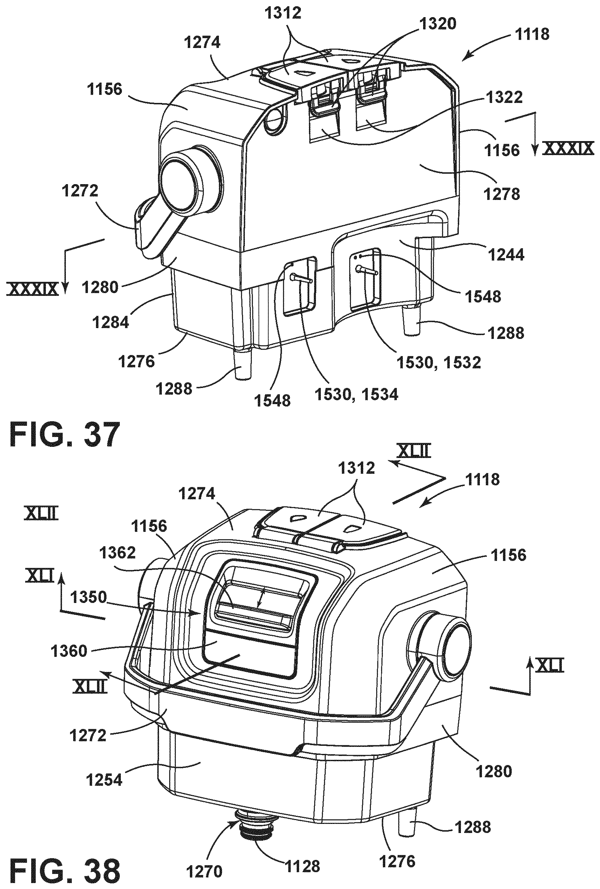

Referring still to FIGS. 37-39, the neck 1126 is coupled to and extends from the bottom wall 1276, forming a cylindrical lower extension to the supply tank 1156. The neck 1126 is substantially hollow to provide fluid communication between the dispensing outlet 1128 and each of the first and second reservoirs 1122, 1124, as well as allow movement of the plunger 1134. In this configuration, the neck 1126 is part of the cap assembly 1270. The neck 1126 is generally centered along a width of the supply tank assembly 1118 and closer to the outer wall 1280. Supports 1288 may also extend from the bottom wall 1276 proximate to opposing junctions or corners between the inner wall 1278 and the curved outer wall 1280.

A dividing wall 1290 extends from an inner surface of the top wall 1274 and to an inner surface of the bottom wall 1276. In the illustrated configuration, the dividing wall 1290 overlaps with and extends away from the recessed portion 1244. The dividing wall 1290 forms an "L" shape, extending from the inner wall 1278 and to the outer wall 1280 to form the second reservoir 1124 at a corner between the inner wall 1278 and the outer wall 1280. In this way, the second reservoir 1124 may be smaller than the first reservoir 1122 and form a portion of the first reservoir 1122.

In various aspects, the supply tank assembly 1118 is one component with two integrally formed tanks for the two reservoirs 1122, 1124. In such examples, the dividing wall 1290 may divide the single component into two parts. In additional or alternative aspects, the supply tank assembly 1118 may be formed by two tank components that can mate or be coupled together to form the supply tank assembly 1118. The two tank parts may fit together to form the overall supply tank 1156 and place both reservoirs 1122, 1124 in fluid communication with the dispensing outlet 1128.

Referring still to FIGS. 37-39, a connecting enclosure 1292 extends from the dividing wall 1290. The dividing wall 1290 defines an opening for the second reservoir 1124 to be in fluid communication with a channel defined by the connecting enclosure 1292. The connecting enclosure 1292 and the channel defined therein extend from the dividing wall 1290, toward an opposing section of the outer wall 1280, and over the location of the dispensing outlet 1128. First and second fluid outlets 1294, 1296 are defined in a floor of the connecting enclosure 1292 (see also FIGS. 47A-47C). The fluid outlets 1294, 1296 are disposed at the distal end of the enclosure 1292 compared to the opening to the second reservoir 1124. Additionally, a housing 1298 is formed or coupled to the distal end of the enclosure 1292 for housing a ratio adjustment lever 1300 as described herein. The ratio adjustment lever 1300 is configured to selectively open and close the distally located fluid outlet 1296 to adjust an amount of the second liquid that flows from the second reservoir 1124 and to the dispensing outlet 1128.

The connecting enclosure 1292 extends from the bottom wall 1276 of the supply tank 1156 and toward the top wall 1274. The connecting enclosure 1292 and the housing 1298 may extend along a height of the supply tank 1156. Further, the connecting enclosure 1292 extends across the first reservoir 1122. The connecting enclosure 1292 defines a lower cutout 1302 proximate to the bottom wall 1276 to form a passage between portions of the first reservoir 1122 on opposing sides of the connecting enclosure 1292. This configuration maintains a separate flow path for the second liquid while allowing the first liquid to be stored along the bottom of the first reservoir 1122 on both sides of the connecting enclosure 1292. In other words, the second liquid is maintained separately from the first liquid and guided through the first reservoir 1122 and/or the first liquid to the dispensing outlet 1128.

Referring to FIGS. 38-40, the supply tank assembly 1118 includes one or more covers 1312 operably coupled to the top wall 1274 for opening and closing the reservoirs 1122, 1124. As illustrated, the supply tank assembly 1118 includes two covers 1312 that are rotatably coupled to the top wall 1274. A single cover 1312 may also be utilized without departing from the teachings herein. The first cover 1312 is configured to selectively provide access to a reservoir inlet 1314 for the first reservoir 1122 to allow the user to add or remove the first liquid from the first reservoir 1122, as well as selectively seal the first reservoir 1122. Similarly, the second cover 1312 is configured to selectively provide access to a reservoir inlet 1316 for the second reservoir 1124 to allow the user to add and remove the second liquid from the second reservoir 1124, as well as selectively seal the second reservoir 1124. One or both of the reservoir inlets 1314 may include a filter for reducing or preventing other materials from entering the reservoirs.

The covers 1312 can include projections that extend into or around the respective inlets 1314, 1316 and engage walls forming the inlets 1314, 1316 to provide a seal at the reservoir inlets 1314, 1316. Further, the covers 1312 each include a latch 1320 that engage notches 1322 on the supply tank 1156 to retain the covers 1312 in closed states. The notches 1322 may be elongated to allow the consumer to engage the latches 1320 more easily for opening and closing the covers 1312.

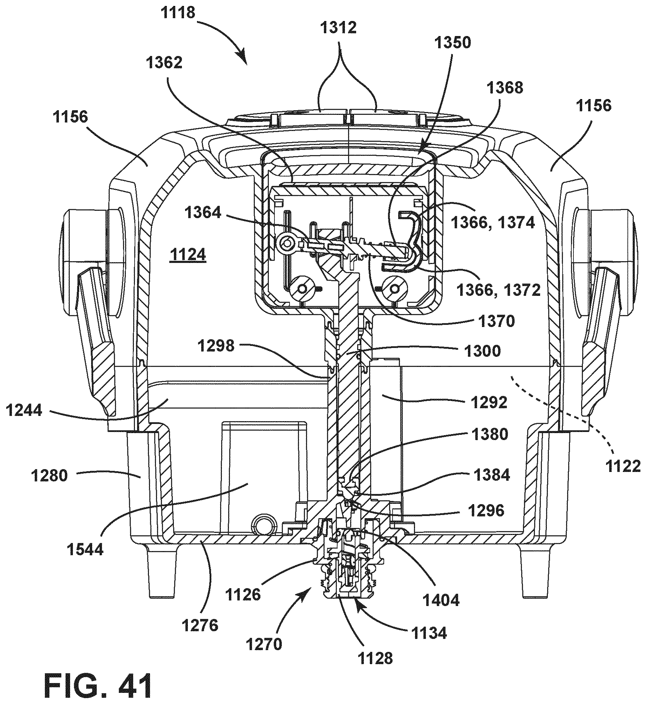

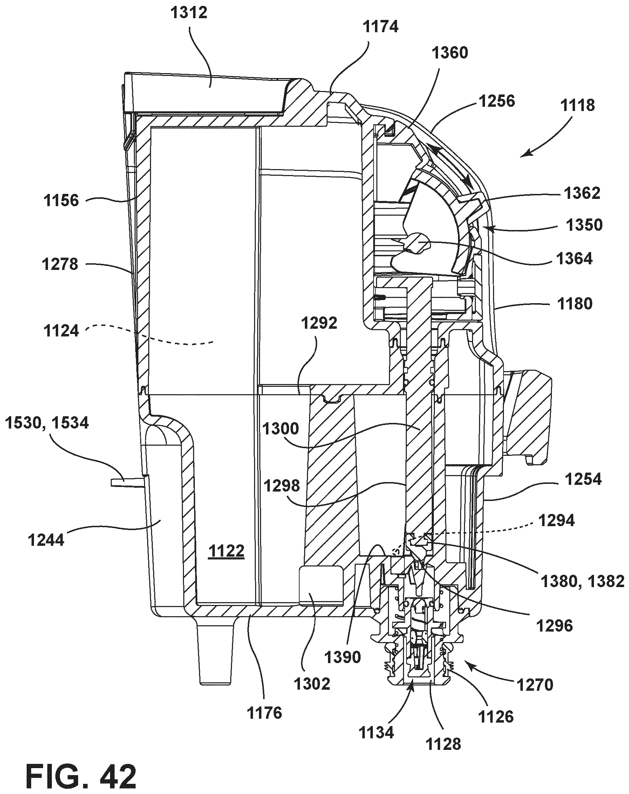

Referring to FIGS. 41 and 42, the supply tank assembly 1118 includes a switch assembly 1350 for further controlling a flow, amount, or dose of the second liquid between the connecting enclosure 1292 and the cap assembly 1270. The switch assembly 1350 includes a switch cover 1360 coupled to the supply tank 1156 and a switch 1362 operably coupled to the switch cover 1360. The switch 1362 is disposed on the upper portion 1256 of the supply tank assembly 1118 to allow the user to engage and move the switch 1362 between first and second dispensing positions. The location of the switch 1362 allows the switch 1362 to be manipulated by the user when the supply tank 1156 is supported in the housing 1112 (FIG. 34).

The switch 1362 is disposed proximate to or at least partially on the top wall 1274 of the supply tank assembly 1118. The switch 1362 is operably coupled with the ratio adjustment lever 1300 such that movement of the switch 1362 causes movement of the ratio adjustment lever 1300. The ratio adjustment lever 1300 engages the distally located second fluid outlet 1296 as described herein. Accordingly, the controls for dispensing the second liquid are located at the upper portion 1256 of the supply tank assembly 1118 with the dispensing components at the lower portion 1254 of the supply tank 1156, allowing for more convenient control of the dispensing components when the supply tank assembly 1118 is seated on the housing 1112 (FIG. 34).

The switch 1362 is operable between the first dispensing position, which moves the ratio adjustment lever 1300 to a lowered first position allowing the flow of the second liquid through the first fluid outlet 1294 and blocking the second fluid outlet 1296, and the second dispensing position, which moves the ratio adjustment lever 1300 to a second raised position allowing the flow of the second liquid though both the first and second fluid outlets 1294, 1296. In other words, the first dispensing position closes the second fluid outlet 1296 and the second dispensing position opens the second fluid outlet 1296. Accordingly, the second flow path 1132A for the second liquid through the first fluid outlet 1294 remains open and the third fluid path 1132B for the second liquid through the second fluid outlet 1296 is selectively opened and closed based on the position of the switch 1362 and the ratio adjustment lever 1300.

The switch 1362 is operably coupled to a piston 1364 which is rotatably coupled at a first end to the supply tank 1156. A second end of the piston 1364 is configured to slidably engage a guide wall 1366. The second end of the piston 1364 may include an engagement member 1368, such as an elastomeric cap, to facilitate the sliding engagement of the piston 1364 along the guide wall 1366. A biasing member 1370, illustrated as a coil spring, is operably coupled to the piston 1364 to bias the piston 1364 toward the guide wall 1366. The movement of the switch 1362 is configured to rotate the piston 1364 and slide the engagement member 1368 of the piston 1364 along the guide wall 1366. The movement of the switch 1362 adjusts the piston 1364 vertically between two notched regions 1372, 1374 of the guide wall 1366. The notched regions 1372, 1374 retain the second end of the piston 1364 fully in the first dispensing position or the second dispensing position. The biasing force of the biasing member 1370 also assists with retaining the piston 1364 in the notched regions 1372, 1374.

Referring still to FIGS. 41 and 42, the piston 1364 is coupled with the ratio adjustment lever 1300, operably coupling the switch 1362 and the ratio adjustment lever 1300. Movement of the piston 1364 vertically along the guide wall 1366 in response to movement of the switch 1362 is configured to vertically move the ratio adjustment lever 1300 relative to the bottom wall 1276 of the supply tank 1156 in the connecting enclosure 1292 for opening and closing the second fluid outlet 1296. A distal end 1380 of the ratio adjustment lever 1300 may include an end cap 1382, such as an elastomeric cap, which engages the floor of the connecting enclosure 1292 to close the second fluid outlet 1296 and, consequently, the third flow path 1132B. When the switch 1362 is in the first dispensing position, which is a lowered position, the ratio adjustment lever 1300 is configured to be in a lowered or blocking position, covering the second fluid outlet 1296 and reducing or preventing the second liquid from flowing through the second fluid outlet 1296.

When the switch 1362 is in the second dispensing position, which is a raised position, the ratio adjustment lever 1300 is configured to be in a raised or unblocking position, moving away from the second fluid outlet 1296 and allowing the second liquid to flow through the second fluid outlet 1296. Accordingly, the ratio adjustment lever 1300 is configured to open and close the third flow path 1132B for the second liquid while the second flow path 1132A remains open regardless of the position of the ratio adjustment lever 1300. The switch assembly 1350 allows the tank assembly 1118 to be used for forming the combined solution at the first ratio between the first and second liquids when the switch 1362 is in the first dispensing position and the ratio adjustment lever 1300 is in the blocking position and at the second ratio with more second liquid when the switch 1362 is in the second dispensing position and the ratio adjustment lever 1300 is in the unblocking position.

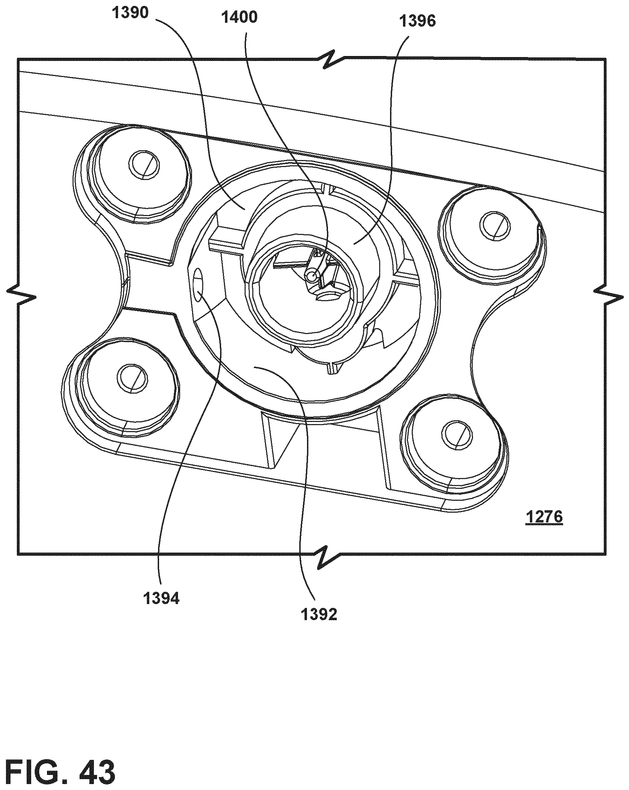

Referring to FIGS. 42 and 43, the bottom wall 1276 of the supply tank 1156 includes an offset region 1390, which is recessed relative to the bottom wall 1276. Both the first and second fluid outlets 1294, 1296 are generally defined in the offset region 1390 with the first fluid outlet 1294 being arranged toward a side of the offset region 1390 and the second fluid outlet 1296 being arranged more centrally in the offset region 1390. A wall 1392 forming the offset region 1390 defines a fluid outlet 1394 for the first reservoir 1122. In this way, the outlets 1294, 1296, 1394 for the first and second liquids are defined at the offset region 1390.

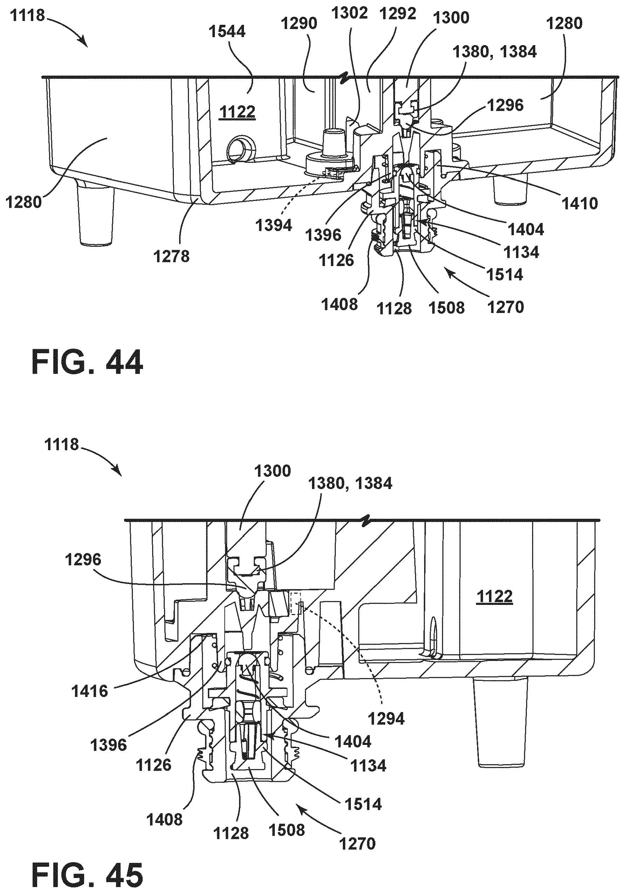

Additionally, the supply tank 1156 includes a rim 1396 extending in the offset region 1390 to form an inner receiving channel and an outer receiving channel for components of the cap assembly 1270. The first and second fluid outlets 1294, 1296 are in fluid communication with the inner receiving channel and the fluid outlet 1394 for the first liquid is in fluid communication with the outer receiving channel to maintain separation between the first and second liquids. An actuating projection 1400 is disposed in the space defined by the rim 1396 for engaging a plug 1404 (FIG. 44) as described herein.

Referring to FIGS. 44-46, the cap assembly 1270 includes the neck 1126 selectively coupled with the bottom wall 1276 of the supply tank 1156. The flow paths 1130, 1132A, 1132B and the dispensing outlet 1128 are formed by one or both of the neck 1126 and the plunger 1134. The cap assembly 1270 includes a majority of the functioning components for opening and closing the fluid flow paths 1130, 1132A, 1132B. In this regard, the cap assembly 1270 is configured to assist with controlling the dispensing of the first and second liquids. For example, the cap assembly 1270 is configured to retain the first and second liquids in the supply tank assembly 1118 when the supply tank assembly 1118 is removed from the housing 1112 (FIG. 34) and to allow the first and second liquids to flow from the supply tank 1156 when the supply tank assembly 1118 engages the receiver 1136 (FIG. 35). The neck 1126 includes a gasket or seal 1408 extending around a circumference thereof. This seal 1408 may assist with sealing the engagement between the supply tank assembly 1118 and the receiver 1136 (FIG. 35).

The cap assembly 1270 includes an insertion end 1410 that is positioned in the outer receiving channel of the bottom wall 1276, forming a first chamber 1412 for the first liquid. The plunger 1134 is disposed within the neck 1126 and extends into the space defined by the rim 1396. In this regard, the plunger 1134 extends into the inner receiving channel and forms a second chamber 1414 for the second liquid. The fluid outlet 1394 for the first reservoir 1122 aligns with an opening 1416 in the insertion end 1410 of the cap assembly 1270 to allow the first liquid to flow into the first chamber 1412, while the fluid outlets 1294, 1296 are in fluid communication with the second chamber 1414 via the inner receiving channel.

Referring still to FIGS. 44-46, the cap assembly 1270 includes or defines a plunger seat 1480 and an engagement feature 1482 extending from the plunger seat 1480. The engagement feature 1482 is configured to engage the receiver 1136 (FIG. 35), and the gasket 1408 is disposed around the engagement feature 1482 for sealing an interface between the cap assembly 1270 and the housing 1112 (FIG. 34). The engagement feature 1482 defines a dispensing channel 1484 in fluid communication with the dispensing outlet 1128.

The plunger 1134 includes a stopper portion 1490, housing the plug 1404, and an elongated guide portion 1492, extending into the dispensing channel 1484. The plunger 1134 defines an interior channel 1494 through which the second liquid is configured to flow. The stopper portion 1490 houses a first biasing member 1496, illustrated as a coil spring, and the plug 1404 for blocking one or both of the second and third flow paths 1132A, 1132B upstream of the interior channel 1494. The first biasing member 1496 is configured to bias the plug 1404 upward or toward the top of the supply tank assembly 1118 and away from the dispensing outlet 1128. In this way, the plug 1404 is biased toward a closed position in an opposing direction compared to the configurations previously described herein. The plug 1404 has a widened head 1498 that is configured to at least substantially block an upper opening 1500 into the interior channel 1494 of the plug 1404 in the closed position. A sealing feature 1502 may be disposed between the rim 1396 and the plunger 1134 to reduce or prevent the second liquid from flowing around the plunger 1134 rather than through the plunger 1134.

A second biasing member 1504, illustrated as a larger coil spring, extends around the plunger 1134 to bias the plunger 1134 to a sealed position against the plunger seat 1480. The stopper portion 1490 and the guide portion 1492 may include the interior channel 1494 for dispensing the second liquid. The stopper portion 1490 extends across the plunger seat 1480 and can engage the plunger seat 1480 to substantially block liquid flow from the first chamber 1412 to the dispensing outlet 1128.

Referring to FIGS. 47A-47C, the interior channel 1494 extends through the guide portion 1492 toward the dispensing outlet 1128 to provide a separate path for dispensing the second liquid. The plunger 1134 defines at least one outlet opening 1506 proximate to a distal end 1508 thereof for the second liquid to exit the plunger 1134. The outlet opening(s) 1506 may be defined generally by a side surface of the plunger 1134 and may also be at least partially defined by an end surface 1510 thereof. The end surface 1510 may be broader or wider extending across the dispensing channel 1484 to provide an increased surface area for engaging the receiver 1136 (FIG. 35). This may be advantageous for providing better engagement between the receiver 1136 and the supply tank 1156 compared to smaller or narrower surface areas. Additionally, the distal end 1508 of the plunger 1134 may include outwardly extending protrusions 1512, which may increase surface area of the end surface 1510 and reduce potential misalignment between the plunger 1134 and the receiver 1136 (FIG. 35). The plunger 1134 may also include a ring 1514 around the guide portion 1492, which may assist with distributing the first liquid passing around the plunger 1134 and/or increasing strength of the plunger 1134.

The plug 1404 and the plunger 1134 are configured to selectively block or close the flow paths 1130, 1132A, 1132B through the cap assembly 1270 to the dispensing outlet 1128. The supply tank assembly 1118 includes the first flow path 1130 from the first reservoir 1122 to the dispensing outlet 1128. In certain aspects, the first flow path 1130 extends from the first reservoir 1122, through the fluid outlet 1394, into the first chamber 1412, around the plunger 1134, through the dispensing channel 1484 of the engagement feature 1482, and through the dispensing outlet 1128.

The supply tank assembly 1118 also includes the second flow path 1132A and the third flow path 1132B from the second reservoir 1124 to the dispensing outlet 1128. Each of the fluid outlets 1294, 1296 for the second reservoir 1124 are in fluid communication with the second chamber 1414. The second chamber 1414 is generally defined between the plunger 1134 and the rim 1396 and, therefore, is defined by the supply tank 1156 and the cap assembly 1270. The second flow path 1132A extends from the second reservoir 1124, through the channel of the connecting enclosure 1292, through the first fluid outlet 1294, and into the second chamber 1414 around the actuating projection 1400. The second flow path 1132A then extends around the plug 1404, through the interior channel 1494 of the plunger 1134, through the outlet opening 1506, and to or through the dispensing outlet 1128. The fluid outlet 1394 for the first reservoir 1122 and the first fluid outlet 1294 for the second reservoir 1124 are generally different sizes. This results in a predefined flow rate or dose of the first and second liquids to be dispensed to form the combined solution with the predefined ratio when the second liquid flows along the second flow path 1132A. However, the fluid outlets 1294, 1394 may be the same size without departing from the teachings herein.

Additionally, the supply tank assembly 1118 includes the third flow path 1132B from the second reservoir 1124 to the dispensing outlet 1128. The third flow path 1132B extends from the second reservoir 1124, through the channel of the connecting enclosure 1292, around the ratio adjustment lever 1300, through the second fluid outlet 1296, and into the second chamber 1414 around the actuating projection 1400. The third flow path 1132B then joins the second flow path 1132A through the plunger 1134. The third flow path 1132B is typically utilized along with the second flow path 1132A to dispense a second predefined dose of the second liquid to form the combined solution with the first liquid at a different ratio. Typically, more of the second liquid is dispensed when using both the second and third flow paths 1132A, 1132B.

Referring still to FIGS. 47A-47C, the first and second biasing members 1496, 1504 operably engage the plunger 1134 and the plug 1404, respectively. In this configuration, the plunger 1134 and the plug 1404 are biased in opposing directions. In this way, the plunger 1134 is biased toward the dispensing outlet 1128 to engage the plunger seat 1480, and the plug 1404 is biased away from the dispensing outlet 1128 and toward the actuating projection 1400. The first biasing member 1496 biases the plug 1404 toward the closed position, closing the second and third flow paths 1132A, 1132B at the insertion end 1410 of the plunger 1134. The second biasing member 1504 biases the plunger 1134 toward the sealed position, closing the first flow path 1130 upstream of the dispensing channel 1484.

When the supply tank assembly 1118 is removed from the housing 1112 (FIG. 34), the plunger 1134 is in the sealed position abutting the plunger seat 1480 and the plug 1404 is in the closed position to reduce or prevent liquid from exiting the supply tank assembly 1118 via the dispensing outlet 1128. The plunger seat 1480 may include a sealing feature 1516 extending about an opening into the dispensing channel 1484, and the stopper portion 1490 of the plunger 1134 is configured to engage the sealing feature 1516 to form a fluid seal in the first flow path 1130 when the plunger 1134 is in the sealed position. The first liquid may flow along the first flow path 1130 up to the first chamber 1412 before being blocked by the plunger 1134.

When the plug 1404 is in the closed position, the plug 1404 generally fills the upper opening 1500 of the interior channel 1494 blocking the second and third flow paths 1132A, 1132B upstream of the plunger 1134. The second liquid can flow along the second flow path 1132A and/or the second and third flow paths 1132A, 1132B and into the second chamber 1414. The second liquid is configured to be retained in the second chamber 1414 upstream of the plug 1404 rather than in the plunger 1134, as in other configurations described herein. The plug 1404 and the plunger 1134 are downstream of the switch assembly 1350, with the switch assembly 1350 not impinging on the first and second flow paths 1130, 1132A.

When the supply tank assembly 1118 engages and mates with the receiver 1136, the receiver 1136 is configured to actuate or move the plunger 1134 overcoming the biasing force of the second biasing member 1504. The plug 1404 can move slightly with movement of the plunger 1134 until the plug 1404 engages the actuating projection 1400. Alternatively, the plug 1404 may engage the actuating projection 1400 in both the opened and closed positions, which may be caused by movement of the plunger 1134 around the plug 1404. The actuating projection 1400 reduces or prevents further upward movement of the plug 1404 overcoming the biasing force of the first biasing member 1496 while the plunger 1134 continues to move upwards, around the actuating projection 1400. The movement of the plunger 1134 adjusts the stopper portion 1490 away from the plunger seat 1480 providing fluid communication around the plunger 1134 to the dispensing outlet 1128 for the first liquid. Accordingly, when the supply tank assembly 1118 engages the receiver 1136 (FIG. 35), the plunger 1134 is moved to the opened position to allow the first liquid flow along the first flow path 1130 and through the dispensing outlet 1128.

When the plunger 1134 is shifted toward the insertion end 1410, the plunger 1134 moves around the actuating projection 1400 with the upper opening 1500 moving away from the plug 1404. The plug 1404 being retained in position by the actuating projection 1400 and the movement of the plunger 1134 allows the upper opening 1500 to be opened around the actuating projection 1400 for the second liquid to flow through the upper opening 1500, around the plug 1404, and through the interior channel 1494. Accordingly, the plug 1404 is retained in the opened position by the engagement with the actuating projection 1400 in response to movement of the plunger 1134 to the opened position. The plug 1404 and the plunger 1134 are either both shifted from the biased position to open the flow paths 1130, 1132A, 1132B or both moved by the biasing forces to close the flow paths 1130, 1132A, 1132B.

Referring further to FIGS. 47A-47C, the amount of the second liquid dispensed when the plug 1404 is in the opened position depends on the position of the switch assembly 1350. When the ratio adjustment lever 1300 is in the blocking position, the first, smaller amount of the second liquid flows along the second flow path 1132A to the second chamber 1414 via the first fluid outlet 1294. When the ratio adjustment lever 1300 is in the unblocking position, a second, greater amount of the second liquid flows along both the second and third flow paths 1132A, 1132B to the second chamber 1414 via both fluid outlets 1294, 1296. Accordingly, the user can dispense different amounts of the second liquid with the same amount of the first liquid to form different concentrations of the solution by having different ratios between the first and second liquids. In certain aspects, the first ratio may be a ratio of about 1:7 for the second liquid-to-first liquid, and the second ratio may be a ratio of about 1:3 for the second liquid-to-first liquid.

A single receiver 1136 is configured to engage the plunger 1134, which causes the plug 1404 to engage with the actuating projection 1400 to allow the first and second liquids to be concurrently and separately dispensed from the dispensing outlet 1128 to be mixed at the receiver 1136 outside the supply tank assembly 1118. The first flow path 1130 is separate from the second and third flow paths 1132A, 1132B through the supply tank assembly 1118 reducing or preventing any mixing or at least a substantial amount of mixing of the first and second liquids before exiting the supply tank assembly 1118. The cap assembly 1270 includes at least a majority of the features to control dispensing and function of the supply tank assembly 1118 similar to the previous configurations disclosed herein. The cap assembly 1270 including controlling components is removable from the supply tank assembly 1118, which may be advantageous for maximizing the efficiency of the manufacturing process. For example, the supply tank assembly 1118 may be manufactured in a manner that can fit with an existing base unit or housing 1112.

The supply tank assembly 1118 may provide predefined ratios of the first and second liquids. Further, the supply tank assembly 1118 may dispense a single liquid if the second liquid is omitted or the first liquid is added to both reservoirs 1122, 1124. The supply tank assembly 1118 may be preset for the amount of the first liquid, the second liquid, and the ratio therebetween. For example, the size of the outlets 1294, 1296, 1394 of the bottom of the supply tank assembly 1118 may determine the amount of liquid that can flow into the cap assembly 1270 to be dispensed by determining a flow rate of liquids there through. The switch assembly 1350 is also configured to control the ratio between the first and second liquids by controlling the flow path 1132A, 1132B of the second liquid.

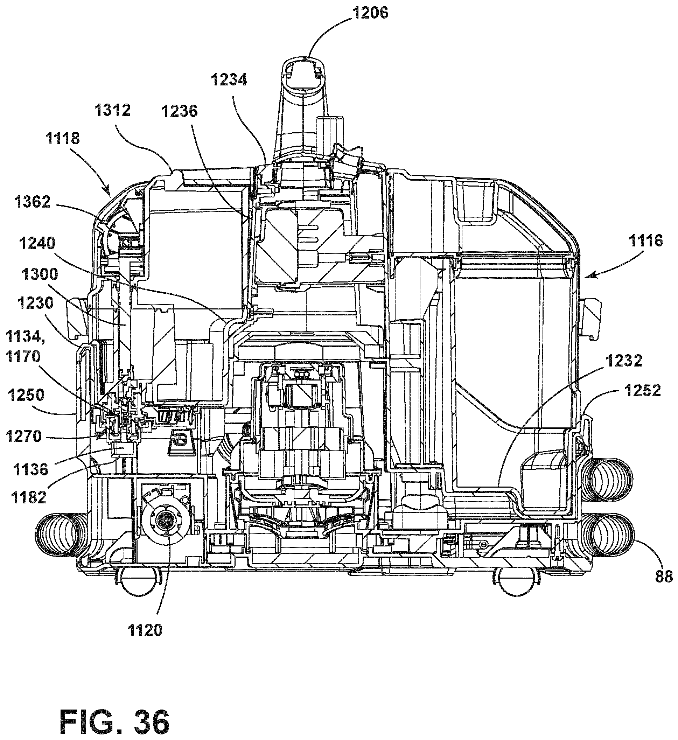

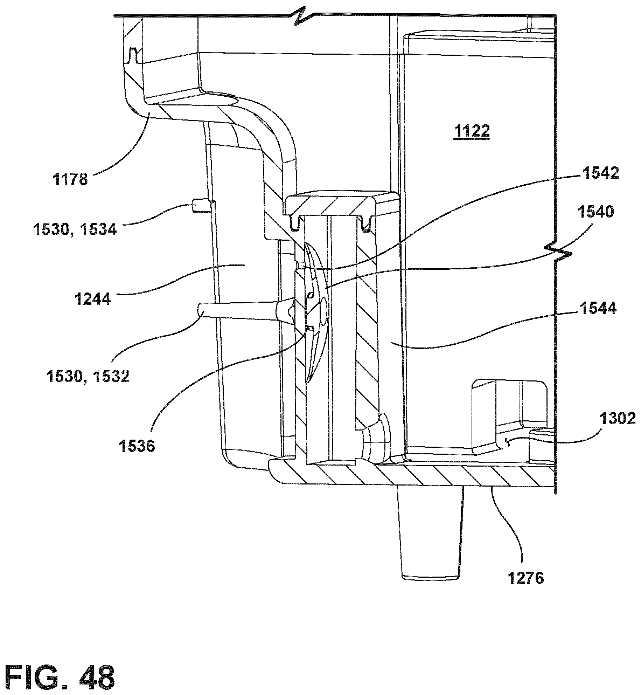

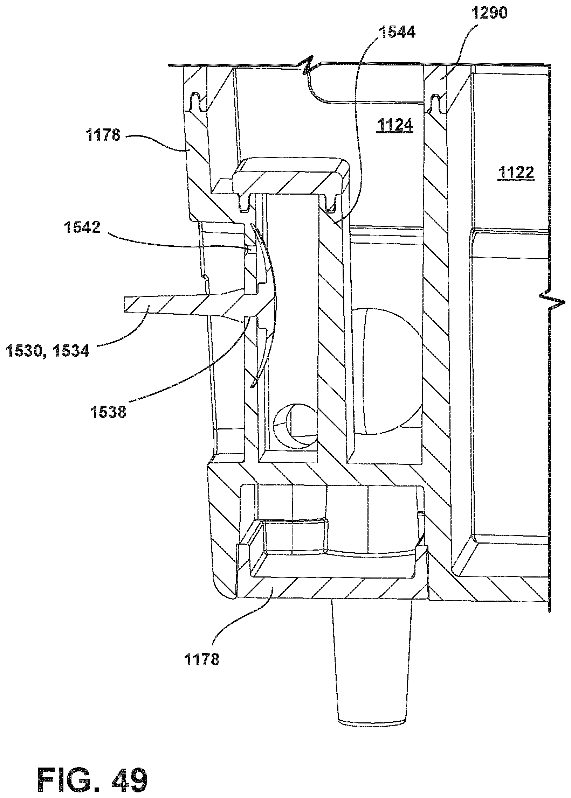

Referring to FIGS. 48 and 49, the supply tank assembly 1118 includes pressure balancing features 1530, such as check valves or umbrella valves 1532, 1534 for controlling pressure inside the supply tank 1156 relative to an area external to the supply tank 1156. When the pump 1120 (FIG. 36) is active, the pressure balancing features 1530 assist with controlling the flow of the first and second liquids out of the supply tank 1156 to provide a more stable mixing ratio between the two liquids. The supply tank 1156 defines first and second through-holes 1536, 1538 through the inner wall 1278, with the umbrella valves 1532, 1534 extending therethrough and with flexible heads 1540 inside the supply tank 1156. The inner wall 1278 also defines airflow apertures 1542 proximate to the first and second through-holes 1536, 1538. The first through-hole 1536 and at least one airflow aperture 1542 are in fluid communication with the first reservoir 1122, and the second through-hole 1538 and at least one airflow aperture 1542 are in fluid communication with the second reservoir 1124. Generally, the through-holes 1536, 1538 and the airflow apertures 1542 are defined in recessed areas on the inner wall 1278.

The first and second umbrella valves 1532, 1534 extend through the through-holes 1536, 1538, respectively, to control fluid communication with the reservoirs 1122, 1124 and the external area. The flexible heads 1540 are arced or shallow domes that extend around the through-holes 1536, 1538 and over the respective airflow apertures 1542. The flexible heads 1540 are configured to engage the inner surface of the inner wall 1278 to seal the through-holes 1536, 1538 and the airflow apertures 1542.

The supply tank 1156 includes separating walls 1544, extending from the inner wall 1278 and toward the bottom wall 1276 to form cavities around the through-holes 1536, 1538 and the umbrella valves 1532, 1534. Bottoms of the separating walls 1544 may define openings to provide fluid communication between areas around the umbrella valves 1532, 1534 and the remainder of the reservoirs 1122, 1124. The separating wall 1544 may be advantageous for allowing movement of the flexible heads 1540, as well as reducing liquid around the umbrella valves 1532, 1534.

The umbrella valves 1532, 1534 are configured to flex or elastically deform to move away from the inner surface and open the through-holes 1536, 1538 and the airflow apertures 1542, which allows air to flow into the respective reservoir 1122, 1124 when the pump 1120 (FIG. 36) is activated (similar to the configuration described with respect FIGS. 16 and 17). When the supply tank assembly 1118 initially mates with the receiver 1136 (FIG. 35), the umbrella valves 1532, 1534 cover or close the through-holes 1536, 1538 and the airflow apertures 1542 to retain the liquids in the supply tank assembly 1118. The liquids may flow at least partially along the respective flow path 1130, 1132A, 1132B due to gravitational forces but are generally retained in the supply tank assembly 1118 due to pressure equilibrium inside and outside the supply tank 1156. When the pump 1120 is activated, the pump 1120 is configured to draw the liquids out of the supply tank 1156, reducing the pressure in the tank 1156 and causing the flexible heads 1540 of the umbrella valves 1532, 1534 to deform to open the airflow apertures 1542 and/or through-holes 1536, 1538 and allowing air to enter the supply tank 1156. The air entering the supply tank 1156 replaces the liquid to fill the space left by the liquids, which results in a dynamic balance between the inside of the supply tank 1156 and an area outside area of the supply tank 1156.

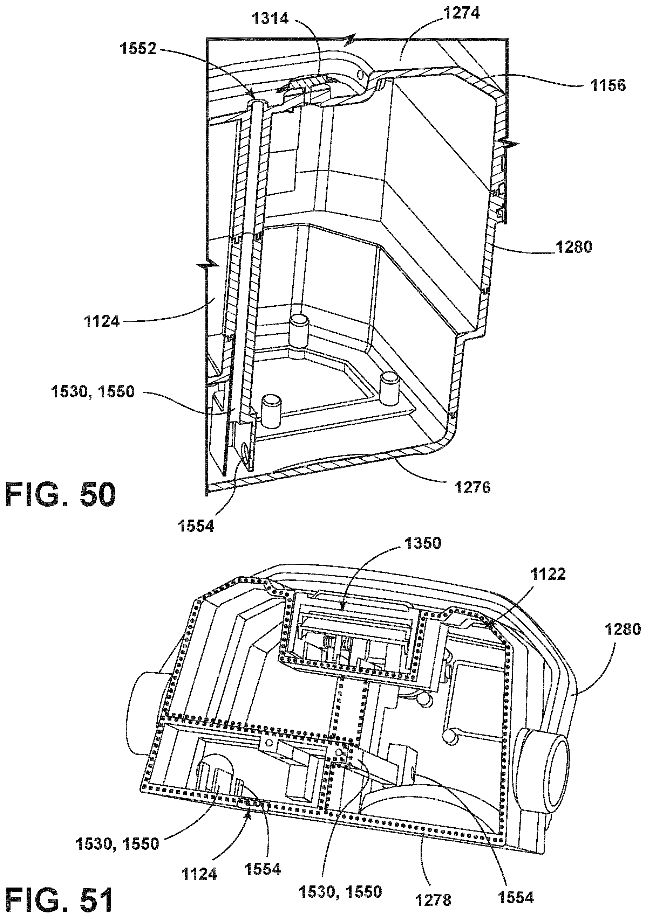

One or both of the umbrella valves 1532, 1534 may be omitted and replaced with air channels 1550 as illustrated in FIGS. 50 and 51, which may be similar to the air tubes 450, 452 illustrated in FIG. 18. The air channels 1550 may extend inside the supply tank 1118 from proximate the bottom wall 1276 to airflow openings 1552 defined by the top wall 1274. The channels 1550 define exhaust vents 1554 proximate to the bottom wall 1276 which fluidly couple the respective reservoir 1122, 1124 with the external air via the air channels 1550. The liquids are inserted into the reservoirs 1122, 1124, and due to the connecting vessel principle, the liquid retains a stable inner tank pressure as the liquid in the reservoir 1122, 1124 fills to a same height or level as the liquid in the air channel 1550. The liquid in the air channel 1550 will decline or lower toward the exhaust vent 1554 when the pump 1120 is active, and the liquid in the reservoir 1122, 1124 is generally maintained at approximately the initial height or level. When the liquid level in the air channel 1550 is lower than the exhaust vent 1554, air bubbles form from the air channel 1550 and enter the reservoir 1122, 1124. The air bubbles keep the air pressure balance between the inside reservoir and ambient to achieve a stable mixing ratio.

The supply tank assembly 1118 dispenses two liquids and dispenses different ratios of the two liquids to adjust the concentration of the cleaning formula. A single tank assembly 1118 can be utilized to dispense both liquids, adjusting at least the amount of the second liquid that is dispensed with the first liquid. The two liquids can be dispensed in a stabilized mixing ratio using the pressure balancing features 1530.

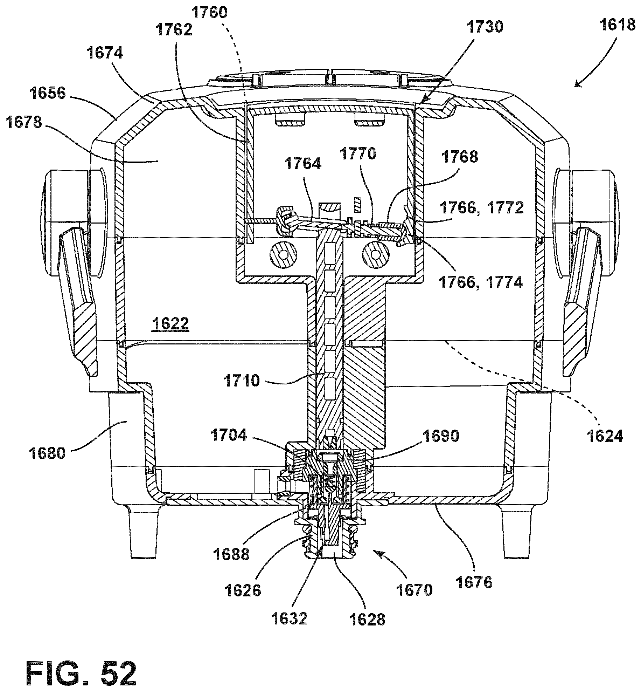

Referring to FIGS. 52-53C, an additional or alternative configuration of a supply tank assembly 1618 is illustrated. The supply tank assembly 1618 illustrated in FIGS. 52-53C is similar and functions similarly to the supply tank assembly 1118 described with respect to FIGS. 37-47C with the primary differences generally being in the structure of the dispensing area of the supply tank assembly 1618. The supply tank assembly 1618 includes first and second reservoirs 1622, 1624 for separately housing the first and second liquids and a neck 1626. The supply tank assembly 1618 also includes a dispensing outlet 1628. A first flow path 1630 for the first liquid is defined from the first reservoir 1622 to the dispensing outlet 1628, and second and third flow paths 1632A, 1632B for the second liquid are defined from the second reservoir 1624 to the dispensing outlet 1628. The supply tank assembly 1618 includes a plunger 1634 at least partially disposed in the neck 1626.

The supply tank assembly 1618 includes a supply tank 1656 for housing the liquids and a cap assembly 1670. The cap assembly 1670 may form at least a portion of a bottom of the supply tank 1656 and the dispensing outlet 1628. The flow paths 1630, 1632A, 1632B may be formed by one or both of the neck 1626 and the cap assembly 1670. The neck 1626 may be formed by one or both of the supply tank 1656 and the cap assembly 1670. The supply tank assembly 1618 includes a handle 1672 for carrying the supply tank assembly 1618. Additionally, the supply tank 1656 includes a top wall 1674, a bottom wall 1676, an inner wall 1678, and an outer wall 1680. The cap assembly 1670 includes an engagement feature 1682, which at least partially defines or includes the dispensing outlet 1628. The engagement feature 1682 includes a dispensing channel 1684 through which the first and second liquids can flow to the dispensing outlet 1628.

The supply tank 1656 includes a receiving projection 1688 to which the cap assembly 1670 is coupled. The receiving projection 1688 and the cap assembly 1670 can collectively form the neck 1626. The cap assembly 1670 extends along an outer surface of the receiving projection 1688, and the plunger 1634 can be inserted into the receiving projection 1688 of the supply tank assembly 1618 proximate to an insert 1690. The insert 1690 forms a portion of the second and third flow paths 1632A, 1632B and assists with guiding the second liquid toward the dispensing outlet 1628. First and second fluid outlets 1694, 1696 are defined at least in part by the insert 1690. The first fluid outlet 1694 is defined directly in line with a plug 1704, and the second fluid outlet 1696 is defined adjacent to the first fluid outlet 1694. The insert 1690 includes a gasket 1706, which is engaged by a distal end 1708 of a ratio adjustment lever 1710 to control through which fluid outlet 1694, 1696 the second liquid flows. The second flow path 1632A may extend through the ratio adjustment lever 1710, while the third flow path may extend around the distal end 1708 of the ratio adjustment lever 1710. The supply tank 1656 also includes a fluid outlet 1714 for the first reservoir 1622, which is closer to the cap assembly 1670 at a side thereof.

The supply tank assembly 1618 includes a switch assembly 1730 for further controlling a flow, amount, or dose of the second liquid. The switch assembly 1730 includes a switch cover 1760 coupled to the supply tank 1656 and a switch 1762 operably coupled to the switch cover 1760. The switch 1762 is operable between first and second dispensing positions. The switch 1762 is disposed proximate to or at least partially on the top wall 1674 of the supply tank assembly 1618 and controls features at the bottom of the supply tank 1656. The switch 1762 is operably coupled with the ratio adjustment lever 1710 such that movement of the switch 1762 causes movement of the ratio adjustment lever 1710.

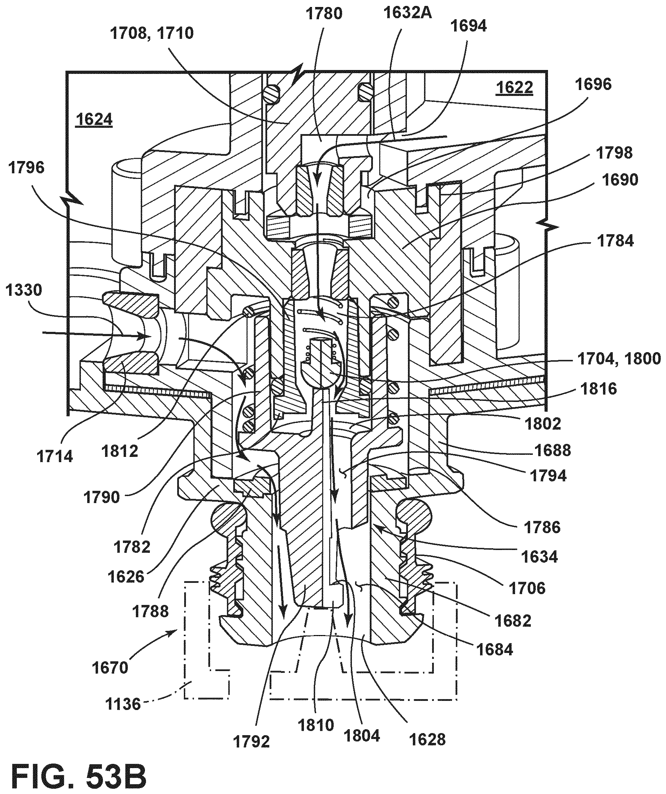

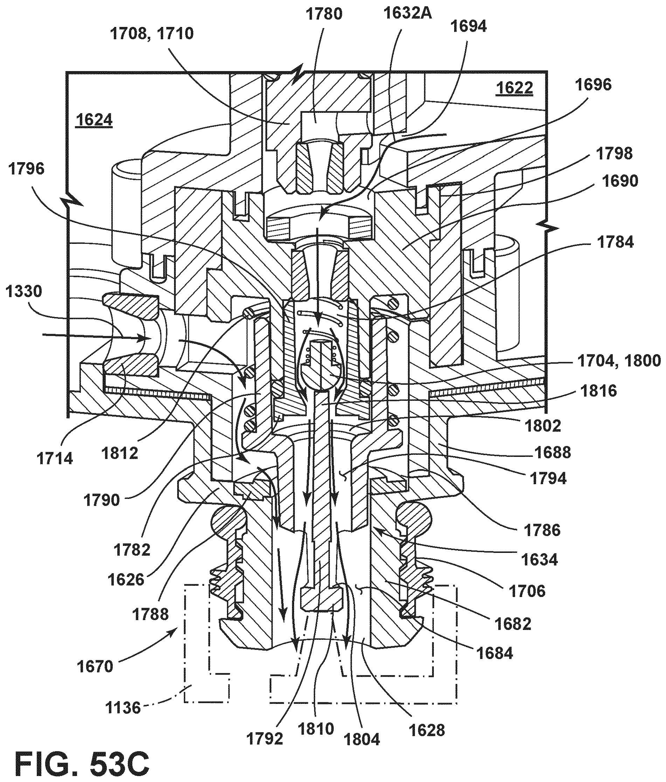

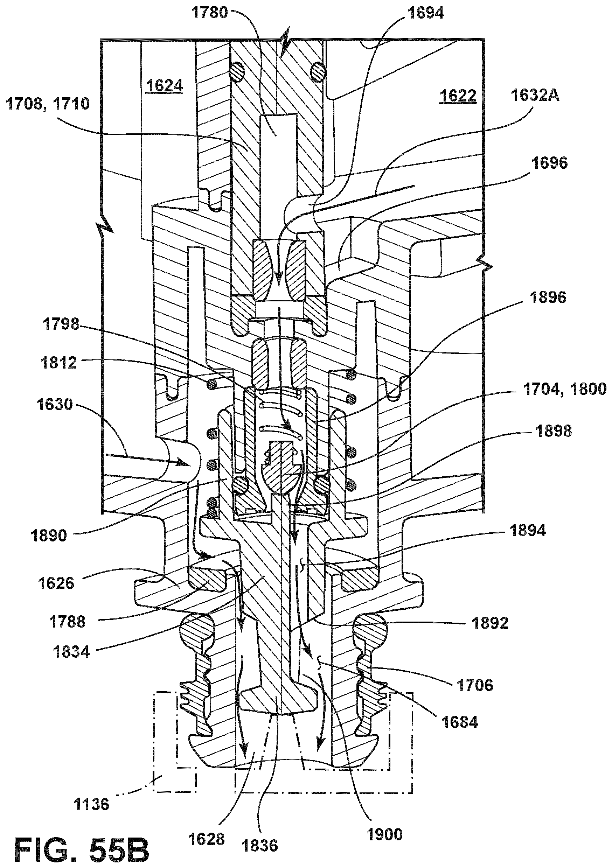

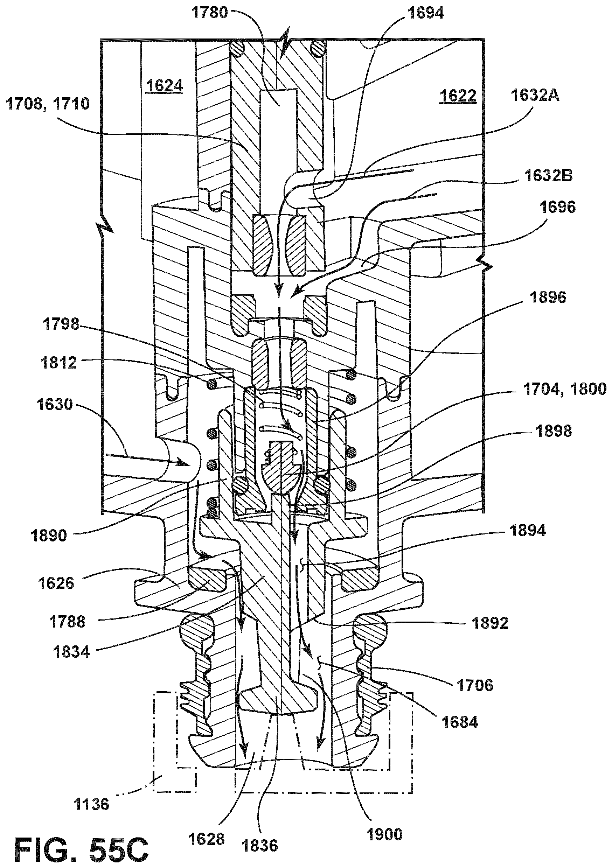

The switch 1762 is operable between the first dispensing position, moving the ratio adjustment lever 1710 to a lowered first position for directing the flow of the second liquid through the first fluid outlet 1694 and blocking the second fluid outlet 1696, and the second dispensing position, moving the ratio adjustment lever 1710 to a raised second position to allow the flow of the second liquid through the second fluid outlet 1696. When the ratio adjustment lever 1710 is in the second position, some of the second liquid may also flow through the first fluid outlet 1694 (see e.g., FIG. 55C) or, alternatively, the first fluid outlet 1694 may be blocked, as illustrated in FIG. 53C. In other words, the first dispensing position can close the second fluid outlet 1696 forcing the second liquid along the second flow path 1632A, and the second dispensing position can close the first fluid outlet 1694 forcing the second liquid along the third flow path 1632B. The second flow path 1632A may dispense the smaller amount of the second liquid compared to the third flow path 1632B or the combination of the second and third flow paths 1632A, 1632B.

Referring still to FIGS. 52-53C, the switch 1762 is operably coupled to a piston 1764 which is rotatably coupled at a first end to the supply tank 1656. A second end of the piston 1764 is configured to slidably engage a guide wall 1766. The second end of the piston 1764 may include an engagement member 1768, such as an elastomeric cap, to facilitate the sliding engagement of the piston 1764 along the guide wall 1766. A biasing member 1770, illustrated as a coil spring, is operably coupled to the piston 1764 to bias the piston 1764 toward the guide wall 1766. The movement of the switch is configured to rotate the piston 1764 and slide the engagement member 1768 of the piston 1764 along with guide wall 1766. The movement of the switch adjusts the piston 1764 vertically between two notched regions 1772, 1774 of the guide wall 1766.

The piston 1764 is coupled with the ratio adjustment lever 1710, operably coupling the ratio adjustment lever 1710 with the switch 1762. Movement of the piston 1764 vertically along the guide wall 1766 is configured to vertically move the ratio adjustment lever 1710 relative to the bottom wall 1676 of the supply tank 1656. The distal end 1708 of the ratio adjustment lever 1710 defines a passage 1780 through which the second liquid can flow. When the switch 1762 is in the first dispensing position, which is a lowered position, the ratio adjustment lever 1710 is configured to be in the lowered first position, aligning the passage 1780 with the first fluid outlet 1694 to allow the second liquid to flow through the passage 1780 and to the cap assembly 1670. Additionally, the distal end 1708 engaging the gasket 1706 reduces or prevents the second liquid from flowing through the second fluid outlet 1696. When the switch 1762 is in the second dispensing position, which is a raised position, the ratio adjustment lever 1710 is configured to be in the raised second position, moving the passage 1780 out of alignment with the first fluid outlet 1694 and moving the distal end 1708 away from the gasket 1706 to allow the second liquid to flow through the second fluid outlet 1696 around the distal end 1708. Additionally, moving the passage 1780 reduces or prevents the second liquid from flowing through the first fluid outlet 1694.

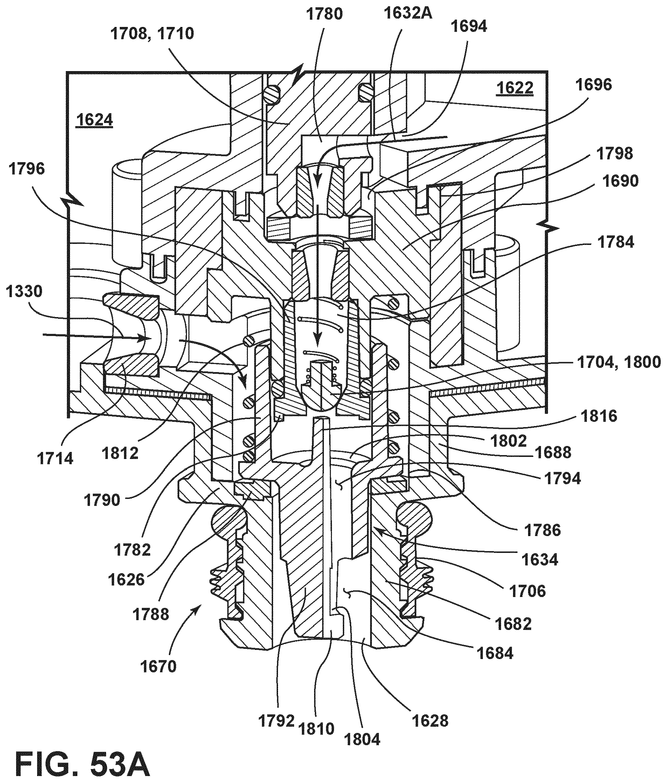

Referring to FIGS. 53A-53C, the cap assembly 1670 at least partially includes or defines a first chamber 1782 in fluid communication with the first reservoir 1622 and a second chamber 1784 in fluid communication with the second reservoir 1624. The first chamber 1782 may be defined between the cap assembly 1670 and the receiving projection 1688 around the plunger 1634. The second chamber 1784 may be defined by the plunger 1634.

The plunger 1634 is operable between the sealed position and an opened position to provide fluid communication between the first and second reservoirs 1622, 1624 and this dispensing outlet 1628. The cap assembly 1670 includes or defines a plunger seat 1786, and the engagement feature 1682 with the dispensing channel 1684 extending from the plunger seat 1786. The engagement feature 1682 generally includes or defines the dispensing outlet 1628. A sealing feature 1788 may extend around the opening into the dispensing channel 1684, and the plunger 1634 can engage the sealing feature 1788 when in the sealed position to generally block the first flow path 1630 upstream of the dispensing channel 1684.

The plunger 1634 includes a stopper portion 1790 and a guide portion 1792 extending from the stopper portion 1790. The stopper portion 1790 extends across the plunger seat 1786 and can engage the plunger seat 1786 to substantially block the first flow path 1630. The guide portion 1792 extends from into the engagement feature 1682. The plunger 1634 defines an interior channel 1794, which includes a receiving portion and a dispensing portion. The receiving portion extends in a first direction through the stopper portion 1790, and the dispensing portion extends in the second direction through the guide portion 1792. The stopper portion 1790 includes the second chamber 1784, such as in an internal housing 1796. The internal housing 1796 houses the plug 1704 and a first biasing member 1798, illustrated as a coil spring. The plug 1704 has a widened head 1800 configured to close an inlet opening 1802 into the dispensing portion of the interior channel 1794 through which the second liquid is configured to flow when the plug 1704 is in an opened position. The plunger 1634 defines at least one outlet opening 1804 proximate to a distal end 1810 thereof for the second liquid to exit the plunger 1634. The outlet opening(s) 1804 may be defined at least partially by an end surface of the plunger 1634 and may also be at least partially defined by the side surface of the plunger 1634.

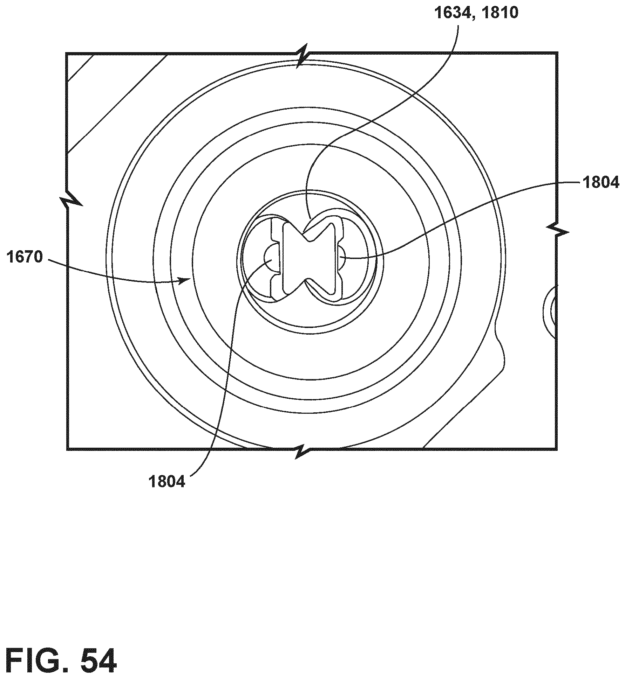

As illustrated in FIG. 54, the distal end 1810 of the plunger 1634 includes a lemniscate or "figure 8" feature for defining the outlet openings 1804. A center of the distal end 1810 protrudes to engage the receiver 1136 (FIG. 35). The outlet openings 1804 may be defined at least partially by the protruding section or may be defined adjacent to the protruding section. The outlet openings 1804 are generally oriented (e.g., open) toward the dispensing outlet 1628, which allows the second liquid to flow vertically through the interior channel 1794 and the dispensing outlet 1628, reducing or preventing the second liquid from mixing with the first liquid until the liquids are received in the receiver 1136 (FIGS. 35).

Referring again to FIGS. 53A-53C, the plunger 1634 is operably coupled with a second biasing member 1812, which is illustrated as a coil spring. The second biasing member 1812 may be disposed around the plunger 1634 to bias the plunger 1634 downward and toward the sealed position. The first and second biasing members 1798, 1812 operably engage the plunger 1634 and the plug 1704 to bias them toward the dispensing outlet 1628 and to the closed and sealed positions, respectively. The plunger 1634 includes an actuating projection 1816, which is generally part of the stopper portion 1790. The actuating projection 1816 is aligned with the plug 1704 when the plunger 1634 is in the sealed position and the plug 1704 is in the closed position. When the supply tank assembly 1618 engages and mates with the receiver 1136 (FIG. 35), the receiver 1136 is configured to actuate or move the plunger 1634, which consequently actuates or moves the plug 1704, overcoming the biasing forces of the biasing members1798, 1812. The receiver 1136 engages the distal end 1708 of the plunger 1634, moving the plunger 1634 toward the plug 1704, which then moves the plug 1704 upward and away from the inlet opening 1802.

Depending on the position of the ratio adjustment lever 1710, different amounts of the second liquid can be dispensed concurrently with the first liquid when the plunger 1634 and the plug 1704 are moved to open the flow paths 1630, 1632A, 1632B. The same amount of the first liquid can be dispensed regardless of the position of the ratio adjustment lever 1710. The combined solution to be mixed at the receiver 1136 (FIG. 35) can have the first ratio of liquids with less of the second liquid, such as for example a 1:7 ratio, when the ratio adjustment lever 1710 is in the lowered position and the second liquid flows along the second flow path 1632A. The combined solution can have the second ratio of liquids with more of the second liquid, such as for example a 1:3 ratio, when the ratio adjustment lever 1710 is in the raised position and the second liquid flows along at least the third flow path 1632B.

The cap assembly 1670 includes a majority of the control features for dispensing the first and second liquids. The removable cap assembly 1670 works with the ratio adjustment lever 1710 to control the concentration or ratio of the cleaning formula. Further, the ratio adjustment lever 1710 extends through the supply tank 1656 and, typically, through the first reservoir 1622 to allow control of the flow of the second liquid at the bottom of the supply tank 1656 from the top of the supply tank 1656, which is more convenient and accessible for the user when the supply tank assembly 1618 is seated on the housing (FIG. 34).

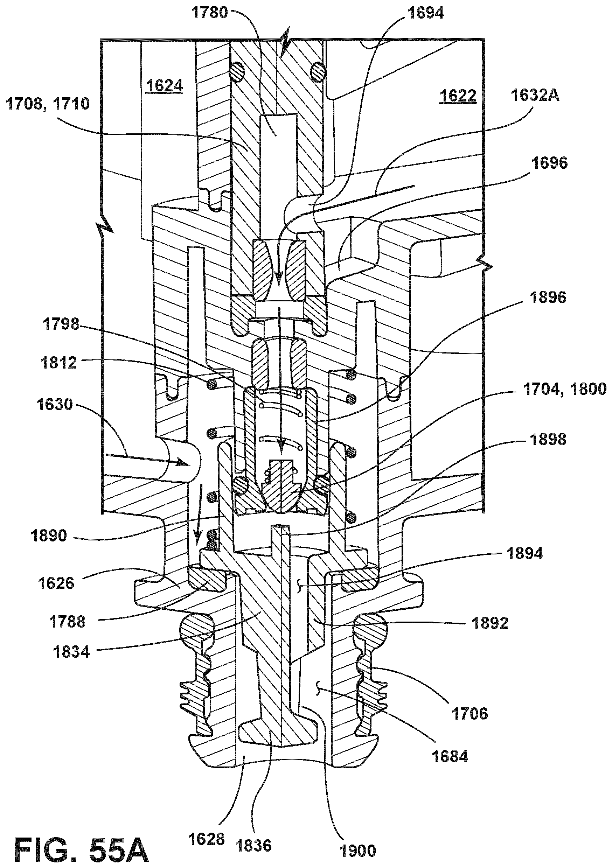

Referring to FIGS. 55A-55C, an additional configuration of a plunger 1834 is illustrated in the supply tank assembly 1618 of FIGS. 50 and 51. The plunger 1834 is substantially similar to the plunger 1634 illustrated in FIGS. 53A-53C, with a distal end 1836 more similar to the plunger 1134 in FIGS. 47A-47C. The plunger 1834 includes a stopper portion 1890 and a guide portion 1892 extending from the stopper portion 1890. The stopper portion 1890 extends across the plunger seat 1786 and can engage the plunger seat 1786 to substantially block the first flow path 1630. The guide portion 1892 extends into the engagement feature 1682. The plunger 1834 defines an interior channel 1894, which includes a receiving portion and a dispensing portion. The receiving portion extends in a first direction through the stopper portion 1890, and the dispensing portion extends the second direction along the guide portion 1892.

The stopper portion 1890 includes the second chamber 1784, such as in an internal housing 1896, and an actuating projection 1898. The internal housing 1896 houses the plug 1704 and the first biasing member 1798, illustrated as a coil spring. The plunger 1834 defines at least one outlet opening 1900 proximate to the distal end 1836 thereof, for the second liquid to exit the plunger 1834. The outlet opening(s) 1900 may be defined at least partially by an end surface of the plunger 1834 and may also be at least partially defined by the side surface of the plunger 1834.

The distal end 1836 is widened to extend across the dispensing channel 1684 to provide an increased surface area for engaging the receiver 1136 (FIG. 35). This may be advantageous for providing better engagement between the receiver 1136 and the supply tank 1656 compared to smaller or narrower surface areas. Accordingly, in this configuration, the plunger 1834 can include the actuating projection 1898, the plug 1704 can be biased in the same direction as the plunger 1834, and the plunger 1834 can have the widened distal end 1836.

Referring to FIGS. 1-55C, the supply tank assemblies 18, 518, 818 disclosed herein are single units that can dispense one type of liquid or two types of liquids depending on the position of the switch assemblies 320, 720, 1020. Additionally, the supply tank assemblies 1118, 1618 can dispense two types of liquids at different concentrations or ratios depending on the position of the switch assemblies 1350, 1720. The supply tank assemblies 18, 518, 818, 1118, 1618 can be interchanged on different cleaning apparatuses 10 and provide different ratios of the two liquids when dispensing both liquids. The predefined ratios may be based on flow rates of the first and second liquids in one or more components of the supply tank assembly 18, 518, 818, 1118, 1618 to automatically form the mixed cleaning solution, without the user manually measuring the liquids to be used. Accordingly, supply tank assemblies 18, 518, 818, 1118, 1618 can automatically dispense predefined ratios of the two liquids to form the mixed cleaning solution, which can provide different concentrations of cleaning formulas for use in different cleaning processes.

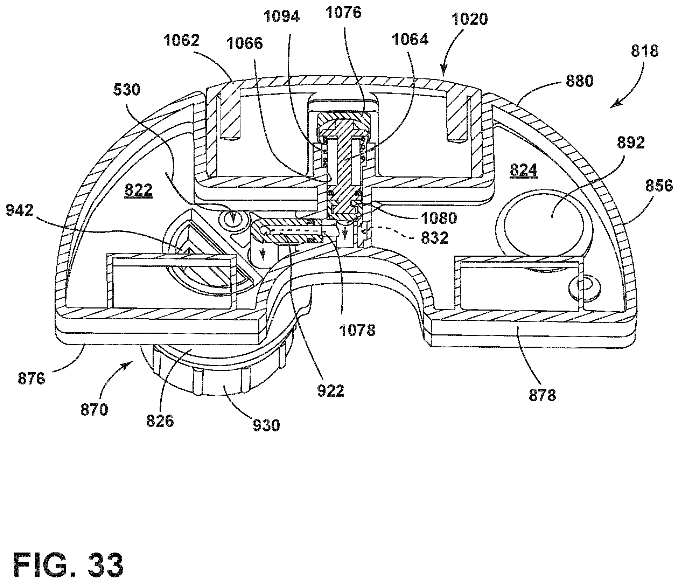

The supply tank assemblies 18, 518, 818, 1118, 1618 can concurrently dispense the two liquids, which can be mixed substantially or entirely outside of the supply tank assembly 18, 518, 1118, 1618, as in the configurations in FIGS. 6-27 and FIGS. 37-55C, or in the supply tank assembly 818, as in the configuration in FIGS. 32-38. In other words, the pump 20, 1120 can draw the first and second liquids separately from the supply tank assembly 18, 518, 1118, 1618 before mixing at the receiver 36 in the configurations in FIGS. 6-27 and FIGS. 37-55C and can draw the mixed cleaning solution from the dosing chamber 950 in the configuration in FIGS. 33-38. The cleaning apparatus 10 can include one receiver 36, 1136 and one pump 20, 1120 for directing one liquid out of the supply tank assembly 18, 518, 818 or both liquids out of the supply tank assembly 18, 518, 818, 1118, 1618 concurrently.

In operation, one of the supply tank assemblies 18, 518, 818, 1118, 1618 is positioned on the first seat 130, 1230 and engages the receiver 36, 1136. The receiver 36, 1136 engages the plunger 34, 334, 534, 834, 1134, 1634, 1834 to move the plunger 34, 334, 534, 834, 1134, 1634, 1834 to the opened position. With the plunger 34, 334, 534, 834, 1134, 1634, 1834 in the opened position, the first flow path 30, 530, 830, 1130, 1630 is opened allowing first liquid to flow from the first reservoir 22, 522, 822, 1122, 1622 and through the dispensing outlet 28, 528, 828, 1128, 1628, and the second flow path 32, 532, 832, 1132A, 1632A and/or the third flow path 1132B, 1632B are opened allowing the second liquid to flow from the second reservoir 24, 524, 824, 1124, 1624 and through the dispensing outlet 28, 528, 828, 1128, 1628. Some liquid may flow through the cap assembly 170, 570, 870, 1170, 1670 and/or into the receiver 36, 1136 upon initial engagement with the receiver 36, 1136, while most of the liquid moves in response to activation of the pump 20, 1120.

When the supply tank assembly 18, 518, 818, 1118, 1618 is initially engaged with the receiver 36, 1136, the umbrella valves 432, 434, 1532, 1534, the air tubes 450, 452, and/or the air channels 1550 generally retain the liquids in the respective reservoirs 22, 24, 522, 524, 822, 824, 1122, 1124, 1622, 1624. When the pump 20, 1120 is activated, the pump 20, 1120 draws the liquids from the supply tank assembly 18, 518, 818, 1118, 1618 resulting in a negative pressure in the supply tank assembly 18, 518, 818, 1118, 1618. The negative pressure opens the umbrella valves 432, 434, 1532, 1534 or draws air through the air tubes 450, 452 or air channels 1550 to replace the liquid that was removed from the supply tank 56, 556, 856, 1156, 1656. These features assist with mitigating pressure change and allowing pressure equilibrium to be maintained. Further, these features retain a stable mixing ratio between the two liquids, promoting smooth flow and mixing of the liquids.

Further, the supply tank assemblies 18, 518, 818 can be used in the single-dispensing mode, where the first liquid alone is directed by the pump 20, and the dual-dispensing mode, where first liquid and the second liquid are directed out of the supply tank 56, 556, 856 by the pump 20. The supply tank assemblies 1118, 1618 can be used in a first ratio dispensing mode for dispensing a first amount of the second liquid to form the combined solution having the first ratio between the first and second liquids, and a second ratio dispensing mode for dispensing a second amount of the second liquid to form the combined solution having the second ratio. This allows the supply tank assemblies 1118, 1618 to dispense different amounts of the second liquid with the same amount of the first liquid to form different concentrations of the cleaning solution. Further, the supply tank assemblies 1118, 1618 can dispense a single liquid if one of the reservoirs 1122, 1124, 1622, 1624 is empty or both are filled with the same liquid. The pump 20, 1120 is configured to direct the first liquid or both first and second liquids through the cleaning apparatus 10 to form the pressurized fluid flow that is then dispensed via the spray outlet 60 onto the surface being cleaned.

When the user pulls an actuator (such as the trigger on the wand 78), a valve is opened and liquid from the supply tank assembly 18, 518, 818, 1118, 1618 is pumped from the supply tank assembly 18, 518, 818, 1118, 1618 through the fluid line 82, 1182 to the spray outlet 60 for spraying onto the surface being cleaned. When the user releases the actuator, the liquid generally stops flowing. When the user has adjusted the switch assembly 320, 720, 1020 to the dual-dispensing position, both liquids travel to the spray outlet 60. When the switch assembly 320, 720, 1020 is in the single-dispensing position, the first liquid flows to the spray outlet 60 without the second liquid. When the user has adjusted the switch assembly 1350, 1720 to the first dispensing position, a first amount of the second liquid travels along the second flow path 1132A, 1632A and to the spray outlet 60. When the switch assembly 1350, 1720 is in the second dispensing position, a second amount of the second liquid travels along the third flow path 1132B, 1632B and to the spray outlet 60.

The supply tank assemblies 18, 518, 818, 1118, 1618 can be used with the portable cleaning apparatus 10 in which the liquid or liquids travel through the accessory hose 88 to the spray outlet 60 in the tool 66. Additionally or alternatively, the supply tank assemblies 18, 518, 818, 1118, 1618 can be used with the upright cleaning apparatus 10 in which the liquid is sprayed from the spray outlet 60 in a foot of the upright cleaning apparatus. The supply tank assemblies 18, 518, 818, 1118, 1618 disclosed herein are substantially similar with differences being focused on the switch assemblies 320, 720, 1020, 1350, 1720 and other dispensing components, such as the bottom walls 176, 576, 876, 1176, 1676, the necks 26, 526, 826, 1126, 1626, and the removable cap assemblies 170, 570, 870, 1170, 1670. Moreover, the different cap assemblies 170, 570, 870, 1170, 1670 can be used with the different switch assemblies 320, 720, 1020, 1350, 1720 and/or different supply tanks 56, 356, 856, 1156, 1656 without departing from the teachings herein.

Use of the present devices and systems may provide for a variety of advantages. For example, the supply tank assembly 18, 518, 818, 1118, 1618 provides a single tank or unit that can house two distinct liquids and dispense one or both liquids and/or both liquids in different ratios for use in the cleaning process using a single plunger 34, 334, 534, 834, 1134, 1634, 1834 a single receiver 36, 1136, and a single pump 20, 1120. Further, the supply tank assembly 18, 518, 818, 1118, 1618 can maximize efficiency of the cleaning process by being able to operate in both the single-dispensing mode and the dual-dispensing mode or in the first ratio dispensing mode and the second ratio dispensing mode for adjusting the ratio between the liquids.

The user can select between supplying one liquid or a combination of liquids in a predefined ratio using a single supply tank assembly 18, 518, 818 or between supplying the first amount of the second liquid and the second amount of the second liquid to adjust the concentration of the subsequent combined mixture with the single supply tank assembly 1118, 1618. Further, the inclusion of one pump 20, 1120 and one receiver 36, 1136 in the cleaning apparatus 10 can maximize the manufacturing process for the cleaning apparatus 10. Also, the supply tank assemblies 18, 518, 818, 1118, 1618 may be interchanged between different cleaning apparatuses 10 and may also be interchanged to adjust the predefined ratio of two liquids. Further, the cap assemblies 170, 570, 870, 1170, 1670 are removable from the supply tanks 56, 556, 856, 1156, 1656. The removable cap assemblies 170, 570, 870, 1170, 1670 include a majority of the functioning components for controlling the flow of the first and second liquids, including a valve assembly with the plunger 34, 334, 534, 834, 1134, 1634, 1834 and/or the plug 264, 1404. Additional benefits or advantages may be realized and/or achieved.

The device disclosed herein is further summarized in the following paragraphs and is further characterized by combinations of any and all various aspects described herein.

According to another aspect of the present disclosure, a cleaning apparatus includes a housing having a receiver, a suction source, a recovery tank assembly in fluid communication with the suction source, a supply tank assembly, and a pump operably coupled with the supply tank assembly. The supply tank assembly includes first and second reservoirs for housing the first and second liquids and a dispensing outlet. A first flow path for the first liquid is defined from the first reservoir to the dispensing outlet. A second flow path for the second liquid is defined from the second reservoir to the dispensing outlet. A plunger is disposed proximate to the dispensing outlet. A plug is disposed in the second flow path upstream of the plunger. The plunger is biased toward a sealed position to seal the first flow path, and the plug is biased toward a closed position to seal the second flow path. The supply tank assembly is configured to engage the receiver which, consequently, moves the plunger to an opened position to open the first flow path for the first liquid to flow around the plunger and through the dispensing outlet. Movement of the plunger to the opened position is configured to open the second flow path for the second liquid to flow through an interior channel of the plunger and through the dispensing outlet. The supply tank assembly is configured to concurrently dispense the first liquid and the second liquid to be mixed outside of the supply tank assembly when the plunger and the plug are in the opened positions.

According to another aspect of the present disclosure, movement of a plunger to an opened position is configured to move a plug to an opened position to open a second flow path for a second liquid to flow through an interior channel of the plunger and through a dispensing outlet.

According to another aspect of the present disclosure, a distal end of a plunger at least partially defines at least one outlet opening in fluid communication with an interior channel. A second liquid is configured to flow through the at least one outlet opening to exit the plunger.

According to another aspect of the present disclosure, a plunger includes a stopper portion and a guide portion extending from the stopper portion. At least one outlet opening is at least partially defined by a side of the guide portion.

According to another aspect of the present disclosure, a plunger includes a stopper portion and a guide portion extending from the stopper portion. An interior channel extends from a cavity defined by the stopper portion and through the guide portion.

According to another aspect of the present disclosure, a plunger at least partially defines at least one fluid outlet through which a first liquid is configured to flow toward a dispensing outlet.

According to another aspect of the present disclosure, a plunger includes an elongated guide portion that has guide projections extending therefrom. At least one fluid outlet includes multiple fluid outlets formed by the guide projections.

According to another aspect of the present disclosure, a supply tank assembly includes a switch assembly operable between a dual-dispensing position to open a second flow path upstream of a plug and a single-dispensing position to seal the second flow path upstream of the plug. A second liquid is retained in the supply tank assembly when the switch assembly is in the single-dispensing position.

According to another aspect of the present disclosure, a pump is configured to draw a first liquid from a supply tank assembly when a switch assembly is in a single-dispensing position. The pump is configured to draw first and second liquids from the supply tank assembly to be mixed at a receiver when the switch assembly is in dual-dispensing position.

According to another aspect of the present disclosure, a first flow path and a second flow path are separate within a supply tank assembly.

According to another aspect of the present disclosure, a supply tank assembly includes a neck and a cap assembly removably coupled with the neck. The cap assembly includes a cap for engaging the neck, a guide body is at least partially disposed in the neck, a plunger, and a plug. The cap assembly forms at least a portion of a first flow path and a second flow path.

According to another aspect of the present disclosure, a cap assembly includes a first biasing member configured to bias a plunger to a sealed position and a second biasing member configured to bias a plug to a closed position.

According to another aspect of the present disclosure, a a cleaning apparatus includes a housing having a receiver. A supply tank assembly is configured to engage the receiver. A pump is operably coupled with the supply tank assembly. The supply tank assembly includes a first reservoir for housing a first liquid, a second reservoir for housing a second liquid, a neck, and a dispensing outlet. The first liquid is configured to flow along a first flow path from the first reservoir to the dispensing outlet. The second liquid is configured to flow along a second flow path from the second reservoir to the dispensing outlet. A switch assembly is operable between a dual-dispensing position to open the second flow path and a single-dispensing position to seal the second flow path. A plunger is disposed at least partially in the neck. The plunger is operable between a sealed position for sealing the first flow path and an opened position for allowing the first liquid to flow along the first flow path, around the plunger, and to the dispensing outlet. A plug is disposed in the second flow path downstream of the switch assembly. The plug is operable between a closed position sealing the second flow path and an opened position to allow the second liquid to flow through the plunger and to the dispensing outlet. Movement of the plunger to the opened position is configured to move the plug to the opened position. When the plunger and the plug are in the opened positions and the switch assembly is in the dual-dispensing position, the first liquid and the second liquid are configured to be concurrently dispensed through the dispensing outlet to be mixed outside of the supply tank assembly.

According to another aspect of the present disclosure, a supply tank assembly includes a first biasing member configured to bias a plunger to a sealed position. A second biasing member is configured to bias a plug to a closed position.

According to another aspect of the present disclosure, a plunger at least partially defines at least one fluid outlet through which a first liquid is configured to flow and at least one outlet opening through which a second liquid is configured to flow. The at least one fluid outlet and the at least one outlet opening are in fluid communication with a dispensing outlet.

According to another aspect of the present disclosure, an outer surface of a plunger at least partially defines at least one fluid outlet. At least one outlet opening is in fluid communication with an interior channel defined through the plunger.

According to another aspect of the present disclosure, at least one outlet opening is at least partially defined by a distal end of a plunger proximate to a dispensing outlet.

According to another aspect of the present disclosure, a second liquid is configured to flow around a plug and into an interior channel defined by a plunger.

According to another aspect of the present disclosure, a first flow path to a dispensing outlet is separate from a second flow path to the dispensing outlet.

According to another aspect of the present disclosure, a supply tank assembly further includes a first through-hole in fluid communication with a first reservoir and a second through-hole in fluid communication with a second reservoir. First and second umbrella valves are configured to open and close the first and second through-holes, respectively, to dynamically balance pressure in the first and second reservoirs with an area external to the supply tank assembly when a pump is active.

According to another aspect of the present disclosure, a switch assembly is upstream of a plug. A pump is configured to draw a first liquid from the supply tank assembly and a second liquid is retained in the supply tank assembly when the switch assembly is in a single-dispensing position position.

According to another aspect of the present disclosure, a supply tank assembly includes a cap assembly configured to engage and be selectively removable from a neck. The cap assembly includes a plunger and a plug for controlling flow of a first liquid and a second liquid.

According to another aspect of the present disclosure, a cleaning apparatus includes a housing having a receiver and a supply tank assembly configured to engage the receiver. The supply tank assembly includes first and second reservoirs for housing first and second liquids. A first chamber is in fluid communication with the first reservoir. A second chamber is in selective fluid communication with the second reservoir. A dispensing outlet. A first flow path for the first liquid is defined from the first reservoir, through the first chamber, and to the dispensing outlet. A second flow path for the second liquid is defined from the second reservoir, through the second chamber, and to the dispensing outlet. A plunger is disposed in the first flow path and the second flow path. The plunger defines an interior channel and at least one outlet opening. When the plunger is in a sealed position, the plunger forms a seal between the first chamber and the dispensing outlet and between the second chamber and the interior channel. When the plunger is in an opened position, the first liquid is configured to flow from the first chamber, around the plunger, and to the dispensing outlet and the second liquids is configured to flow from the second chamber, through the interior channel, through the at least one outlet opening, and to the dispensing outlet. The plunger is configured to move to the opened position when the supply tank assembly engages the receiver to dispense both the first liquid and the second liquid to be mixed outside of the supply tank assembly.

According to another aspect of the present disclosure, an interior channel extends in a first direction through a stopper portion of a plunger and in a second direction toward a dispensing outlet through a guide portion of the plunger.

According to another aspect of the present disclosure, at least one outlet opening is defined proximate to a distal end of a plunger.

According to another aspect of the present disclosure, at least one outlet opening is defined by a side of a plunger.

According to another aspect of the present disclosure, a supply tank assembly includes a switch assembly operable between a dual-dispensing position and a single-dispensing position. A second liquid is configured to flow from a second reservoir to a second chamber when the switch assembly is in the dual-dispensing position and is configured to be retained in the second reservoir when the switch assembly is in the single-dispensing position.

According to another aspect of the present disclosure, a pump is operably coupled with a supply tank assembly. The supply tank assembly includes a first through-hole in fluid communication with the first reservoir, a second through-hole in fluid communication with the second reservoir, and first and second umbrella valves configured to open and close the first and second through-holes, respectively, to allow air into at least one of the first and second reservoirs when the supply tank assembly is engaged with a receiver and the pump is active.

According to another aspect of the present disclosure, a supply tank assembly includes a removable cap assembly. A plunger is included in the removable cap assembly.

According to another aspect of the present disclosure, a cleaning apparatus includes a housing having a receiver, a pump, and a supply tank assembly configured to engage the receiver. The supply tank assembly includes first and second reservoirs for housing first and second liquids. A first through-hole is in fluid communication with the first reservoir. A second through-hole is in fluid communication with the second reservoir. First and second umbrella valves are configured to open and close the first and second through-holes, respectively, to allow air into at least one of the first and second reservoirs when the supply tank assembly is engaged with the receiver and the pump is active. A chamber is in fluid communication with a dispensing outlet and each of the first and second reservoirs, and wherein the first and second liquids are configured to flow into the chamber to form a cleaning solution. A plunger is operable between a sealed position closing the chamber and an opened position to dispense the cleaning solution through the dispensing outlet.

According to another aspect of the present disclosure, a supply tank assembly includes a switch assembly operable between a dual-dispensing position and a single-dispensing position. A second liquid is configured to flow into a chamber when the switch assembly is in a dual-dispensing position and is configured to be retained in the second reservoir when the switch assembly is in a single-dispensing position.

According to another aspect of the present disclosure, a cleaning apparatus includes a housing having a receiver and a supply tank including a first reservoir for housing a first liquid and a second reservoir for housing a second liquid. A cap assembly is operably coupled to the supply tank. A cap assembly includes an engagement feature for engaging the receiver. A plunger extends at least partially into a dispensing channel defined by the engagement feature. A first flow path for the first liquid is defined from the first reservoir, around the plunger, and through at least one fluid outlet at least partially defined by the plunger. The second flow path for the second liquid is defined from the second reservoir, through an interior channel of the plunger, and through an outlet opening defined at least partially by a distal end of the plunger. A plug is disposed in the second flow path upstream of the plunger. The plunger is biased toward a sealed position and the plug is biased toward a closed position to seal the first and second flow paths. The plunger is configured to move to an opened position to provide fluid communication between the first reservoir and the at least one fluid outlet for the first liquid which, consequently, moves the plug to an opened position to provide fluid communication between the second reservoir and the outlet opening for the second liquid to concurrently dispensing the first and second liquids from the supply tank to be mixed outside of the supply tank and the cap assembly.

According to another aspect of the present disclosure, a cap assembly is operably coupled to a neck of a supply tank assembly and includes a cap for engaging the neck. A plunger is disposed at least partially in the neck.

According to another aspect of the present disclosure, a cap assembly includes a neck and is coupled to a supply tank assembly.

According to another aspect of the present disclosure, a supply tank assembly for a cleaning apparatus includes first and second reservoirs for housing first and second liquids and a neck. A cap assembly is operably and selectively coupled to the neck. The cap assembly includes a plunger disposed at least partially in the neck. A first flow path for the first liquid is defined from the first reservoir, around the plunger, and to the dispensing outlet. A second flow path for the second liquid is defined from the second reservoir, through the plunger, and to the dispensing outlet. A switch assembly is operable between a dual-dispensing position to open the second flow path upstream of the plunger and a single-dispensing position to seal the second flow path upstream of the plunger. The plunger is biased toward a sealed position to seal the first flow path and the second flow path. The plunger is configured to move to an opened position to open the first flow path and the second flow path to concurrently dispense the first liquid and the second liquid to be mixed outside of said supply tank assembly when the switch assembly is in the dual-dispensing position. The second liquid is configured to be retained in said supply tank assembly when the switch assembly is in the single-dispensing position.

According to another aspect of the present disclosure, a supply tank assembly for a cleaning apparatus includes a supply tank including first and second reservoirs for housing first and second liquids, a neck, and a removable cap assembly configured to engage the neck. The removable cap assembly includes a plunger configured to be disposed at least partially in the neck. A first flow path for the first liquid is defined from the first reservoir, around the plunger, and to the dispensing outlet when the removable cap assembly is coupled with the neck. A second flow path for the second liquid is defined from the second reservoir, through the plunger, and to the dispensing outlet when the removable cap assembly is coupled with the neck. A first biasing member is configured to bias the plunger to a sealed position to seal at least the first flow path. A plug is disposed in the second flow path upstream of the plunger. A second biasing member is configured to bias the plug to a closed position to seal the second flow path upstream of the plunger. The cap assembly is configured to engage a receiver of said cleaning apparatus which, consequently, moves the plunger to an opened position to open the first flow path for the first liquid to flow around the plunger and through the dispensing outlet. Movement of the plunger to the opened position is configured to move the plug to an opened position to open the second flow path for the second liquid to flow through an interior channel of the plunger and through the dispensing outlet to concurrently dispense the first liquid and the second liquid to be mixed outside of said supply tank assembly.

According to another aspect, a cleaning apparatus includes a housing having a receiver, a suction source, a recovery tank assembly in fluid communication with the suction source, a supply tank assembly, and a pump operably coupled with the supply tank assembly. The supply tank assembly includes first and second reservoirs for housing first and second liquids, respectively, and a dispensing outlet. A first flow path for the first liquid is defined from the first reservoir to the dispensing outlet, and a second flow path and a third flow path for the second liquid are defined from the second reservoir to the dispensing outlet. The supply tank assembly also includes a plunger disposed proximate to the dispensing outlet and a plug disposed in the second and third flow paths upstream of the plunger. The plunger is biased toward a sealed position to seal the first flow path and the plug is biased toward a closed position to seal the second and third flow paths. The supply tank assembly is configured to engage the receiver which, consequently, moves the plunger to an opened position to open the first flow path for the first liquid to flow around the plunger and through the dispensing outlet. The supply tank assembly also includes a ratio adjustment lever operable between a first position closing the third flow path and a second position opening the third flow path. Movement of the plunger to the opened position is configured to move the plug to an opened position to open the second flow path when the ratio adjustment lever is in the first position and open the second and third flow paths when the ratio adjustment lever is in the second position for the second liquid to flow through an interior channel of the plunger and through the dispensing outlet. The supply tank assembly is configured to concurrently dispense the first and second liquids to be mixed outside of the supply tank assembly when the plunger and the plug are in the opened positions.

According to another aspect of the present disclosure, a supply tank assembly includes a first fluid outlet and a second fluid outlet fluidly coupling a second reservoir with a dispensing outlet. A ratio adjustment lever blocks the second fluid outlet and the first fluid outlet remains open when the ratio adjustment lever is in a first position.

According to another aspect of the present disclosure, a second fluid outlet is disposed proximate to a plunger at a bottom of a supply tank assembly and a switch for controlling a ratio adjustment lever is disposed proximate to a top of the supply tank assembly.

According to another aspect of the present disclosure, a supply tank assembly includes a switch assembly including a switch operably coupled with a ratio adjustment lever. The switch is disposed proximate to a top wall of the supply tank assembly. The ratio adjustment lever extends along a height of the supply tank assembly between the top wall and a bottom wall.

According to another aspect of the present disclosure, a supply tank assembly includes a first through-hole in fluid communication with a first reservoir, a second through-hole in fluid communication with a second reservoir, and first and second umbrella valves extending through the first and second through-holes, respectively. The first and second umbrella valves are configured to deform to allow air into at least one of the first and second reservoirs when the supply tank assembly is engaged with a receiver and a pump is active.

According to another aspect of the present disclosure, a supply tank assembly includes a first airflow aperture in fluid communication with a first reservoir and proximate to a first through-hole and a second airflow aperture in fluid communication with a second reservoir and proximate to a second through-hole. First and second umbrella valves are configured to open and close the first and second through-holes and the first and second airflow apertures, respectively, in response to a pump.

According to another aspect of the present disclosure, a supply tank assembly includes a supply tank with an actuating projection configured to engage a plug to open at least a second flow path in response to movement of a plunger to an opened position.

According to another aspect of the present disclosure, a plunger includes an actuating projection configured to engage a plug to adjust a plug to an opened position in response to movement of a plunger to an opened position.

According to another aspect of the present disclosure, a cleaning apparatus is configured to dispense first and second liquids at a first ratio with a ratio adjustment lever in a first position and the first and second liquids at a second ratio with the ratio adjustment lever in a second position resulting in different concentrations of a combined cleaning solution.

According to another aspect of the present disclosure, a supply tank assembly includes a supply tank and a cap assembly selectively and removably coupled with a lower portion of the supply tank. The cap assembly includes a plunger and a plug.

According to another aspect of the present disclosure, a supply tank assembly for a cleaning apparatus includes a supply tank including a first reservoir for housing a first liquid and a second reservoir for housing a second liquid. The supply tank assembly also includes a cap assembly selectively coupled to the supply tank. The cap assembly includes a plunger and a plug operably coupled with the plunger. A first flow path for the first liquid is defined from the first reservoir, around the plunger, and to a dispensing outlet. Second and third flow paths for the second liquid are defined from the second reservoir, around the plug, through the plunger, and to the dispensing outlet. The supply tank assembly includes a switch assembly including a ratio adjustment lever operable between a first position closing the third flow path upstream of the plug and a second position opening the third flow path upstream of the plug. The plunger is configured to move to an opened position to open the first flow path and, consequently, move the plug to an opened position to open the second flow path when the ratio adjustment lever is in the first position to concurrently dispense the first liquid and the second liquid to be mixed outside of said supply tank assembly and form a solution with a first predefined ratio of the first and second liquids. The plunger is also configured to move to the opened position to open the first flow path and move the plug to the opened position to open the second and third flow paths when the ratio adjustment lever is in the second position to concurrently dispense the first liquid and the second liquid to be mixed outside of said supply tank assembly and form a solution with a second predefined ratio of the first and second liquids.

According to another aspect of the present disclosure, a cap assembly is selectively coupled to a lower portion of a supply tank. A switch of a switch assembly is coupled to an upper portion of the supply tank. The switch is operably coupled with a ratio adjustment lever to move the ratio adjustment lever between first and second positions.

According to another aspect of the present disclosure, a switch assembly includes a housing extending through a first reservoir and a ratio adjustment lever extends in the housing.

According to another aspect of the present disclosure, a ratio adjustment lever extends along a height of a supply tank from proximate a switch to proximate a cap assembly.

According to another aspect of the present disclosure, a supply tank defines a connecting enclosure in fluid communication with a second reservoir for directing a second liquid toward a cap assembly. First and second fluid outlets are defined in the connecting enclosure for fluidly coupling the second reservoir with a dispensing outlet.

According to another aspect of the present disclosure, a connecting enclosure extends across a first reservoir. The connecting enclosure includes a lower cutout to provide a passage for fluidly coupling portions of a first reservoir on opposing sides of the connecting enclosure.

According to another aspect of the present disclosure, a switch assembly is configured to close a second fluid outlet with a ratio adjustment lever in a first position and open the second fluid outlet with the ratio adjustment lever in a second position.

According to another aspect of the present disclosure, a cap assembly includes a first biasing member operably coupled with a plunger and a second biasing member operably coupled with a plug.

According to another aspect of the present disclosure, a first biasing member is configured to bias a plunger in a first direction toward a sealed position, and a second biasing member is configured to bias a plug in a second direction to a closed position. The second direction opposes the first direction.

According to another aspect of the present disclosure, a supply tank includes an actuating projection configured to engage a plug to open second and third flow paths.

According to another aspect of the present disclosure, a supply tank assembly for a cleaning apparatus includes a supply tank including a first reservoir for housing a first liquid and a second reservoir for housing a second liquid, and a valve assembly operably coupled with the supply tank. The valve assembly includes a plunger defining an interior channel. A first flow path for the first liquid is defined from the first reservoir, around the plunger, and to a dispensing outlet. The valve assembly also includes a plug operably coupled with the plunger. Second and third flow paths for the second liquid are defined from the second reservoir, around the plug, through the interior channel, and to the dispensing outlet. The supply tank assembly also includes a ratio adjustment lever operable between a first position closing the third flow path upstream of the plug and a second position opening the third flow path upstream of the plug. A plunger is configured to move to an opened position, which, consequently moves the plug to an opened position to concurrently dispense the first and second liquids to be mixed outside of said supply tank assembly and form a combined solution of the first and second liquids. The combined solution has a first ratio of the first and second liquids in response to the ratio adjustment lever being in the first position and a second ratio in response to the ratio adjustment lever being in the second position.

According to another aspect of the present disclosure, a cleaning apparatus includes a housing having a receiver, a suction source, and a recovery tank assembly in fluid communication with the suction source. The cleaning apparatus includes a supply tank including a first reservoir for housing a first liquid and a second reservoir for housing a second liquid, a pump operably coupled with the supply tank, and a valve assembly operably coupled with the supply tank. The valve assembly includes a plunger defining an interior channel. A first flow path for the first liquid is defined from the first reservoir, around the plunger, and to a dispensing outlet. The valve assembly also includes a plug operably coupled with the plunger. Second and third flow paths for the second liquid are defined from the second reservoir, around the plug, through the interior channel, and to the dispensing outlet. The supply tank assembly also includes a ratio adjustment lever operable between a first position closing the third flow path upstream of the plug and a second position opening the third flow path upstream of the plug. A plunger is configured to move to an opened position, which, consequently, adjusts the plug to an opened position to concurrently dispense the first and second liquids to be mixed outside of said supply tank assembly and form a combined solution of the first and second liquids. The combined solution has a first ratio of the first and second liquids in response to the ratio adjustment lever being in the first position and a second ratio in response to the ratio adjustment lever being in the second position.

According to another aspect of the present disclosure, a greater amount of a second liquid is dispensed when a ratio adjustment lever is in a second position. A same amount of a first liquid is dispensed when the ratio adjustment lever is in first and second positions.

According to another aspect of the present disclosure, a switch operably is coupled with an upper portion of a supply tank and a ratio adjustment lever for moving the ratio adjustment lever between first and second positions.

According to another aspect of the present disclosure, a plunger defines outlet openings in a side surface thereof.

According to another aspect of the present disclosure, a distal end of a plunger includes outwardly extending protrusions to increase a surface area of the distal end for engaging a receiver of said cleaning apparatus.

According to another aspect of the present disclosure, a ratio adjustment lever is configured to move between a top wall and a bottom wall of a supply tank when moving between first and second positions.

According to another aspect of the present disclosure, reservoir inlets for the first and second reservoirs are defined in a top wall of a supply tank.

According to another aspect of the present disclosure, a ratio adjustment lever closes a third flow path in a first position and opens the third flow path in a second position.

According to another aspect of the present disclosure, a second flow path remains open with a ratio adjustment lever in first and second positions.

According to another aspect of the present disclosure, a ratio adjustment lever opens a second flow path and closes a third flow path in a first position. The ratio adjustment lever opens the third flow path and closed the second flow path in a second position.

According to another aspect of the present disclosure, a supply tank assembly is configured to selectively dispense first and second liquids at a first ratio and the first and second liquids at a second ratio to form the combined solution having different concentrations.

According to another aspect present disclosure, movement of a plunger to an opened position is configured to move a plug to an opened position to open a second flow path.

According to another aspect present disclosure, a first flow path for a first liquid is defined from a first reservoir, around a plunger, and to a dispensing outlet. Second and third flow paths for a second liquid are defined from the second reservoir, around a plug, through the plunger, and to the dispensing outlet.

According to another aspect present disclosure, a switch assembly includes a ratio adjustment lever operable between a first position closing a third flow path upstream of a plug and a second position opening the third flow path upstream of the plug. A plunger is configured to move to an opened position to open a first flow path and, consequently, move the plug to an opened position to open a second flow path when the ratio adjustment lever is in the first position to concurrently dispense a first liquid and a second liquid to be mixed outside of said supply tank assembly and form a solution with a first predefined ratio of the first and second liquids and move to the opened position to open the first flow path and move the plug to the opened position to open the second and third flow paths when the ratio adjustment lever is in the second position to concurrently dispense the first liquid and the second liquid to be mixed outside of said supply tank assembly and form a solution with a second predefined ratio of the first and second liquids.

According to another aspect present disclosure, a switch assembly operable between a dual-dispensing position to open a second flow path upstream of a plunger and a single-dispensing position to seal the second flow path upstream of the plunger. The plunger is biased toward a sealed position to seal the first flow path and the second flow path. The plunger is configured to move to an opened position to open the first flow path and the second flow path to concurrently dispense a first liquid and a second liquid to be mixed outside of a supply tank when the switch assembly is in the dual-dispensing position, the second liquid configured to be retained in the supply tank when the switch assembly is in the single-dispensing position.

According to another aspect present disclosure, a third flow path for a second liquid is defined from a second reservoir, through an interior channel of a plunger, and through an outlet opening defined at least partially by a distal end of the plunger. A ratio adjustment lever is operable between a first position closing the third flow path and a second position opening the third flow path. Movement of the plunger to an opened position is configured to move a plug to an opened position to open a second flow path when the ratio adjustment lever is in the first position to dispense first and second liquids at a first ratio and open the second and third flow paths when the ratio adjustment lever is in a second position to dispense the first and second liquids at a second ratio resulting in different concentrations of a combined cleaning solution.

According to another aspect present disclosure, a supply tank includes an actuating projection configured to engage the plug to open at least the second flow path in response to the movement of the plunger to the opened position

According to another aspect present disclosure, a supply tank includes first and second fluid outlets defined in a connecting enclosure toward a bottom of the supply tank for fluidly coupling a second reservoir with a dispensing outlet. A ratio adjustment lever is configured to move between a top wall and a bottom wall of the supply tank when moving between first and second positions. The ratio adjustment lever is configured to close a second fluid outlet when in the first position and open the second fluid outlet when in the second position.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting

## Claims

1. A cleaning apparatus (10, 10A, 10B), comprising:
a housing (12, 1112) having a receiver (36, 1136);
a suction source (14, 1114);
a recovery tank assembly (16, 1116) in fluid communication with the suction source (14, 1114);
a supply tank assembly (18, 1118, 1618); and
a pump (20, 1120) operably coupled with the supply tank assembly (18, 1118, 1618), the supply tank assembly (18, 1118, 1618) including:
first and second reservoirs (22, 24, 1122, 1124, 1622, 1624) for housing first and second liquids, respectively;
a dispensing outlet (28, 1128, 1628), wherein a first flow path (30, 1130, 1630) for the first liquid is defined from the first reservoir (22, 1122, 1622) to the dispensing outlet (28, 1128, 1628), and wherein a second flow path (32, 1132A, 1632A) for the second liquid is defined from the second reservoir (24, 1124, 1624) to the dispensing outlet (28, 1128, 1628);
a plunger (34, 334, 1134, 1634, 1834) disposed proximate to the dispensing outlet (28, 1128, 1628); and
a plug (264, 1404, 1704) disposed in the second flow path (32, 1132A, 1632A) upstream of the plunger (34, 334, 1134, 1634, 1834), wherein the plunger (34, 334, 1134, 1634, 1834) is biased toward a sealed position to seal the first flow path (30, 1130, 1630) and the plug (264, 1404, 1704) is biased toward a closed position to seal the second flow path (32, 1132A, 1632A), and wherein the supply tank assembly (18, 1118, 1618) is configured to engage the receiver (36, 1136) which, consequently, moves the plunger (34, 334, 1134, 1634, 1834) to an opened position to open the first flow path (30, 1130, 1630) for the first liquid to flow around the plunger (34, 334, 1134, 1634, 1834) and through the dispensing outlet (28, 1128, 1628), and further wherein movement of the plunger (34, 334, 1134, 1634, 1834) to the opened position opens the second flow path (32, 1132A, 1632A) for the second liquid to flow through an interior channel (296, 1494, 1794, 1894) of the plunger (34, 334, 1134, 1634, 1834) and through the dispensing outlet (28, 1128, 1628), the supply tank assembly (18, 1118, 1618) being configured to concurrently dispense the first liquid and the second liquid to be mixed outside of the supply tank assembly (18, 1118, 1618) when the plunger (34, 334, 1134, 1634, 1834) and the plug (264, 1404, 1704) are in the opened positions.

2. The cleaning apparatus (10, 10A, 10B) of claim 1, wherein a distal end (304, 404, 1508 1708, 1810) of the plunger (34, 334, 1134, 1634, 1834) at least partially defines at least one outlet opening (302, 402, 1506, 1804, 1900) in fluid communication with the interior channel (296, 1494, 1794, 1894), and wherein the second liquid is configured to flow through the at least one outlet opening (302, 402, 1506, 1804, 1900) to exit the plunger (34, 334, 1134, 1634, 1834).

3. The cleaning apparatus (10, 10A, 10B) of claim 2, wherein the plunger (34, 1134, 1634, 1834) includes a stopper portion (290, 1490, 1790, 1890) and a guide portion (292, 1492, 1792, 1892) extending from the stopper portion (290, 1490, 1790, 1890), and wherein the at least one outlet opening (302, 1506, 1804, 1900) is at least partially defined by a side (308) of the guide portion (292, 1492, 1792, 1892).

4. The cleaning apparatus (10, 10A, 10B) of any one of claims 1-3, wherein the plunger (34, 334) at least partially defines at least one fluid outlet (314A-314C, 414A-414C), through which the first liquid is configured to flow toward the dispensing outlet (28), and wherein the plunger (34, 334) includes an elongated guide portion (292) that has guide projections (310A, 310B, 410A, 410B) extending therefrom, and wherein the at least one fluid outlet (314A-314C, 414A-414C) includes multiple fluid outlets (314A-314C, 414A-414C) formed by the guide projections (310A, 310B, 410A, 410B).

5. The cleaning apparatus (10, 10A, 10B) of any one of claims 1-4, wherein the supply tank assembly (18) includes:
a switch assembly (320, 720, 1020) operable between a dual-dispensing position to open the second flow path (32) upstream of the plug (264) and a single-dispensing position to seal the second flow path (32) upstream of the plug (264), wherein the second liquid is retained in the supply tank assembly (18) when the switch assembly (320, 720, 1020) is in the single-dispensing position.

6. The cleaning apparatus (10, 10A, 10B) of claim 5, wherein the pump (20) is configured to draw the first liquid from the supply tank assembly (18) when the switch assembly (320, 720, 1020) is in the single-dispensing position, and wherein the pump (20) is configured to draw the first and second liquids from the supply tank assembly (18) to be mixed at the receiver (36) when the switch assembly (320, 720, 1020) is in the dual-dispensing position.

7. The cleaning apparatus (10, 10A, 10B) of any one of claims 1-4, wherein a third flow path (1132B, 1632B) for the second liquid is defined from the second reservoir (1124, 1624) to the dispensing outlet (1128, 1628), and wherein the first flow path (1130, 1630) for the first liquid is defined from the first reservoir (1122, 1622), around the plunger (1134, 1634, 1834), and to the dispensing outlet (28, 1128, 1628), and further wherein second and third flow paths (1132A, 1132B, 1632A, 1632B) for the second liquid are defined from the second reservoir (1124, 1624), around the plug (1404, 1704), through the plunger (1134, 1634, 1834), and to the dispensing outlet (1128, 1628).

8. The cleaning apparatus (10, 10A, 10B) of claim 7, further comprising:
a switch assembly (1350, 1730) including a ratio adjustment lever (1300, 1710) operable between a first position closing the third flow path (1132B, 1632B) upstream of the plug (1404, 1704) and a second position opening the third flow path (1132B, 1632B) upstream of the plug (1404, 1704), wherein the plunger (1134, 1634, 1834) is configured to:
move to the opened position to open the first flow path (1130, 1630) and, consequently, move the plug (1404, 1704) to an opened position to open the second flow path (1132A, 1632A) when the ratio adjustment lever (1300, 1710) is in the first position to concurrently dispense the first liquid and the second liquid to be mixed outside of the supply tank assembly (1118, 1618) and form a solution with a first predefined ratio of the first and second liquids; and
move to the opened position to open the first flow path (1130, 1630) and move the plug (1404, 1704) to the opened position to open the second and third flow paths (1132A, 1132B, 1632A, 1632B) when the ratio adjustment lever (1300, 1710) is in the second position to concurrently dispense the first liquid and the second liquid to be mixed outside of the supply tank assembly (1118, 1618) and form a solution with a second predefined ratio of the first and second liquids.

9. The cleaning apparatus (10, 10A, 10B) of claim 8, further comprising:
a switch (1362) operably coupled with an upper portion (1256) of a supply tank (1156, 1656) of the supply tank assembly (1118, 1618) and the ratio adjustment lever (1300, 1710) for moving the ratio adjustment lever (1300, 1710) between the first and second positions, wherein the supply tank (1156, 1656) includes first and second fluid outlets (1294, 1296, 1694, 1696) defined in a connecting enclosure (1292) toward a bottom of the supply tank (1156, 1656) for fluidly coupling the second reservoir (1124, 1624) with the dispensing outlet (1128, 1628), and further wherein the ratio adjustment lever (1300, 1710) is configured to move between a top wall (1274, 1674) and a bottom wall (1276, 1676) of the supply tank (1156, 1656) when moving between the first and second positions, the ratio adjustment lever (1300, 1710) configured to close the second fluid outlet (1296, 1696) when in the first position and open the second fluid outlet (1296, 1696) when in the second position.

10. The cleaning apparatus (10, 10A, 10B) of any one of claims 1-9, wherein the supply tank assembly (18, 1118, 1618) includes:
a cap assembly (170, 1270, 1670) removably coupled with the supply tank assembly (18, 1118, 1618), wherein the cap assembly (170, 1270, 1670) includes the plunger (34, 334, 1134, 1634, 1834) and the plug (264, 1404, 1704), wherein the cap assembly (170, 1270, 1670) forms at least a portion of the first flow path (30, 1130, 1630) and the second flow path (32, 1132A, 1632A).

11. The cleaning apparatus (10, 10A, 10B) of any one of claims 1-10, wherein a supply tank (1156) of the supply tank assembly (1118) includes an actuating projection (1400) configured to engage the plug (1404) to open at least the second flow path (1132A) in response to movement of the plunger (1134) to the opened position.

12. The cleaning apparatus (10, 10A, 10B) of any one of claims 1-10, wherein the plunger (34, 334, 1634, 1834) includes an actuating projection (326, 426, 1816, 1898) configured to engage the plug (264, 1704) to adjust the plug (264, 1704) to the opened position in response to movement of the plunger (34, 334, 1634, 1834) to the opened position.

13. The cleaning apparatus (10, 10A, 10B) of any one of claims 1-12, wherein the movement of the plunger (34, 334, 1134, 1634, 1834) to the opened position is configured to move the plug (264, 1404, 1704) to the opened position to open the second flow path (32, 1132A, 1632A).

14. The cleaning apparatus (10, 10A, 10B) of any one of claims 1-13, wherein the supply tank assembly (18, 1118, 1618) further includes:
a first through-hole (436, 1536) in fluid communication with the first reservoir (22, 1122, 1622);
a second through-hole (438, 1538) in fluid communication with the second reservoir (24, 1124, 1624); and
first and second umbrella valves (432, 434, 1532, 1534) configured to open and close the first and second through-holes (436, 438, 1536, 1538), respectively, to dynamically balance pressure in the first and second reservoirs (22, 24, 1122, 1124, 1622, 1624) with an area external to the supply tank assembly (18, 1118, 1618) when the pump (20, 1120) is active.

15. The cleaning apparatus (10, 10A, 10B) of any one of claims 1-14, wherein the first flow path (30, 1130, 1630) and the second flow path (32, 1132A, 1632A) are separate within the supply tank assembly (18, 1118, 1618).
